# EUROPEAN PATENT SPECIFICATION

(11) **EP 2 797 762 B1**
(45) Date of publication and mention of the grant of the patent: **07.12.2016**
(21) Application number: 12861174.6
(22) Date of filing: 28.12.2012
(51) Int. Cl.: B60C 25/14, B60C 25/05

(54) **SYSTEM AND METHOD FOR PROCESSING A TIRE-WHEEL ASSEMBLY**
SYSTEM UND VERFAHREN ZUR VERARBEITUNG EINER REIFEN-RAD-ANORDNUNG
SYSTÈME ET PROCÉDÉ DE TRAITEMENT D'UN ENSEMBLE PNEU/ROUE

(30) Priority: 29.12.2011 US 201113340270
(43) Date of publication of application: 05.11.2014
(60) Divisional application: 16193466.6
(73) Proprietor: Android Industries LLC, Auburn Hills, MI 48326-2943 (US)
(72) Inventor: LAWSON, Lawrence, J., Troy, MI 48085 (US); CLARK, Barry, Allan, Ortonville, MI 48462 (US); REECE, Robert, Clarkston, MI 48348 (US); HICKS, Joshua, James, Grand Blanc, MI 48439 (US)
(74) Representative: Tranter, Andrew David
(86) International application number: PCT/US2012/072152
(87) International publication number: WO 2013/102129

(56) References cited:
- WO-A2-2010/028233
- DE-A1-102005 001 212
- KR-A- 20040 098 256
- KR-B1- 100 765 657
- US-A1- 2010 163 189
- US-A1- 2010 163 189
- US-B2- 7 044 188

## Description

### CROSS-REFERENCE TO RELATED APPLICATIONS

This patent application claims priority to U.S. Non-Provisional Application 13/340,270 filed on December 29, 2011.

### FIELD OF THE INVENTION

The disclosure relates to tire-wheel assemblies and to a system and method for assembling a tire-wheel assembly.

### DESCRIPTION OF THE RELATED ART

It is known in the art to assemble a tire-wheel assembly in several steps. Usually, conventional methodologies that conduct such steps require a significant capital investment and human oversight.

US 2010/163189 A1 discloses an apparatus for mounting a tire on a wheel, wherein a robotic arm is able to move the wheel onto the tire, between two wheel engaging and tire manipulating portions. DE 10 2005 001212 A1 discloses an apparatus for forcing a tire into an oval configuration in order to assist in the insertion of a wheel into the tire opening.

The present invention overcomes drawbacks associated with the prior art by setting forth a simple system and method for assembling a tire-wheel assembly.

### BRIEF DESCRIPTION OF THE DRAWINGS

The disclosure will now be described, by way of example, with reference to the accompanying drawings, in which:
Figure 1A is a perspective view of a sub-station for processing a tire and a wheel in accordance with an exemplary embodiment of the invention;
Figure 1B is a top view of the sub-station of Figure 1A;
Figure 1C is a perspective view of a portion of the sub-station of Figure 1A;
Figures 2A-2J illustrate side, partial cross-sectional views of the sub-station, tire and wheel according to line 2A-2A of Figure 1A in accordance with an exemplary embodiment of the invention;
Figure 3A-3J illustrate a partial top view of the sub-station, tire and wheel according to lines 3A-3J of Figures 2A-2J in accordance with an exemplary embodiment of the invention;
Figure 4A is a perspective view of a sub-station for processing a tire and a wheel in accordance with an exemplary embodiment of the invention;
Figure 4B is a top view of the sub-station of Figure 4A;
Figure 4C is a perspective view of a portion of the sub-station of Figure 4A;
Figures 5A-5J illustrate side, partial cross-sectional views of the sub-station, tire and wheel according to line 5A-5A of Figure 4A in accordance with an exemplary embodiment of the invention;
Figures 5D' and 5E' illustrate side, partial cross-sectional views of the sub-station, tire and wheel according to line 5A-5A of Figure 4A in accordance with an exemplary embodiment of the invention;
Figure 6A-6J illustrate a partial top view of the sub-station, tire and wheel according to lines 6A-6J of Figures 5A-5J in accordance with an exemplary embodiment of the invention;
Figure 7A is a perspective view of a sub-station for processing a tire and a wheel in accordance with an exemplary embodiment of the invention;
Figure 7B is a top view of the sub-station of Figure 7A;
Figure 7C is a perspective view of a portion of the sub-station of Figure 7A;
Figures 8A-8G illustrate side, partial cross-sectional views of the sub-station, tire and wheel according to line 8A-8A of Figure 7A in accordance with an exemplary embodiment of the invention;
Figure 9A-9G illustrate a partial top view of the sub-station, tire and wheel according to lines 9A-9G of Figures 8A-8G in accordance with an exemplary embodiment of the invention;
Figure 10A is a perspective view of a sub-station for processing a tire and a wheel in accordance with an exemplary embodiment of the invention;
Figure 10B is a top view of the sub-station of Figure 10A;
Figure 10C is a perspective view of a portion of the sub-station of Figure 10A;
Figures 11A-11J illustrate side, partial cross-sectional views of the sub-station, tire and wheel according to line 11A-11A of Figure 10A in accordance with an exemplary embodiment of the invention;
Figure 12A-12J illustrate a partial top view of the sub-station, tire and wheel according to lines 12A-12J of Figures 11A-11J in accordance with an exemplary embodiment of the invention;
Figure 13A is a perspective view of a sub-station for processing a tire and a wheel in accordance with an exemplary embodiment of the invention;
Figure 13B is a top view of the sub-station of Figure 13A;
Figure 13C is a perspective view of a portion of the sub-station of Figure 13A;
Figures 14A-14J illustrate side, partial cross-sectional views of the sub-station, tire and wheel according to line 14A-14J of Figure 13A in accordance with an exemplary embodiment of the invention;
Figure 15A-15J illustrate a partial top view of the sub-station, tire and wheel according to lines 15A-15J of Figures 14A-14J in accordance with an exemplary embodiment of the invention;
Figure 16A is a top view of an exemplary tire;
Figure 16B is a cross-sectional view of the tire according to line 16B-16B of Figure 16A;
Figure 16C is a side view of the tire of Figure 16A;
Figure 16D is a bottom view of the tire of Figure 16A;
Figure 17A is a top view of an exemplary wheel; and
Figure 17B is a side view of the wheel of Figure 17A.

### DETAILED DESCRIPTION OF THE INVENTION

The Figures illustrate exemplary embodiments of apparatuses and methods for assembling a tire-wheel assembly. Based on the foregoing, it is to be generally understood that the nomenclature used herein is simply for convenience and the terms used to describe the invention should be given the broadest meaning by one of ordinary skill in the art.

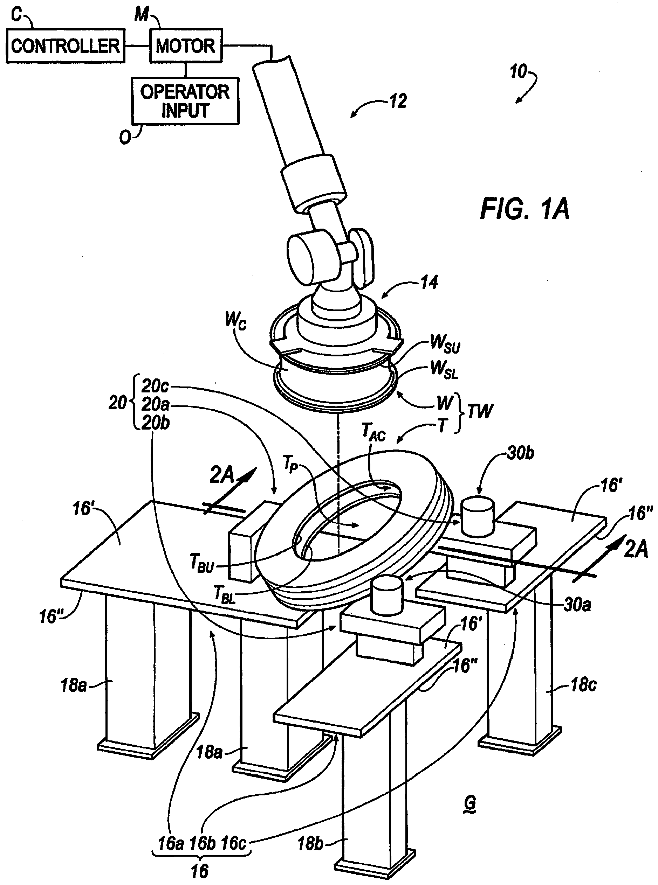

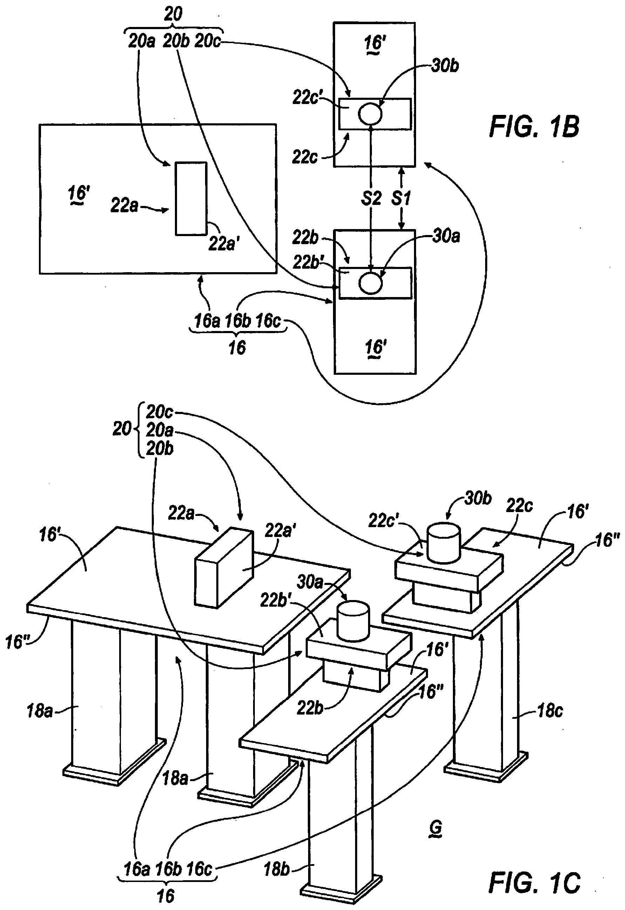

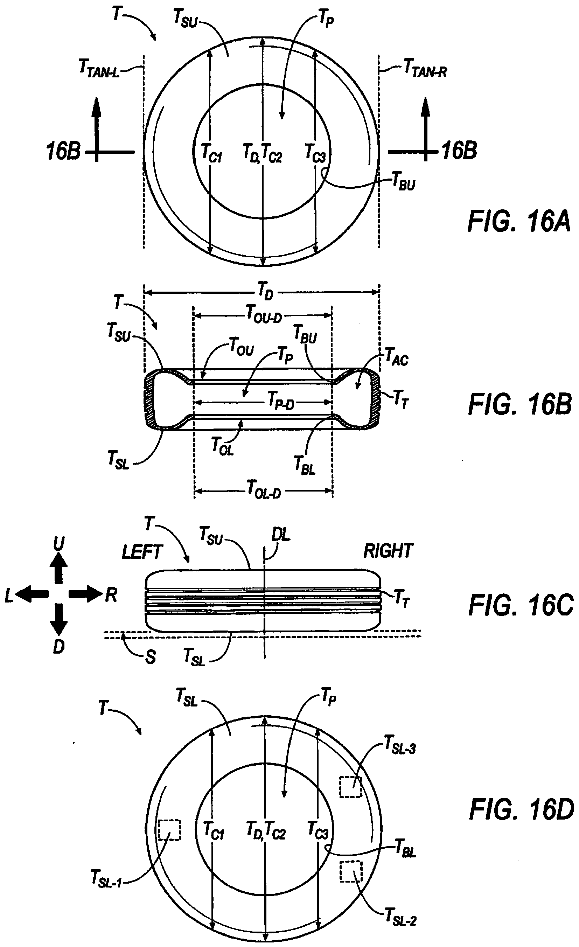

Prior to describing embodiments of the invention, reference is made to Figures 16A-16D, which illustrate an exemplary tire, T. Further, starting at Figure 1A in the present disclosure, reference may be made to the "upper," "lower," "left," "right" and "side" of the tire, T; although such nomenclature may be utilized to describe a particular portion or aspect of the tire, T, such nomenclature may be adopted due to the orientation of the tire, T, with respect to structure that supports the tire, T. Accordingly, the above nomenclature should not be utilized to limit the scope of the claimed invention and is utilized herein for exemplary purposes in describing an embodiment of the invention.

In an embodiment, the tire, T, includes an upper sidewall surface, T_{SU} (see, e.g., Figure 16A), a lower sidewall surface, T_{SL} (see, e.g., Figure 16D), and a tread surface, T_{T} (see, e.g., Figures 16B-16C), that joins the upper sidewall surface, T_{SU}, to the lower sidewall surface, T_{SL}. Referring to Figure 16B, the upper sidewall surface, T_{SU}, may rise away from the tread surface, T_{T}, to a peak and subsequently descend at a slope to terminate at and form a circumferential upper bead, T_{BU}; similarly, the lower sidewall surface, T_{SL}, may rise away from the tread surface, T_{T}, to a peak and subsequently descend at a slope to terminate at and form a circumferential lower bead, T_{BL}.

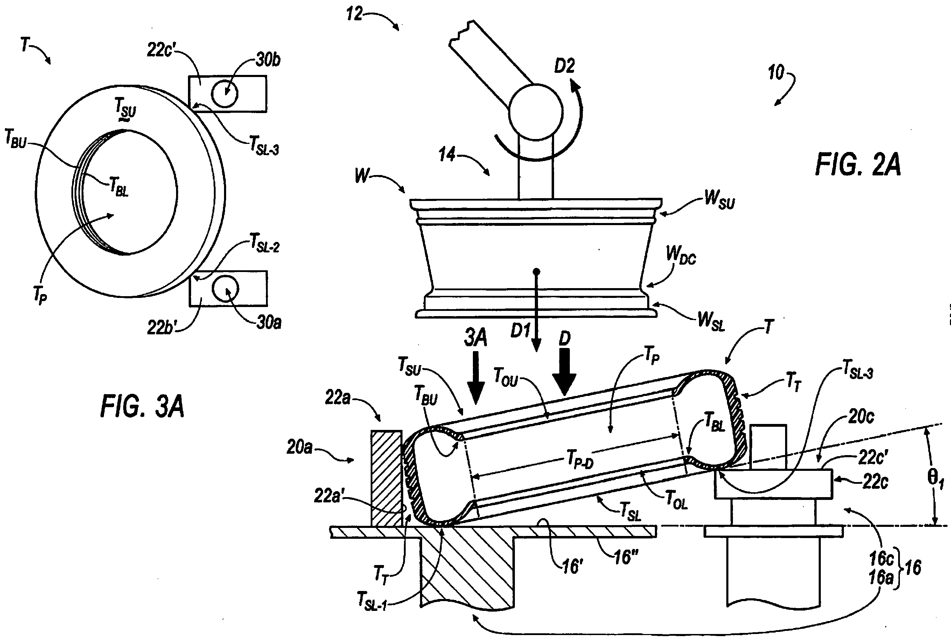

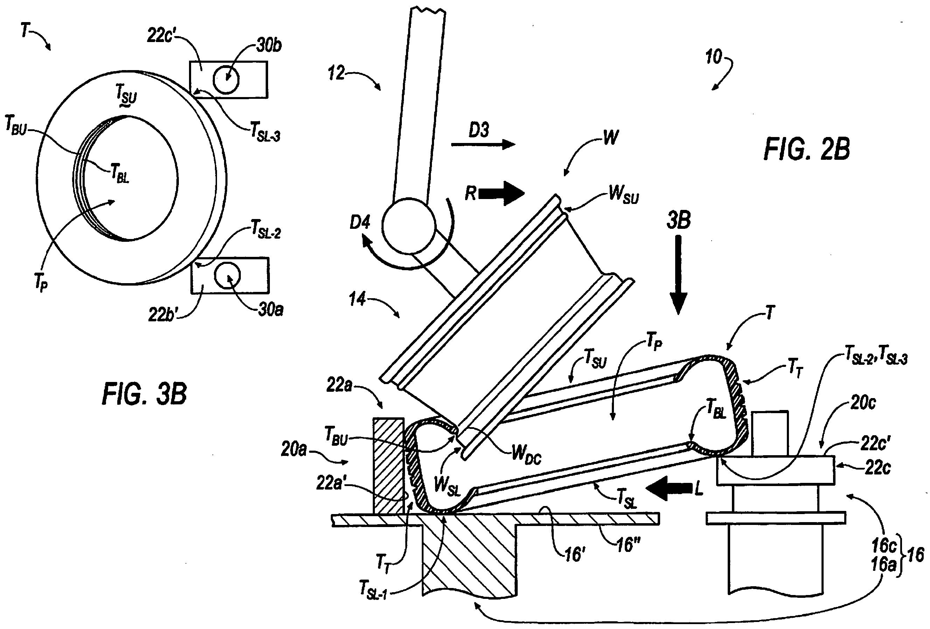

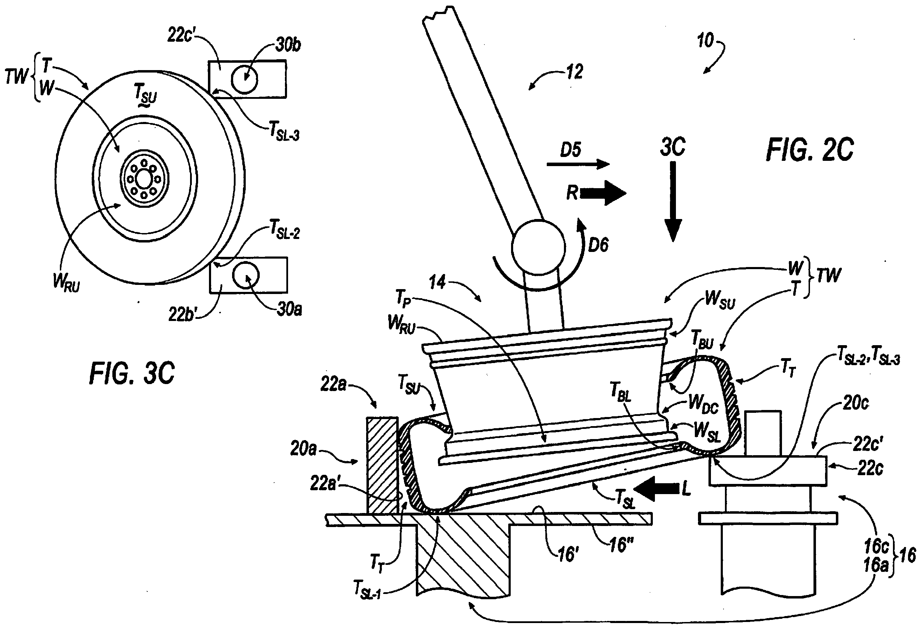

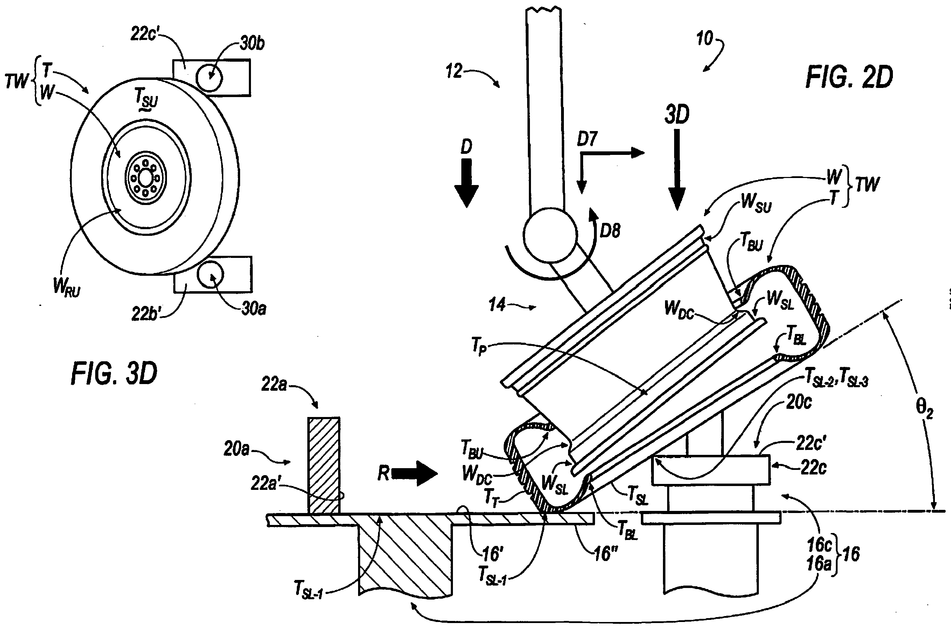

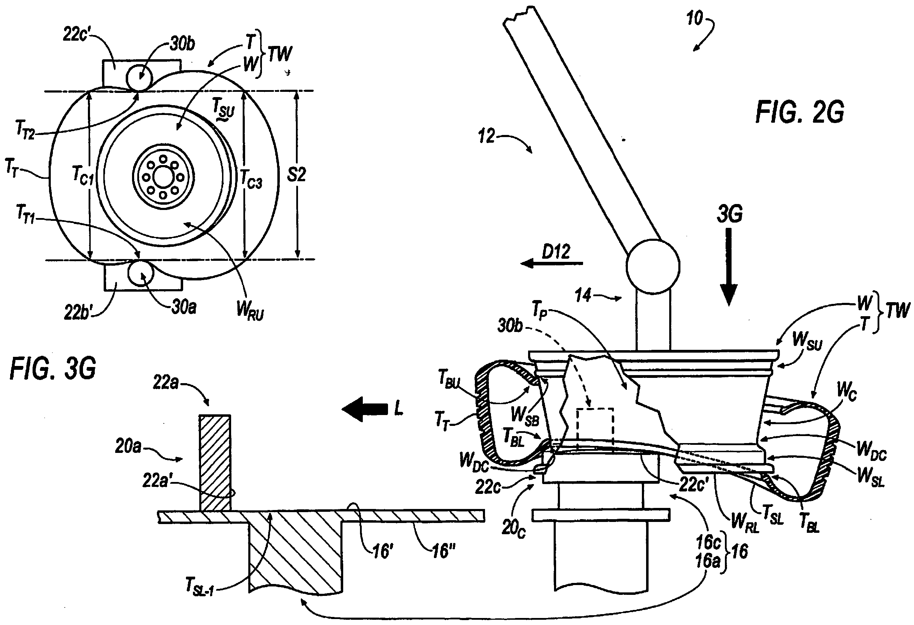

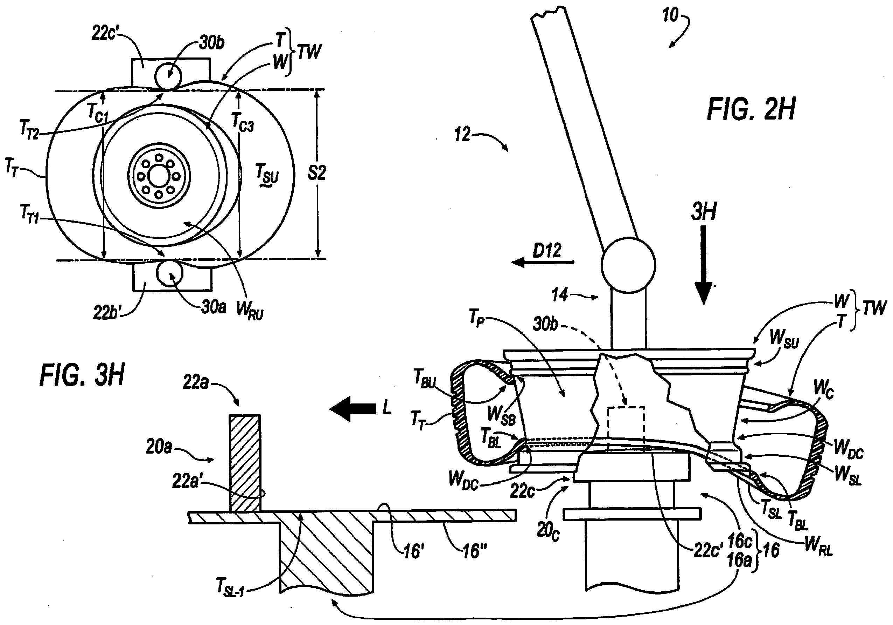

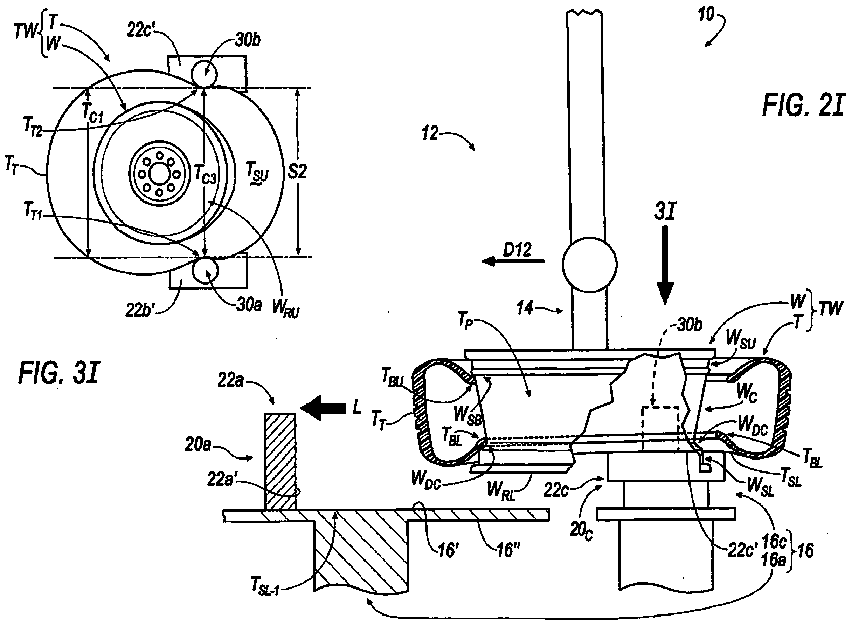

As seen in Figure 16B, when the tire, T, is in a relaxed, unbiased state (see also, e.g., Figures 3A-3F, 6A-6G, 9A-9C), the upper bead, T_{BU}, forms a circular, upper tire opening, T_{OU}; similarly, when the tire, T, is in a relaxed, unbiased state, the lower bead, T_{BL}, forms a circular, lower tire opening, T_{OL}. It will be appreciated that when an external force is applied to the tire, T, the tire, T, may be physically manipulated, and, as a result, one or more of the upper tire opening, T_{OU}, and the lower tire opening, T_{OL,} may be temporality upset such that one or more of the upper tire opening, T_{OU}, and the lower tire opening, T_{OL}, is/are not entirely circular, but, may, for example, be manipulated to include an oval shape (see, e.g., Figures 3G-3I, 6H-6I, 9D-9F).

Referring to Figure 16B, when in the relaxed, unbiased state, each of the upper tire opening, T_{OU}, and the lower tire opening, T_{OL}, form, respectively, an upper tire opening diameter, T_{OU-D}, and a lower tire opening diameter, T_{OL-D}. Further, as seen in Figures 16A-16B, when in the relaxed, unbiased state, the upper sidewall surface, T_{SU}, and the lower sidewall surface, T_{SL}, define the tire, T, to include a tire diameter, T_{D}.

Referring to Figures 16A-16B and 16D, the tire, T, also includes a passage, T_{P}. Access to the passage, T_{P}, is permitted by either of the upper tire opening, T_{OU}, and the lower tire opening, T_{OL}. Referring to Figure 16B, when the tire, T, is in a relaxed, unbiased state, the upper tire opening, T_{OU}, and the lower tire opening, T_{OL}, define the passage, T_{P}, to include a diameter, T_{P-D}. Referring also to Figure 16B, the tire, T, includes a circumferential air cavity, T_{AC}, that is in communication with the passage, T_{P}. After joining the tire, T, to a wheel, W, pressurized air is deposited into the circumferential air cavity, T_{AC}, for inflating the tire, T.

When the tire, T, is arranged adjacent structure as described in the following disclosure starting at Figure 1A, a portion of the lower sidewall surface, T_{SL}, of the tire, T, may be disposed adjacent the structure. In some circumstances, the structure may provide three points of support, and, as such, three portions of the lower sidewall surface, T_{SL}, of the tire, T, may be disposed adjacent the structure. Accordingly, reference is made to Figure 16D in order to identify three exemplary portions of the lower sidewall surface, T_{SL}, of the tire, T, that may be disposed adjacent the structure at reference signs, T_{SL-1}, T_{SL-2} and T_{SL-3}, which may be respectively be referred to as a "first portion of the lower sidewall surface, T_{SL}, of the tire, T," a "second portion of the lower sidewall surface, T_{SL}, of the tire, T" and a "third portion of the lower sidewall surface, T_{SL}, of the tire, T." Because the tire, T, may be moved relative to the structure, the three points of support may not necessarily be limited to the illustrated identification at Figure 16D, and, as such the three points of support may be located at other regions of the lower sidewall surface, T_{SL}, of the tire, T.

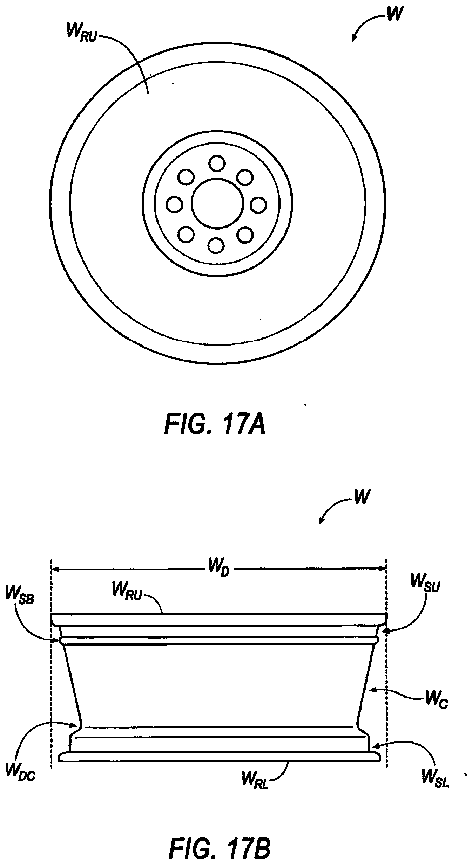

Further, when the tire, T, is arranged adjacent structure or a wheel, W (see, e.g., Figures 17A-17B), as described in the following disclosure, the written description may reference a "left" portion or a "right" portion of the tire, T. Referring to Figure 16C, the tire, T, is shown relative to a support member, S; the support member, S, is provided (and shown in phantom) in order to establish a frame of reference for the "left" portion and the "right" portion of the tire, T. In Figure 16C, the tire, T, is arranged in a "non-rolling" orientation such that the tread surface, T_{T}, is not disposed adjacent the phantom support member, S, but, rather the lower sidewall surface, T_{SL}, is disposed adjacent the phantom support member, S. A center diving line, DL, equally divides the "non-rolling" orientation of the tire, T, in half in order to generally indicate a "left" portion of the tire, T, and a "right" portion of the tire, T.

As discussed above, reference is made to several diameters, T_{P-D}, T_{OU-D}, T_{OL-D} of the tire, T. According to geometric theory, a diameter passes through the center of a circle, or, in the present disclosure, the axial center of the tire, T, which may alternatively be referred to as an axis of rotation of the tire, T. Geometric theory also includes the concept of a chord, which is a line segment that whose endpoints both lie on the circumference of a circle; according to geometric theory, a diameter is the longest chord of a circle.

In the following description, the tire, T, may be moved relative to structure; accordingly, in some instances, a chord of the tire, T, may be referenced in order to describe an embodiment of the invention. Referring to Figure 16A, several chords of the tire, T, are shown generally at T_{C1}, T_{C2} (i.e., the tire diameter, T_{D}) and T_{C3}.

The chord, T_{C1}, may be referred to as a "left" tire chord. The chord, T_{C3}, may be referred to as a "right" tire chord. The chord, T_{C2}, may be equivalent to the tire diameter, T_{D}, and be referred to as a "central" chord. Both of the left and right tire chords, T_{C1}, T_{C3}, include a geometry that is less than central chord, T_{C2}, / tire diameter, T_{D}.

In order to reference the location of the left chord, T_{C1}, and the right chord, T_{C3}, reference is made to a left tire tangent line, T_{TAN-L}, and a right tire tangent line, T_{TAN}-_{R}. The left chord, T_{C1}, is spaced apart approximately one-fourth (1/4) of the tire diameter, T_{D}, from the left tire tangent line, T_{TAN-L}. The right chord, T_{C3}, is spaced apart approximately one-fourth (1/4) of the tire diameter, T_{D}, from the right tire tangent line, T_{TAN-R}. Each of the left and right tire chords, T_{C1}, T_{C3}, may be spaced apart about one-fourth (1/4) of the tire diameter, T_{D}, from the central chord, T_{C2}. The above spacings referenced from the tire diameter, T_{D}, are exemplary and should not be meant to limit the scope of the invention to approximately a one-fourth (1/4) ratio; accordingly, other ratios may be defined, as desired.

Further, as will be described in the following disclosure, the tire, T, may be moved relative to structure. Referring to Figure 16C, the movement may be referenced by an arrow, U, to indicate upwardly movement or an arrow, D, to indicate downwardly movement. Further, the movement may be referenced by an arrow, L, to indicate left or rearwardly movement or an arrow, R, to indicate right or forwardly movement.

Prior to describing embodiments of the invention, reference is made to Figures 17A-17B, which illustrate an exemplary wheel, W. Further, starting at Figure 1A in the present disclosure, reference may be made to the "upper," "lower," "left," "right" and "side" of the wheel, W; although such nomenclature may be utilized to describe a particular portion or aspect of the wheel, W, such nomenclature may be adopted due to the orientation of the wheel, W, with respect to structure that supports the wheel, W. Accordingly, the above nomenclature should not be utilized to limit the scope of the claimed invention and is utilized herein for exemplary purposes in describing an embodiment of the invention.

In an embodiment, the wheel, W, includes an upper rim surface, W_{RU}, a lower rim surface, W_{RL}, and an outer circumferential surface, W_{C}, that joins the upper rim surface, W_{RU}, to the lower rim surface, W_{RL}. Referring to Figure 17B, upper rim surface, W_{RU}, forms a wheel diameter, W_{D}. The wheel diameter, W_{D}, may be non-constant about the circumference, W_{C}, from the upper rim surface, W_{RU}, to the lower rim surface, W_{RL}. The wheel diameter, W_{D}, formed by the upper rim surface, W_{RU}, may be largest diameter of the non-constant diameter about the circumference, W_{C}, from the upper rim surface, W_{RU}, to the lower rim surface, W_{RL}. The wheel diameter, W_{D}, is approximately the same as, but slightly greater than the diameter, T_{P-D}, of the passage, T_{P}, of the tire, T; accordingly, once the wheel, W, is disposed within the passage, T_{P}, the tire, T, may flex and be frictionally-secured to the wheel, W, as a result of the wheel diameter, W_{D}, being approximately the same as, but slightly greater than the diameter, T_{P-D}, of the passage, T_{P}, of the tire, T.

The outer circumferential surface, W_{C}, of the wheel, W, further includes an upper bead seat, W_{SU}, and a lower bead seat, W_{SL}. The upper bead seat, W_{SU}, forms a circumferential cusp, corner or recess that is located proximate the upper rim surface, W_{RU}. The lower bead seat, W_{SL}, forms a circumferential cusp, corner or recess that is located proximate the lower rim surface, W_{RL}. Upon inflating the tire, T, the pressurized air causes the upper bead, T_{BU}, to be disposed adjacent and "seat" in the upper bead seat, W_{SU}; similarly, upon inflating the tire, T, the pressurized air causes the lower bead, T_{BL}, to be disposed adjacent and "seat" in the lower bead seat, W_{SL}.

The non-constant diameter of the outer circumference, W_{C}, of the wheel, W, further forms a wheel "drop center," W_{DC}. A wheel drop center, W_{DC}, may include the smallest diameter of the non-constant diameter of the outer circumference, W_{C}, of the wheel, W. Functionally, the wheel drop center, W_{DC}, may assist in the mounting of the tire, T, to the wheel, W.

The non-constant diameter of the outer circumference, W_{C}, of the wheel, W, further forms an upper "safety bead," W_{SB}. In an embodiment, the upper safety bead may be located proximate the upper bead seat, W_{SU}. In the event that pressurized air in the circumferential air cavity, T_{AC}, of the tire, T, escapes to atmosphere, the upper bead, T_{BU}, may "unseat" from the upper bead seat, W_{SU}; because of the proximity of the safety bead, W_{SB}, the safety bead, W_{SB}, may assist in the mitigation of the "unseating" of the upper bead, T_{BU}, from the upper bead seat, W_{SU}, by assisting in the retaining of the upper bead, T_{BU}, in a substantially seated orientation relative to the upper bead seat, W_{SU}. In some embodiments, the wheel, W, may include a lower safety bead (not shown); however, upper and/or lower safety beads may be included with the wheel, W, as desired, and are not required in order to practice the invention described in the following disclosure.

Referring to Figure 1A, a processing sub-station 10 for processing a tire-wheel assembly, TW, is shown according to an embodiment. The "processing" conducted by the processing sub-station 10 may include the act of "joining" or "mounting" a tire, T, to a wheel, W, for forming the tire-wheel assembly, TW. The act of "joining" or "mounting" may mean to physically couple, connect or marry the tire, T, and wheel, W, such that the wheel, W, may be referred to as a male portion that is inserted into a passage, T_{P}, of a tire, T, being a female portion.

As described and shown in the following Figures, although the desired result of the processing sub-station 10 is the joining or mounting of the tire, T, and wheel, W, to form a tire-wheel assembly, TW, it should be noted that the processing sub-station 10 does not inflate the circumferential air cavity, T_{AC}, of the tire, T, of the tire-wheel assembly, TW, nor does the processing sub-station 10 contribute to an act of "seating" the upper bead, T_{BU}, or the lower bead, T_{BL}, of the tire, T, adjacent the upper bead seat, W_{SU}, and the lower bead seat, W_{SL}, of the wheel, W (because the act of "seating" typically arises from an inflating step where the tire-wheel assembly, TW, is inflated). Accordingly, upon joining or mounting the tire, T, to the wheel, W, the upper bead, T_{BU}, or the lower bead, T_{BL}, of the tire, T, may be arranged about and/or disposed adjacent the outer circumferential surface, W_{C}, of the wheel, W.

In an implementation, the processing sub-station 10 may be included as part of a "single-cell" workstation. A single-cell workstation may include other sub-stations (not shown) that contribute to the processing of a tire-wheel assembly, TW; other sub-stations may include, for example: a soaping sub-station, a stemming sub-station, an inflating sub-station, a match-marking sub-station, a balancing sub-station and the like. The term "single-cell" indicates that the sub-stations contribute to the production of a tire-wheel assembly, TW, without requiring a plurality of successive, discrete workstations that may otherwise be arranged in a conventional assembly line such that a partially-assembled tire-wheel assembly, TW, is "handed-off" along the assembly line (i.e., "handed-off" meaning that an assembly line requires a partially-assembled tire-wheel assembly, TW, to be retained by a first workstation of an assembly line, worked on, and released to a subsequent workstation in the assembly line for further processing). Rather, a single cell workstation provides one workstation having a plurality of sub-stations each performing a specific task in the process of assembling a tire-wheel assembly, TW. This assembling process takes place wherein the tire and/or wheel "handing-off" is either minimized or completely eliminated. As such, a single-cell workstation significantly reduces the cost and investment associated with owning/renting the real estate footprint associated with a conventional tire-wheel assembly line while also having to provide maintenance for each individual workstation defining the assembly line. Thus, capital investment and human oversight is significantly reduced when a single cell workstation is employed in the manufacture of tire-wheel assemblies, TW.

Referring to Figure 1A, the processing sub-station 10 includes a device 12. The device 12 may be referred to as a robotic arm. The robotic arm 12 may be located in a substantially central position relative to a plurality of sub-stations (including, e.g., the processing sub-station 10) of a single-cell workstation. The robotic arm 12 may be attached to and extend from a base / body portion (not shown) connected to ground, G.

The robotic arm 12 may include an end effecter 14. The end effecter 14 may include a claw, gripper, or other means for removably-securing the wheel, W, to the robotic arm 12. The end effecter 14 permits the robotic arm 12 to have the ability to retain and not release the wheel, W, throughout the entire procedure performed by the processing sub-station 10 (and, if applied in a single-cell workstation, the ability to retain and not release the wheel, W, throughout the entire assembling procedure of the tire-wheel assembly, TW). Accordingly, the end effecter 14 minimizes or eliminates the need of the robotic arm 12 to "hand-off" the tire-wheel assembly, TW, to (a) subsequent sub-station(s) (not shown).

The processing sub-station 10 may perform several functions / duties including that of: (1) a tire repository sub-station and (2) a mounting sub-station. A tire repository sub-station typically includes one or more tires, T, that may be arranged in a "ready" position for subsequent joining to a wheel, W. A mounting sub-station typically includes structure that assists in the joining of a tire, T, to a wheel, W (e.g., the disposing of a wheel, W, within the passage, T_{P}, of the tire, T).

Referring to Figure 1A, the processing sub-station 10 may be initialized by joining a wheel, W, to the robotic arm 12 at the end effecter 14. The processing sub-station 10 may also be initialized by positioning the tire, T, upon a support member 16. The support member 16 may include a first support member 16a, a second support member 16b and a third support member 16c. Each of the first, second and third support members 16a, 16b, 16c include an upper surface 16' and a lower surface 16".

The lower surface 16" of each of the first, second and third support members 16a, 16b, 16c may be respectively connected to at least one first leg member 18a, at least one second leg member 18b and at least one third leg member 18c. Each of the at least one first, second and third leg members 18a, 18b, 18c respectively include a length for elevating or spacing each of the first, second and third support members 16a, 16b, 16c from an underlying ground surface, G. Although the robotic arm 12 is not directly connected to the support member 16 (but, rather may be connected to ground, G), the robotic arm 12 may be said to be interfaceable with (as a result of the movements D1-D12 described in the following disclosure) and/or indirectly connected to the support member 16 by way of a common connection to ground, G, due the leg members 18a-18c connecting the support member 16 to ground, G.

The processing sub-station 10 may further include a plurality of tire-engaging devices 20. The plurality of tire-engaging devices 20 may include a first tire-engaging device 20a connected to the upper surface 16' of the first support member 16a, a second tire-engaging device 20b connected to the upper surface 16' of the second support member 16b and a third tire-engaging device 20c connected to the upper surface 16' of the third support member 16c.

Referring to Figures 1B-1C, the first tire-engaging device 20a may include a body 22a having a side, tire-tread-engaging surface 22a'. Each of the second and third tire-engaging devices 20b, 20c may include a body 22b, 22c having an upper, tire-sidewall-engaging surface 22b', 22c'.

The upper sidewall-engaging surfaces 22b', 22c' of the second and third tire-engaging devices 20b, 20c may be co-planar with one another. The upper sidewall-engaging surfaces 22b', 22c' of the second and third tire-engaging devices 20b, 20c may be arranged in a spaced-apart relationship with respect to ground, G, that is greater than that of the spaced-apart relationship of the upper surface 16' of the first support member 16a; accordingly, the upper sidewall-engaging surfaces 22b', 22c' of the second and third tire-engaging devices 20b, 20c may be arranged in a non-co-planar relationship with respect to the upper surface 16' of the first support member 16a.

A first tire-tread-engaging post 30a may extend from the upper, tire-sidewall-engaging surface 22b' of the second tire-engaging device 20b. A second tire-tread-engaging post 30b may extend from the upper, tire-sidewall-engaging surface 22c' of the third tire-engaging device 20c.

Referring to Figure 1B, the second and third support members 16b, 16c are separated by a gap or first spacing, S1. The first tire-tread-engaging post 30a is separated from the second tire-tread-engaging post 30b by a gap or second spacing, S2. The second spacing, S2, is greater than the first spacing, S1. The first spacing, S1, may be approximately equal to, but slightly greater than the diameter, W_{D}, of the wheel, W; further, the tire diameter, T_{D}, / central chord, T_{C2}, may be greater than the first spacing, S1. The second spacing, S2, may be approximately equal to the left chord, T_{C1}, and the right chord, T_{C3}, of the tire, T; further, the tire diameter, T_{D,} / central chord, T_{C2}, may be greater than the second spacing, S2.

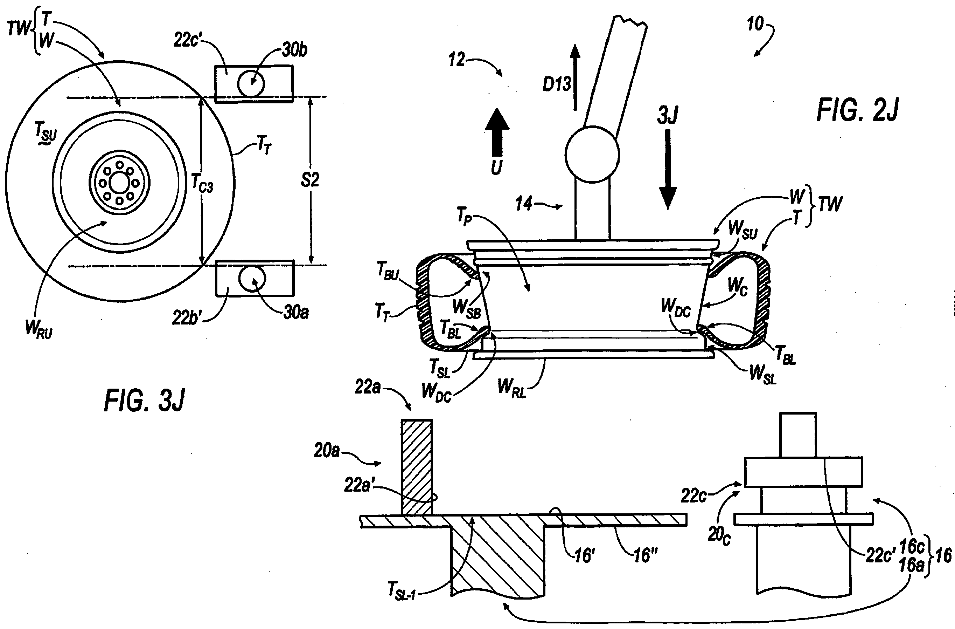

As seen in Figure 2A with reference to Figure 3A, prior to joining the tire, T, to the wheel, W, the tire, T, may be said to be arranged in a first relaxed, unbiased orientation such that the upper tire opening, T_{OU}, and the lower tire opening, T_{OL}, define the passage, T_{P}, to include a diameter, T_{P-D}. When the tire, T, is eventually joined to the wheel, W (see, e.g., Figure 2J), the upper bead, T_{BU}, and the lower bead, T_{BL}, may be arranged proximate but not seated adjacent, respectively, the upper bead seat, W_{SU}, and the lower bead seat, W_{SL}, of the wheel, W; later, upon inflating the tire, T, at, e.g., an inflation sub-station (not shown), the upper bead, T_{BU}, and the lower bead, T_{BL}, may be seated (i.e., disposed adjacent), respectively, the upper bead seat, W_{SU}, and the lower bead seat, W_{SL}, of the wheel, W. Further, when the tire, T, is joined to the wheel, W (see, e.g., Figures 2J), the tire, T, may be said to be arranged in a second substantially relaxed, but somewhat biased orientation such that the diameter, T_{P-D}, of the passage, T_{P}, is substantially circular and substantially similar to its geometry of the first relaxed, unbiased orientation of the tire, T.

Referring to Figure 2A, the robotic arm 12 is arranged in a spaced-apart orientation with respect to the support member 16, which includes the tire, T, arranged in a "ready" position. The "ready" position may include the tread surface, T_{T}, of the tire, T, arranged adjacent the front, tire-tread-engaging surface 22a' of the body 22a of the first tire-engaging device 20a. The "ready" position may further include the tire, T, being arranged in a first angularly-offset orientation, θ₁, with respect to the upper surface 16' of the first support member 16a.

The first angularly-offset orientation, θ₁, of the tire, T, may result from the non-co-planar relationship the upper sidewall-engaging surfaces 22b', 22c' of the second and third tire-engaging devices 20b, 20c with that of the upper surface 16' of the first support member 16a such that: (1) the first portion, T_{SL-1}, of the lower sidewall surface, T_{SL}, being arranged adjacent the upper surface 16' of the first support member 16a, (2) the second portion, T_{SL-2}, of the lower sidewall surface, T_{SL}, being arranged adjacent the upper tire-sidewall-engaging surface 22b' of the body 22b of the second tire-engaging device 20b (noting that, in Figure 2A, the second portion, T_{SL-2}, is not represented due to the line-of-view of the cross-sectional reference line of Figure 1A, but, however, is shown in Figure 3A), and (3) a third portion, T_{SL-3}, of the lower sidewall surface, T_{SL}, being arranged adjacent the upper tire-sidewall-engaging surface 22c' of the body 22c of the third tire-engaging device 20c. Accordingly, the support member 16 may provide a three-point support (which is more clearly shown at Figure 1A) at T_{SL-1}, T_{SL-2}, T_{SL-3} for the lower sidewall surface, T_{SL}, of the tire, T, while remaining portions of the lower sidewall surface, T_{SL}, of the tire, T, are not in direct contact with any other portion of the upper surface surfaces 16', 22b', 22c' of the support member 16 when the tire, T, is arranged in the first angularly-offset orientation, θ₁.

The processing sub-station 10 may execute a mounting procedure by causing a controller, C (see, e.g., Figure 1A) to send one or more signals to a motor, M (see, e.g., Figure 1A), that drives movement (according to the direction of the arrows, D1-D12 - see Figures 2A-2J) of the robotic arm 12. Alternatively or in addition to automatic operation by the controller, C, according to inputs stored in memory, the movement, D1-D12, may result from one or more of a manual, operator input, O (e.g., by way of a joystick, depression of a button or the like).

As seen in Figure 2A, a first, down, D, movement according to the direction of arrow, D1, may reduce the spaced-apart orientation of robotic arm 12 with respect to the support member 16. A second movement according to the direction of arrow, D2, may cause the end effecter 14 to rotate the wheel, W, in, for example, a counter-clockwise direction. The movement according to the direction of the arrows, D1, D2, may be conducted separately or simultaneously, as desired.

Referring to Figure 2B, the movement according to the direction of the arrows, D1, D2, may cease upon locating a first (e.g., left) portion of the lower bead seat, W_{SL}, and drop center, W_{DC}, of the wheel, W, within the passage, T_{P}, of the tire, T, such that a first (e.g., left) portion of the drop center, W_{DC}, of the wheel, W, is disposed adjacent a first (e.g., left) portion of the upper bead, T_{BU}, of the tire, T. Because a first (e.g., left) portion the tread surface, T_{T}, of the tire, T, is arranged adjacent the front, tire-tread-engaging surface 22a' of the body 22a of the first tire-engaging device 20a, subsequent movements of the wheel, W, resulting from movement of the robotic arm 12 prevents the tire, T, from moving away (e.g., to the left, L) from the second and third support members 16b, 16c.

With continued reference to Figure 2B, a third movement according to the direction of arrow, D3, may cause forwardly (e.g., to the right, R) movement of the wheel, W. A fourth movement according to the direction of arrow, D4, may cause the end effecter 14 to rotate the wheel, W, in, for example, a clockwise direction (i.e., rotationally opposite that of the direction of arrow, D2). The movement according to the direction of the arrows, D3, D4, may be conducted separately or simultaneously, as desired.

Referring to Figure 2C, the movement according to the direction of the arrows, D3, D4, may cease upon locating a second (e.g., right) portion of the lower bead seat, W_{SL}, and drop center, W_{DC} of the wheel, W, within the passage, T_{P}, of the tire, T, such that a second (e.g., right) portion of the drop center, W_{DC}, and lower bead seat, W_{SL}, of the wheel, W, are disposed proximate but not adjacent a second (e.g., right) portion of the lower bead, T_{BL}, and away from the second (e.g., right) portion of the upper bead, T_{BU}, of the tire, T. As stated above, because the first (e.g., left) portion the tread surface, T_{T}, of the tire, T, is arranged adjacent the front, tire-tread-engaging surface 22a' of the body 22a of the first tire-engaging device 20a, the movements, D3, D4, of the wheel, W, resulting from movement of the robotic arm 12 prevents the tire, T, from moving away (e.g., to the left, L), from the second and third support members 16b, 16c.

With continued reference to Figure 2C, a fifth movement according to the direction of arrow, D5, may cause further forwardly (e.g., to the right, R) movement of the wheel, W. A sixth movement according to the direction of arrow, D6, may cause the end effecter 14 to rotate the wheel, W, in, for example, a counter-clockwise direction (i.e., rotationally opposite that of the direction of arrow, D4). The movement according to the direction of the arrows, D5, D6, may be conducted separately or simultaneously, as desired.

Referring to Figure 2D, the movement according to the direction of the arrows, D5, D6, may cease upon adjusting an orientation of the wheel, W, relative to the tire, T, as follows: (1) the first (e.g., left) portion of the lower bead seat, W_{SL}, and drop center, W_{DC} of the wheel, W, are orientated within the passage, T_{P}, of the tire, T, but away from and not disposed adjacent the first (e.g., left) portion of the upper bead, T_{BU}, but, rather, proximate but not adjacent to the lower bead, T_{BL}, of the tire, T, and (2) the second (e.g., right) portion of the lower bead seat, W_{SL}, and drop center, W_{DC}, of the wheel, W, are orientated within the passage, T_{P}, of the tire, T, but away from and not proximate the second (e.g., right) portion of the lower bead, T_{BL}, but, rather, proximate but not adjacent to the second (e.g., right) portion of the upper bead, T_{BU}, of the tire, T.

Further, as seen in Figure 2D, the movement according to the direction of the arrows, D5, D6, may result in the wheel, W, being disposed within the passage, T_{P}, of the tire, T, and partially connected to the tire, T, such that the robotic arm 12 utilizes the wheel, W, to move the tire, T, forwardly (e.g., to the right, R) from the "ready" position to a "partially mounted" position. When the tire, T, is arranged, in the "partially mounted" position with respect to the wheel, W, the front, tire-tread-engaging surface 22a' of the body 22a of the first tire-engaging device 20a is no longer arranged adjacent the tread surface, T_{T}, of the tire, T, but, rather, one or more of a portion of the tread surface, T_{T}, and the lower sidewall surface, T_{SL}, of the tire, T, are arranged partially adjacent the upper surface 16' of the first support member 16a.

Although no longer arranged in the "ready" position, the support member 16 still provides a three-point support for the lower sidewall surface, T_{SL}, of the tire, T, such that the first portion, T_{SL-1}, of the lower sidewall surface, T_{SL}, is arranged adjacent the upper surface 16' while the second and third portions, T_{SL-2}, T_{SL-3}, of the lower sidewall surface, T_{SL}, of the tire, T, are still arranged adjacent the upper tire-sidewall-engaging surface 22b', 22c' of the body 22b, 22c of the second and third tire-engaging devices 20b, 20c. However, when the orientation of the tire, T, in Figure 2D is compared to the orientation of the tire, T, of Figures 2A-2C, the three points of support are have converged closer together in Figure 2D, and, as a result, the tire, T, is arranged at a second angularly-offset orientation, θ₂, that is greater than the first angularly-offset orientation, θ₁.

With continued reference to Figure 2D, a seventh movement according to the direction of arrow, D7, may cause one or more of a further forwardly movement and a further downwardly, D, and a further forwardly (e.g., to the right, R) movement of the wheel, W. An eighth movement according to the direction of arrow, D8, may cause the end effecter 14 to rotate the wheel, W, in, for example, a further counter-clockwise direction. The movement according to the direction of the arrows, D7, D8, may be conducted separately or simultaneously, as desired.

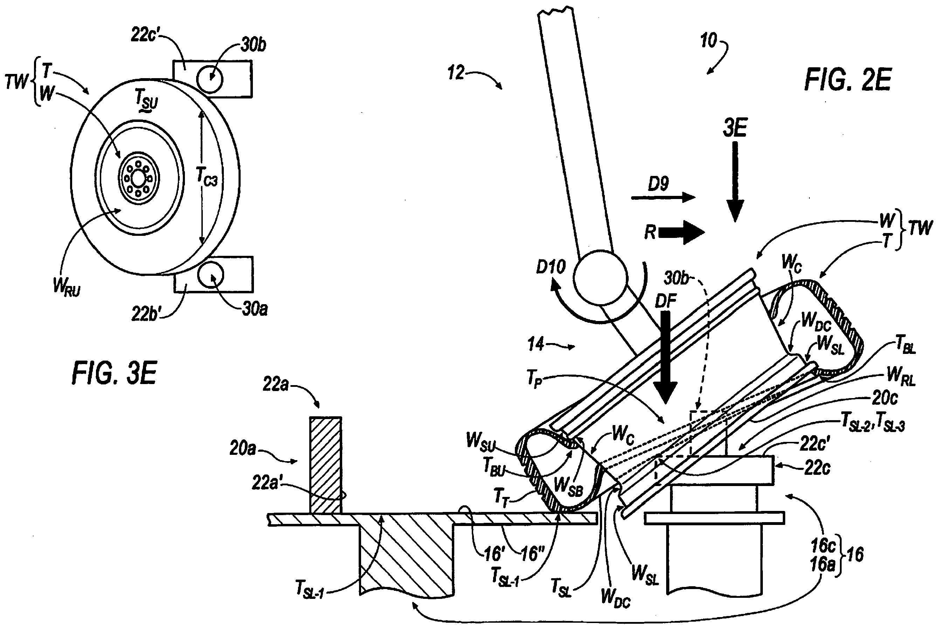

Referring to Figure 2E, the movement according to the direction of the arrows, D7, D8, may cease upon adjusting an orientation of the wheel, W, relative to the tire, T, as follows: (1) the first (e.g., left) portion of the lower bead seat, W_{SL}, and drop center, W_{DC}, of the wheel, W, are orientated out of the passage, T_{P}, of the tire, T, and in a spaced-apart, opposing orientation with the lower sidewall surface, T_{SL}, of the tire, T, and (2) a portion (e.g., a right portion) of a lower, outer rim surface, W_{RL}, of the wheel, W, (proximate the second (e.g., right) portion of the lower bead seat, W_{SL}, and drop center, W_{DC}, of the wheel, W), is disposed within the passage, T_{P}, of the tire, T, and adjacent to the second (e.g., right) portion of the lower bead, T_{BL}, of the tire, T.

Per the phantom lines of the body 22c of the third tire-engaging device 20c (as a result of the orientation of the wheel, W, and tire, T), the movement of the robotic arm 12 according to the direction of the arrows, D7, D8 results in a portion of the wheel, W, being arranged in the gap or first spacing, S1, and the right tire chord, T_{C3} (see, e.g., corresponding top view Figure 3E), being arranged proximate but slightly to the left of the first and second tire-tread-engaging posts 30a, 30b such that a portion of the tire, T, is arranged in the gap or second spacing, S2, but not adjacent the first and second tire-tread-engaging posts 30a, 30b.

Because the gap or first spacing, S1, may be approximately equal to but greater than a diameter of the wheel, W, the robotic arm 12 is permitted to move the wheel, W, into / through the gap or first spacing, S1, and below the upper tire-sidewall-engaging surface 22b', 22c' of the body 22b, 22c of the second and third tire-engaging devices 20b, 20c; however, because the diameter of the tire, T, is greater than that of the gap or first spacing, S1, the movement of robotic arm 12 prohibits movement of the tire, T, through the gap or first spacing, S1, with that of the wheel, W. As a result of the wheel, W, being permitted to pass through the gap or first spacing, S1, without the tire, T, at least the first (e.g., left) portion of the wheel, W, of the wheel, W, described above (proximate, e.g., the first (e.g., left) portion of the lower bead seat, W_{SL}, and drop center, W_{DC}, of the wheel, W) is permitted to "plunge" through the passage, T_{P}, of the tire, T, such that the first (e.g., left) portion of the lower bead seat, W_{SL}, and drop center, W_{DC}, of the wheel, W, is arranged in the spaced-apart, opposing orientation with the lower sidewall surface, T_{SL}, of the tire, T.

As a result of the wheel, W, plunging through the passage, T_{P}, of the tire, T, a first (e.g., left) portion of the safety bead, W_{SB}, of the wheel, W, is disposed adjacent the first (e.g., left) portion of the upper bead, T_{BU}, of the tire, T. Further, as a result of the arrangement of the safety bead, W_{SB}, adjacent the first (e.g., left) portion of the upper bead, T_{BU}, of the tire, T, and the arrangement of the portion of the lower, outer rim surface, W_{RL}, of the wheel, W, adjacent the second (e.g., right) portion of the lower bead, T_{BL}, of the tire, T, a substantially downwardly force, DF, is transmitted from the robotic arm 12, to the wheel, W, and to the contact points of the wheel, W, with the tire, T, described above at the safety bead, W_{SB}, and lower, outer rim surface, W_{RL}, such that the substantially downwardly force, DF, is distributed from the wheel, W, and to the tire, T. The substantially downwardly force, DF, from the wheel, W, to the tire, T, arrives at and is distributed from the first, second and third portions, T_{SL-1}, T_{SL-2}, T_{SL-3}, of the lower sidewall surface, T_{SL}, of the tire, T, to upper surfaces 16', 22b', 22c' of the support member 16.

With continued reference to Figure 2E, a ninth movement according to the direction of arrow, D9, may cause further forwardly movement (e.g., to the right, R) of the wheel, W. A tenth movement according to the direction of arrow, D10, may cause the end effecter 14 to rotate the wheel, W, in, for example, a clockwise direction (i.e., rotationally opposite that of the direction of arrow, D8). The movement according to the direction of the arrows, D9, D10, may be conducted separately or simultaneously, as desired.

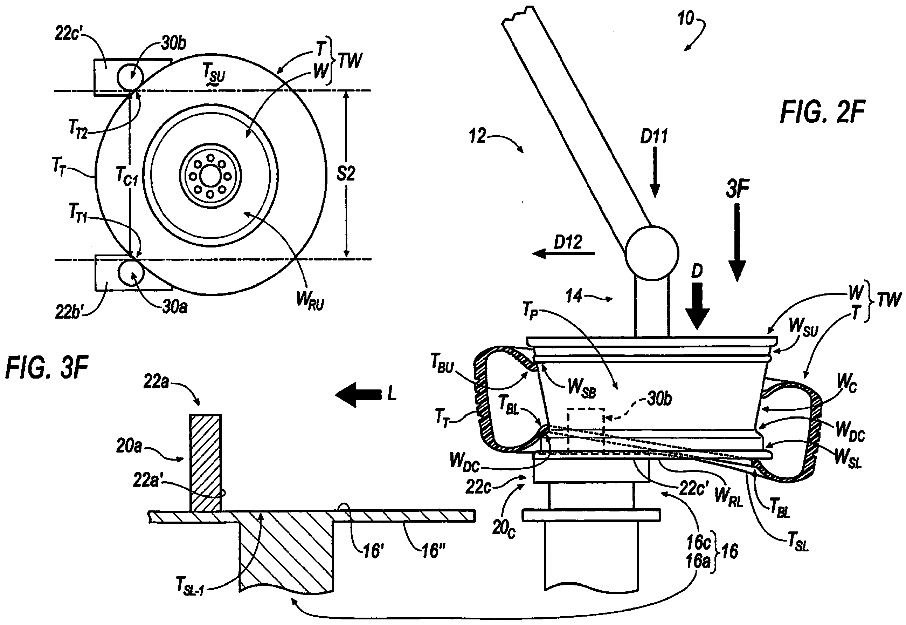

Referring to Figures 2F and 3F, the movement according to the direction of the arrows, D9, D10, may cease upon adjusting an orientation of the wheel, W, relative to the tire, T, as follows: (1) the wheel, W, and tire, T, had previously "hopped over" the first and second tire-tread-engaging posts 30a, 30b such that the wheel, W, and tire, T, are oriented forwardly (e.g., to the right, R) of the first and second tire-tread-engaging posts 30a, 30b, (2) as a result of the forwardly orientation of the tire, T, and wheel, W, relative to the first and second tire-tread-engaging posts 30a, 30b, approximately three-quarters (3/4) of the tire, T, is arranged forwardly of the first and second tire-tread-engaging posts 30a, 30b (as shown, for example in Figure 3F) such that the left chord, T_{C1}, of the tire, T, is aligned with the second spacing, S2, of the first and second tire-tread-engaging posts 30a, 30b; as a result of the alignment of the left chord, T_{C1}, with the second spacing, S2, the a first tread surface portion, T_{T1}, and a second tread surface portion, T_{T2}, of the tread surface, T_{T}, of the tire, T, are disposed adjacent to and in direct contact with, respectively, the first and second tire-tread-engaging posts 30a, 30b, (3) the lower, outer rim surface, W_{RL}, of the wheel, W, is arranged in a substantially co-planar relationship with the upper tire-sidewall-engaging surface 22b', 22c' of the body 22b, 22c of the second and third tire-engaging devices 20b, 20c, (4) the first (e.g., left) portion of the lower bead, T_{BL}, of the tire, T, is disposed adjacent the first (e.g., left) portion of the drop center, W_{DC}, of the wheel, W, and (5) the portion of the outer rim surface, W_{RL}, of the wheel, W, (proximate the second (e.g., right) portion of the lower bead seat, W_{SL}, and drop center, W_{DC}, of the wheel, W) remains disposed within the passage, T_{P}, of the tire, T, and adjacent to the second (e.g., right) portion of the lower bead, T_{BL}, of the tire, T.

Because the lower, outer rim surface, W_{RL}, of the wheel, W, is arranged in a substantially co-planar relationship with the upper tire-sidewall-engaging surface 22b', 22c' of the body 22b, 22c of the second and third tire-engaging devices 20b, 20c, the tire, T, is no longer in direct contact with the first support member 16a. Further, as explained above, because the diameter, T_{D}, of the tire, T, is greater than that of the gap or first spacing, S1, the co-planar orientation of the lower, outer rim surface, W_{R-L}, with the upper tire-sidewall-engaging surface 22b', 22c' results in approximately one-fourth (1/4) to one-half (1/2) of a first (e.g., left) portion of the lower sidewall surface, T_{SL}, of the tire, T, disposed adjacent the upper tire-sidewall-engaging surface 22b', 22c' of the body 22b, 22c of the second and third tire-engaging devices 20b, 20c.

With continued reference to Figure 2F, an eleventh movement according to the direction of arrow, D11, may cause downwardly movement, D, of the wheel, W, such that the lower outer rim surface, W_{RL}, of the wheel, W, (proximate the lower bead seat, W_{SL}, and drop center, W_{DC}, of the wheel, W) is arranged substantially proximate but below the upper tire-sidewall-engaging surface 22b', 22c' of the body 22b, 22c of the second and third tire-engaging devices 20b, 20c. A twelfth movement according to the direction of arrow, D12, may cause a rearwardly (e.g., to the left, L) movement of the wheel, W. The movement according to the direction of the arrows, D11, D12, may be conducted separately or simultaneously, as desired.

Referring to Figure 2G, as a result of the movement according to the direction of the arrows D1-D12, the lower bead, T_{BL}, of the tire, T, is arranged in a curved, substantially arcuate orientation over the sidewall-engaging surface 22b', 22c' of the body 22b, 22c of the second and third tire-engaging devices 20b, 20c. Further, as a result of the initial rearwardly (e.g., to the left, L) movement of the wheel, W, the tire, T, is advanced through the second spacing, S2 (see, e.g., Figure 3G), from the left chord, T_{C1}, to the right chord, T_{C3}; as seen in Figure 3G, because chords (including, e.g., the central chord, T_{C2}) of the tire, T, between the left chord, T_{C1}, and the right chord, T_{C3}, are greater than that of the left chord, T_{C1}, and the right chord, T_{C3}, the first and second tire-tread-engaging posts 30a, 30b interfere with movement of the tire, T, through the second spacing, S2.

As a result of the above-described interference, as seen in Figure 3G, the tire, T, temporality deforms such that the diameter, T_{P-D}, of the passage, T_{P}, of the tire, T, is temporality upset to include a substantially oval form rather than a circular form. Accordingly, in a substantially similar fashion, the upper tire opening diameter, T_{OU-D}, and the lower tire opening diameter, T_{OL-D}, are also temporality upset to include a substantially oval form rather than a circular form.

The oval form of the upper tire opening diameter, T_{OU-D}, and the lower tire opening diameter, T_{OL-D}, reduces a portion of contact (and, as a result, friction) of the lower bead, T_{BL}, and the upper bead, T_{BU}, of the tire, T, with that of the outer circumferential surface, W_{C}, of the wheel, W. Accordingly, referring to Figures 2G-2I and 3G-3I, as the wheel, W, advances the tire, T, rearwardly (e.g., to the left, L) through the second spacing, S2, according to the direction of the arrow, D12, the oval deformation of diameters, T_{P-D}, T_{OU-D}, T_{OL-D} results in the lower bead, T_{BL}, of the tire, T, encountering less resistance or interference with the outer rim surface, W_{R-L}, of the wheel, W, as the lower bead, T_{BL}, is advanced from an orientation opposite that of the outer rim surface, W_{RL}, over the lower bead seat, W_{SL}, and to a final position adjacent the drop center, W_{DC}, of the wheel, W.

Referring to Figures 2J and 3J, once the right chord, T_{C3}, has been advanced through the second spacing, S2,from forwardly orientation (e.g., to the right, R) of the first and second tire-tread-engaging posts 30a, 30b back to the rearwardly orientation (e.g., to the left, L) of the first and second tire-tread-engaging posts 30a, 30b, the entire circumference of the lower bead, T_{BL}, may be said to be advanced to its final "mounted position" adjacent to and about the drop center, W_{DC}. Further, the entire circumference of the upper bead, T_{BU}, may be said to be arranged in its final "mounted position" adjacent to and about the outer circumferential surface, W_{C}, of the wheel, W, proximate the safety bead, W_{SB}.

With continued reference to Figure 2J, a thirteenth movement according to the direction of arrow, D13, may cause upwardly movement, U, of the wheel, W, and tire, T, away from the support member 16. The robotic arm 12 may move the tire-wheel assembly, TW, to, for example, a subsequent sub-station (not shown), such as, for example, an inflation sub-station in order to inflate the tire-wheel assembly, TW, which may cause the upper bead, T_{BU}, to be seated adjacent the upper bead seat, W_{SU}, and the lower bead, T_{BL}, to be seated adjacent the lower bead seat, W_{SL}.

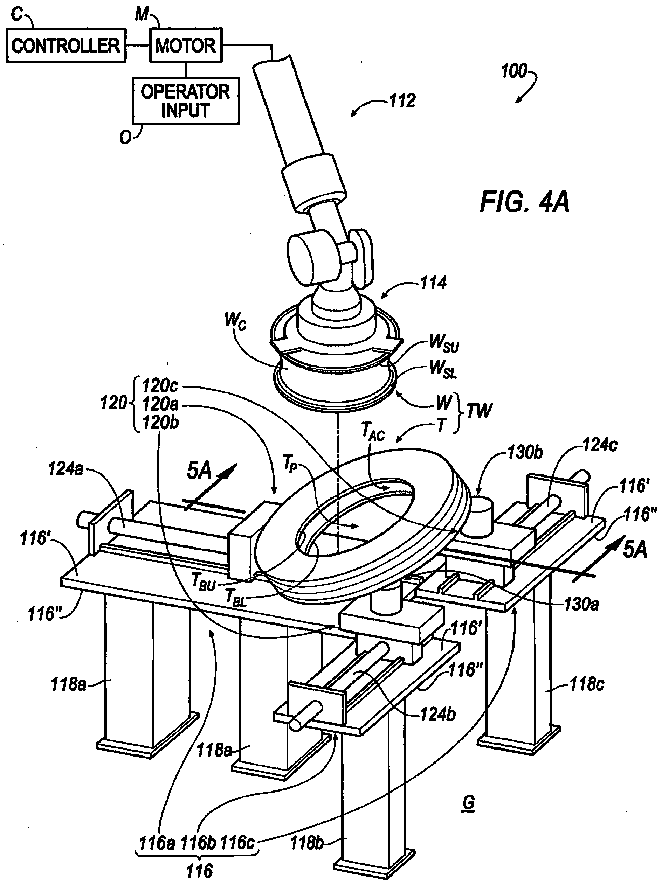

Referring to Figure 4A, a processing sub-station 100 for processing a tire-wheel assembly, TW, is shown according to an embodiment. The "processing" conducted by the processing sub-station 100 may include the act of "joining" or "mounting" a tire, T, to a wheel, W, for forming the tire-wheel assembly, TW. The act of "joining" or "mounting" may mean to physically couple, connect or marry the tire, T, and wheel, W, such that the wheel, W, may be referred to as a male portion that is inserted into a passage, T_{P}, of a tire, T, being a female portion.

As described and shown in the following Figures, although the desired result of the processing sub-station 100 is the joining or mounting of the tire, T, and wheel, W, to form a tire-wheel assembly, TW, it should be noted that the processing sub-station 100 does not inflate the circumferential air cavity, T_{AC}, of the tire, T, of the tire-wheel assembly, TW, nor does the processing sub-station 100 contribute to an act of "seating" the upper bead, T_{BU}, or the lower bead, T_{BL}, of the tire, T, adjacent the upper bead seat, W_{SU}, and the lower bead seat, W_{SL}, of the wheel, W (because the act of "seating" typically arises from an inflating step where the tire-wheel assembly, TW, is inflated). Accordingly, upon joining or mounting the tire, T, to the wheel, W, the upper bead, T_{BU}, or the lower bead, T_{BL}, of the tire, T, may be arranged about and/or disposed adjacent the outer circumferential surface, W_{C}, of the wheel, W.

In an implementation, the processing sub-station 100 may be included as part of a "single-cell" workstation. A single-cell workstation may include other sub-stations (not shown) that contribute to the processing of a tire-wheel assembly, TW; other sub-stations may include, for example: a soaping sub-station, a stemming sub-station, an inflating sub-station, a match-marking sub-station, a balancing sub-station and the like. The term "single-cell" indicates that the sub-stations contribute to the production of a tire-wheel assembly, TW, without requiring a plurality of successive, discrete workstations that may otherwise be arranged in a conventional assembly line such that a partially-assembled tire-wheel assembly, TW, is "handed-off" along the assembly line (i.e., "handed-off" meaning that an assembly line requires a partially-assembled tire-wheel assembly, TW, to be retained by a first workstation of an assembly line, worked on, and released to a subsequent workstation in the assembly line for further processing). Rather, a single cell workstation provides one workstation having a plurality of sub-stations each performing a specific task in the process of assembling a tire-wheel assembly, TW. This assembling process takes place wherein the tire and/or wheel "handing-off" is either minimized or completely eliminated. As such, a single-cell workstation significantly reduces the cost and investment associated with owning/renting the real estate footprint associated with a conventional tire-wheel assembly line while also having to provide maintenance for each individual workstation defining the assembly line. Thus, capital investment and human oversight is significantly reduced when a single cell workstation is employed in the manufacture of tire-wheel assemblies, TW.

Referring to Figure 4A, the processing sub-station 100 includes a device 112. The device 112 may be referred to as a robotic arm. The robotic arm 112 may be located in a substantially central position relative to a plurality of sub-stations (including, e.g., the processing sub-station 100) of a single-cell workstation. The robotic arm 112 may be attached to and extend from a base / body portion (not shown) connected to ground, G.

The robotic arm 112 may include an end effecter 114. The end effecter 114 may include a claw, gripper, or other means for removably-securing the wheel, W, to the robotic arm 112. The end effecter 114 permits the robotic arm 112 to have the ability to retain and not release the wheel, W, throughout the entire procedure performed by the processing sub-station 100 (and, if applied in a single-cell workstation, the ability to retain and not release the wheel, W, throughout the entire assembling procedure of the tire-wheel assembly, TW). Accordingly, the end effecter 114 minimizes or eliminates the need of the robotic arm 112 to "hand-off" the tire-wheel assembly, TW, to (a) subsequent sub-station(s) (not shown).

The processing sub-station 100 may perform several functions / duties including that of: (1) a tire repository sub-station and (2) a mounting sub-station. A tire repository sub-station typically includes one or more tires, T, that may be arranged in a "ready" position for subsequent joining to a wheel, W. A mounting sub-station typically includes structure that assists in the joining of a tire, T, to a wheel, W (e.g., the disposing of a wheel, W, within the passage, T_{P}, of the tire, T).

Referring to Figure 4A, the processing sub-station 100 may be initialized by joining a wheel, W, to the robotic arm 112 at the end effecter 114. The processing sub-station 100 may also be initialized by positioning the tire, T, upon a support member 116. The support member 116 may include a first support member 116a, a second support member 116b and a third support member 116c. Each of the first, second and third support members 116a, 116b, 116c include an upper surface 116' and a lower surface 116".

The lower surface 116" of each of the first, second and third support members 116a, 116b, 116c may be respectively connected to at least one first leg member 118a, at least one second leg member 118b and at least one third leg member 118c. Each of the at least one first, second and third leg members 118a, 118b, 118c respectively include a length for elevating or spacing each of the first, second and third support members 116a, 116b, 116c from an underlying ground surface, G. Although the robotic arm 112 is not directly connected to the support member 116 (but, rather may be connected to ground, G), the robotic arm 112 may be said to be interfaceable with (as a result of the movements D1-D8 described in the following disclosure) and/or indirectly connected to the support member 116 by way of a common connection to ground, G, due the leg members 118a-118c connecting the support member 116 to ground, G.

The processing sub-station 100 may further include a plurality of tire-engaging devices 120. The plurality of tire-engaging devices 120 may include a first tire-engaging device 120a connected to the upper surface 116' of the first support member 116a, a second tire-engaging device 120b connected to the upper surface 116' of the second support member 116b and a third tire-engaging device 120c connected to the upper surface 116' of the third support member 116c.

In reference to the processing sub-station 10 of Figures 1A-3J, the plurality of tire-engaging devices 20 may be said to be in a fixed orientation with respect to the upper surface 16' of each of the first, second and third support members 16a, 16b, 16c. However, as will be described in the following disclosure, the plurality of tire-engaging devices 120 of the processing sub-station 100 may be said to be in a non-fixed, moveable orientation with respect to the upper surface 116' of each of the first, second and third support members 116a, 116b, 116c.

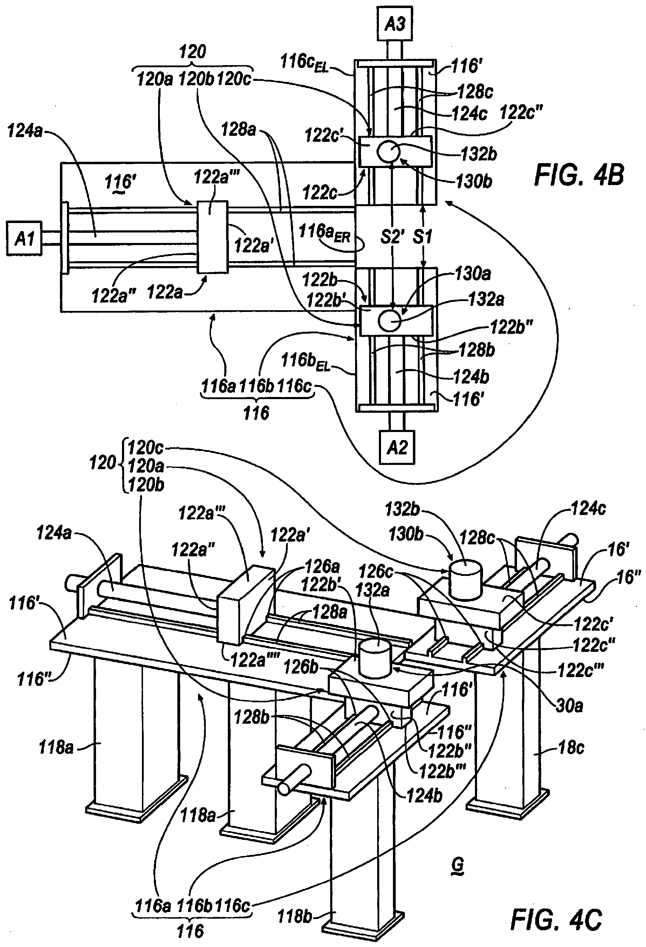

Referring to Figures 4B-4C, the first tire-engaging device 120a may include a body 122a having a front (right) side, tire-tread-engaging surface 122a', a rear (left) side surface 122a", an upper surface 122a'" and a lower surface 122a"" (see, e.g., Figure 4C). Each of the second and third tire-engaging devices 120b, 120c may include a body 122b, 122c having an upper tire-sidewall-engaging surface 122b', 122c' a rear side surface 122b", 122c" and a lower surface 122b"', 122c'" (see, e.g., Figure 4C).

The upper sidewall-engaging surfaces 122b', 122c' of the second and third tire-engaging devices 120b, 120c may be co-planar with one another. The upper sidewall-engaging surfaces 122b', 122c' of the second and third tire-engaging devices 120b, 120c may be arranged in a spaced-apart relationship with respect to ground, G, that is greater than that of the spaced-apart relationship of the upper surface 116' of the first support member 116a; accordingly, the upper sidewall-engaging surfaces 122b', 122c' of the second and third tire-engaging devices 120b, 120c may be arranged in a non-co-planar relationship with respect to the upper surface 116' of the first support member 116a.

The rear side surface 122a" of the body 122a of the first tire-engaging device 120a may be connected to a first rod 124a. The first rod 124a may be connected to a first actuator, A1 (see, e.g., Figure 4B). The lower surface 122a"" of the body 122a of the first tire-engaging device 120a may include at least one female recess 126a (see, e.g., Figure 4C). The at least one female recess 126a receives at least one male guide member 128a connected to the upper surface 116' of the first support member 116a.

The rear side surface 122b" of the body 122b of the second tire-engaging device 120b may be connected to a second rod 124b. The second rod 124b may be connected to a second actuator, A2 (see, e.g., Figure 4B). The lower surface 122b'" of the body 122b of the second tire-engaging device 120b may include at least one female recess 126b (see, e.g., Figure 4C). The at least one female recess 126b receives at least one male guide member 128b connected to the upper surface 116' of the second support member 116b.

The rear side surface 122c" of the body 122c of the second tire-engaging device 120c may be connected to a third rod 124c. The third rod 124c may be connected to a third actuator, A3 (see, e.g., Figure 4B). The lower surface 122c"' of the body 122c of the third tire-engaging device 120c may include at least one female recess 126c (see, e.g., Figure 4C). The at least one female recess 126c receives at least one male guide member 128c connected to the upper surface 116' of the third support member 116c.

The rods 124a-124c, female recesses 126a-126c and male guide members 128a-128c may assist in or contribute to the movement of the plurality of tire-engaging devices 120 relative the upper surface 116' of each of the first, second and third support members 116a, 116b, 116c. For example, each of the first, second and third rods 124a, 124b, 124c may providing a driving force and/or a reactive force (e.g., by way of a spring) to, respectively, the first, second and third tire-engaging devices 120a, 120b, 120c, in order to respectively cause or react to forward or backward movement of the first, second and third tire-engaging devices 120a, 120b, 120c. If a spring is included as or with one or more of the actuators A1-A3, the spring may bias one or more of the first, second and third rods 124a, 124b, 124c to a particular orientation; accordingly, if an object, such as, for example, one or more of the tire, T, and wheel, W, pushes or exerts a force upon one or more of the first, second and third tire-engaging devices 120a, 120b, 120c, the reactive / biasing force of the spring may act upon one or more of the first, second and third tire-engaging devices 120a, 120b, 120c in order to regulate movement of one or more of the first, second and third tire-engaging devices 120a, 120b, 120c relative to the upper surface 116' of one or more of the first, second and third support members 116a, 116b, 116c. The female recesses 126a-126c and male guide members 128a-128c may assist in providing linear movement of the first, second and third tire-engaging devices 120a, 120b, 120c relative to the upper surface 116' of the first, second and third support members 116a, 116b, 116c.

With continued reference to Figures 4B-4C, a first tire-tread-engaging post 130a may extend from the upper tire-sidewall-engaging surface 122b' of the second tire-engaging device 120b. A second tire-tread-engaging post 130b may extend from the upper tire-sidewall-engaging surface 122c' of the third tire-engaging device 120c. Each of the first and second tire-tread-engaging posts 130a, 130b include an upper tire-sidewall-engaging surface 132a, 132b.

Referring to Figure 4B, the second and third support members 116b, 116c are separated by a gap or first spacing, S1. The first tire-tread-engaging post 130a is separated from the second tire-tread-engaging post 130b by a gap or second spacing, S2'. The second spacing, S2', may be greater than the first spacing, S1. The first spacing, S1, may be approximately equal to, but slightly greater than the diameter, W_{D}, of the wheel, W; further, the tire diameter, T_{D}, / central chord, T_{C2}, may be greater than the first spacing, S1. The second spacing, S2', may be approximately equal to the left chord, T_{C1}, and the right chord, T_{C3}, of the tire, T; further, the tire diameter, T_{D}, / central chord, T_{C2}, may be greater than the second spacing, S2'.

The first spacing, S1, of the processing sub-station 100 is substantially similar to the first spacing, S1, of the processing sub-station 10. The second spacing, S2', of the processing sub-station 100 is substantially similar to the second spacing, S2, of the processing sub-station 10; however, the second spacing, S2', of the processing sub-station 100 is different than that of the second spacing, S2, of the processing sub-station 10 due to the movement of the second and third tire-engaging devices 120b, 120c of the processing sub-station 100. Accordingly, the second spacing, S2', of the processing sub-station 100 may be referred to as a "variable" or "adjustable" second spacing, S2'.

In reference to the processing sub-station 10 of Figures 1A-3J, the first, second and third support members 16a, 16b, 16c may be said to be individual units arranged in a spaced-apart relationship. In reference to the processing sub-station 100 of Figures 4A-4C, the plurality the first, second and third support members 116a, 116b, 116c may also be said to be individual units; however, as seen, for example, in Figure 4B, a forward (e.g., right) end 116a_{ER} of the first support member 116a may be arranged in an abutting or adjacent relationship with respect to a rearward (e.g., left) end 116b_{EL} of the second support member 116b and a rearward (e.g., left) end 116c_{EL} of the third support member 116c. Further, as seen in Figure 4B, the at least one male guide member 128a connected to the upper surface 116' of the first support member 116a may extend all the way to and terminate at the forward (e.g., right) end 116a_{ER} of the first support member 116a.

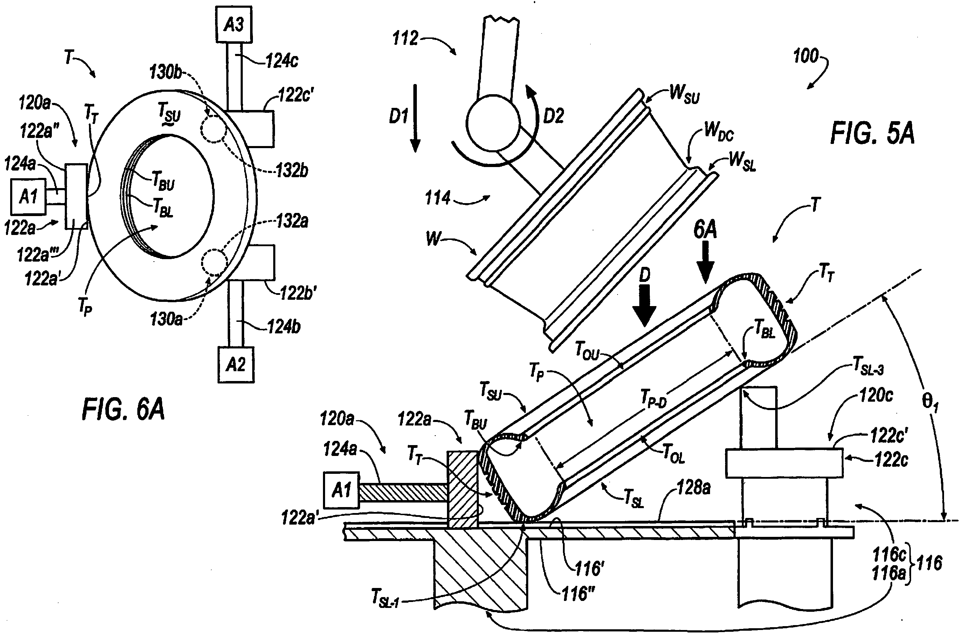

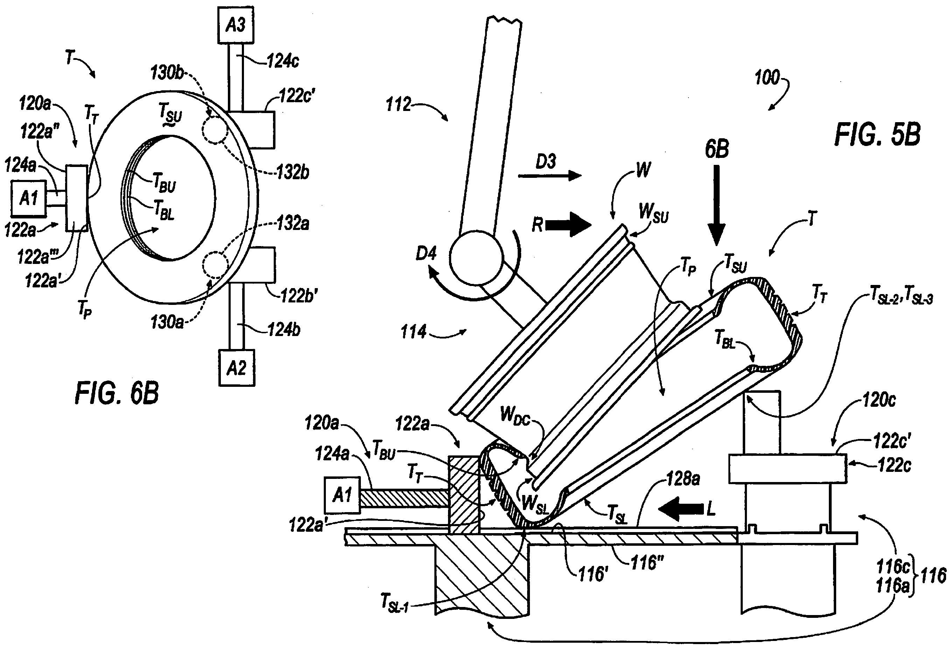

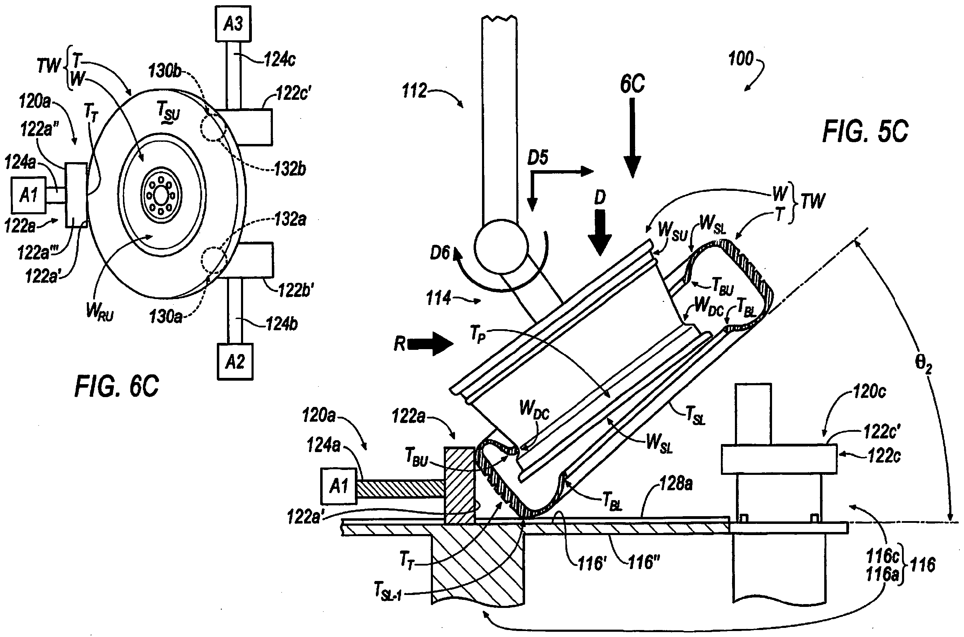

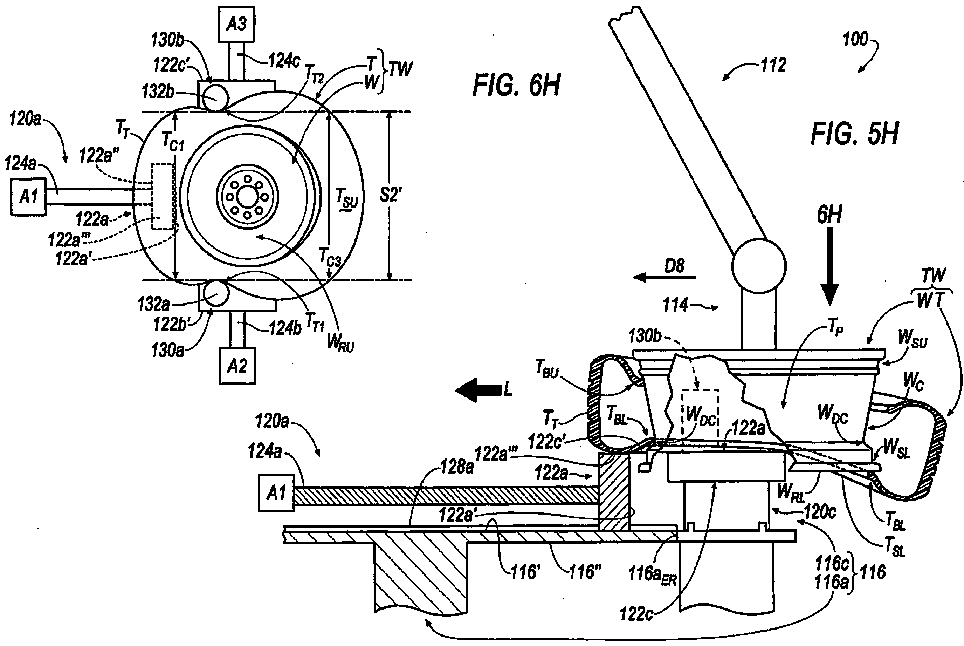

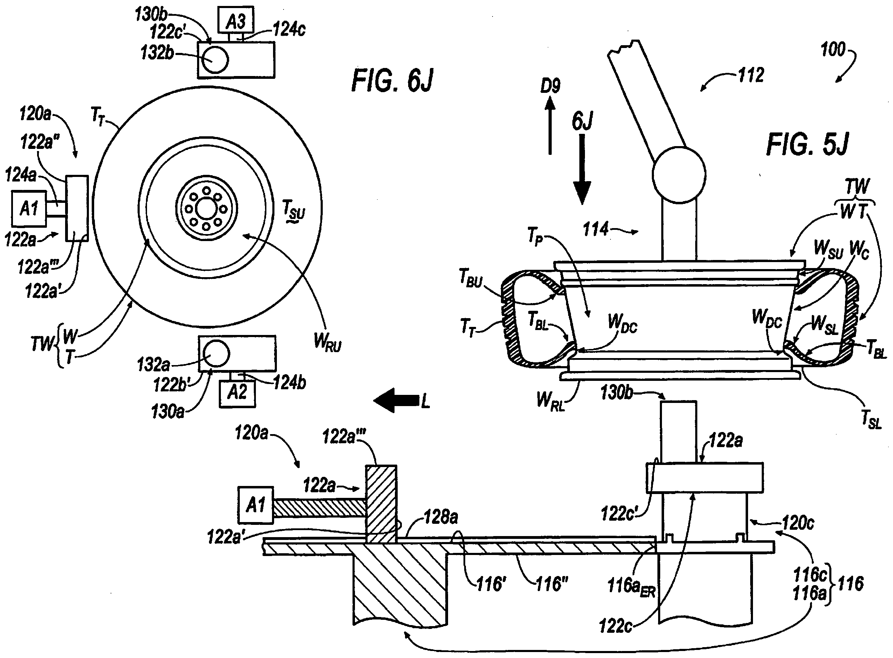

As seen in Figure 4A with reference to Figures 5A and 6A, prior to joining the tire, T, to the wheel, W, the tire, T, may be said to be arranged in a first relaxed, unbiased orientation such that the upper tire opening, T_{OU}, and the lower tire opening, T_{OL}, define the passage, T_{P}, to include a diameter, T_{P-D}. When the tire, T, is joined to the wheel, W (see, e.g., Figures 5J and 6J), the upper bead, T_{BU}, and the lower bead, T_{BL}, may be arranged proximate but not seated adjacent, respectively, the upper bead seat, W_{SU}, and the lower bead seat, W_{SL}, of the wheel, W; later, upon inflating the tire, T, at, e.g., an inflation sub-station (not shown), the upper bead, T_{BU}, and the lower bead, T_{BL}, may be seated (i.e., disposed adjacent), respectively, the upper bead seat, W_{SU}, and the lower bead seat, W_{SL}, of the wheel, W. Further, when the tire, T, is joined to the wheel, W (see, e.g., Figures 5J and 6J), the tire, T, may be said to be arranged in a second substantially relaxed, but somewhat biased orientation such that the diameter, T_{P-D}, of the passage, T_{P}, is substantially circular and substantially similar to its geometry of the first relaxed, unbiased orientation of the tire, T.

Referring to Figure 5A, the robotic arm 112 is arranged in a spaced-apart orientation with respect to the support member 116, which includes the tire, T, arranged in a "ready" position. As seen in Figures 5A and 6A, the "ready" position may include the tread surface, T_{T}, of the tire, T, arranged adjacent the front, tire-tread-engaging surface 122a' of the body 122a of the first tire-engaging device 120a, and, further, the "ready" position may further include the tire, T, being arranged in a first angularly-offset orientation, θ₁ (see, e.g., Figure 5A), with respect to the upper surface 116' of the first support member 116a.

Referring to Figure 5A, the first angularly-offset orientation, θ₁, of the tire, T, may result from the non-co-planar relationship the upper sidewall-engaging surfaces 122b', 122c' of the second and third tire-engaging devices 120b, 120c with that of the upper surface 116' of the first support member 116a such that: (1) the first portion, T_{SL-1}, of the lower sidewall surface, T_{SL}, being arranged adjacent the upper surface 116' of the first support member 116a, (2) as seen in Figures 5A and 6A, the second portion, T_{SL-2}, of the lower sidewall surface, T_{SL}, being arranged adjacent a portion of the upper tire-sidewall-engaging surface 132a of the first tire-tread-engaging post 130a of the second tire-engaging device 120b (noting that the second portion, T_{SL-2}, is not represented in Figure 5A due to the cross-sectional reference line of Figure 4A), and (3) a third portion, T_{SL-3}, of the lower sidewall surface, T_{SL}, being arranged adjacent a portion of the upper tire-sidewall-engaging surface 132b of the second tire-tread-engaging post 130b of the third tire-engaging device 120c. Accordingly, the support member 116 may provide a three-point support (which is more clearly shown at Figure 4A) at T_{SL-1}, T_{SL-2}, T_{SL-3} for the lower sidewall surface, T_{SL}, of the tire, T, while remaining portions of the lower sidewall surface, T_{SL}, of the tire, T, are not in direct contact with any other portion of the upper surface surfaces 116', 132a, 132b of the support member 116 when the tire, T, is arranged in the first angularly-offset orientation, θ₁.

The processing sub-station 100 may execute a mounting procedure by causing a controller, C (see, e.g., Figure 4A) to send one or more signals to a motor, M (see, e.g., Figure 4A), that drives movement (according to the direction of the arrows, D1-D9 - see Figures 5A-5J) of the robotic arm 112. Alternatively or in addition to automatic operation by the controller, C, according to inputs stored in memory, the movement, D1-D9, may result from one or more of a manual, operator input, O (e.g., by way of a joystick, depression of a button or the like).

As seen in Figure 5A, a first, down, D, movement according to the direction of arrow, D1, may reduce the spaced-apart orientation of robotic arm 112 with respect to the support member 116. A second movement according to the direction of arrow, D2, may cause the end effecter 114 to rotate the wheel, W, in, for example, a counter-clockwise direction. The movement according to the direction of the arrows, D1, D2, may be conducted separately or simultaneously, as desired.

Referring to Figure 5B, the movement according to the direction of the arrows, D1, D2, may cease upon locating a first (e.g., left) portion of the lower bead seat, W_{SL}, and drop center, W_{DC}, of the wheel, W, within the passage, T_{P}, of the tire, T, such that a first (e.g., left) portion of the drop center, W_{DC}, of the wheel, W, is disposed adjacent a first (e.g., left) portion of the upper bead, T_{BU}, of the tire, T. Because a first (e.g., left) portion the tread surface, T_{T}, of the tire, T, is arranged adjacent the front, tire-tread-engaging surface 122a' of the body 122a of the first tire-engaging device 120a, subsequent movements of the wheel, W, resulting from movement of the robotic arm 112 prevents the tire, T, from moving away (e.g., to the left, L) from the second and third support members 116b, 116c.

With continued reference to Figure 5B, a third movement according to the direction of arrow, D3, may cause forwardly (e.g., to the right, R) movement of the wheel, W. A fourth movement according to the direction of arrow, D4, may cause the end effecter 114 to rotate the wheel, W, in, for example, a clockwise direction (i.e., rotationally opposite that of the direction of arrow, D2). The movement according to the direction of the arrows, D3, D4, may be conducted separately or simultaneously, as desired.

Referring to Figure 5C, the movement according to the direction of the arrows, D3, D4, may cease upon locating a second (e.g., right) portion of the lower bead seat, W_{SL}, and drop center, W_{DC} of the wheel, W, within the passage, T_{P}, of the tire, T, such that a second (e.g., right) portion of the drop center, W_{DC}, and lower bead seat, W_{SL}, of the wheel, W, are disposed proximate but not adjacent a second (e.g., right) portion of the lower bead, T_{BL}, and away from the second (e.g., right) portion of the upper bead, T_{BU}, of the tire, T. As stated above, because the first (e.g., left) portion the tread surface, T_{T}, of the tire, T, is arranged adjacent the front, tire-tread-engaging surface 122a' of the body 122a of the first tire-engaging device 120a, the movements, D3, D4, of the wheel, W, resulting from movement of the robotic arm 112 prevents the tire, T, from moving rearwardly away (e.g., to the left, L), from the second and third support members 116b, 116c.

Referring to Figure 5C, although the movement according to the direction of the arrows, D3, D4, does not result in the tire, T, moving rearward with respect to the second and third support members 116b, 116c, the portions of the lower sidewall surface, T_{SL}, of the tire, T, may no longer be arranged adjacent to the upper tire-sidewall-engaging surfaces 132a, 132b of the first and second tire-tread-engaging posts 130a, 130b; this may result from the wheel, W, pressing upon and pivoting the tire, T (about the point of support, T_{SL-1}, adjacent the upper surface 116'), in a counter-clockwise direction. Accordingly, the tire, T, may no longer be arranged adjacent the support member 116 at three points of support; rather, the tire, T, only contact the support member 116 at one point of support, T_{SL-1}, being the upper surface 116' of the first support member 116a.

Further, as a result the orientation of the tire, T, being supported at one point of support, T_{SL-1}, the tire, T, is no longer arranged at the first angularly-offset orientation, θ₁, with respect to the upper surface 116' of the first support member 116a. Rather, as seen in Figure 5C, the tire, T, is arranged at a second angularly-offset orientation, θ₂, with respect to the lower sidewall surface, T_{SL}, and the upper surface 116' of the first support member 116a; the second angularly-offset orientation, θ₂, may be greater than that of the first angularly-offset orientation, θ₁.

With continued reference to Figure 5C, a fifth movement according to the direction of arrow, D5, may cause one or more of a further forwardly (e.g., to the right, R) and downwardly (e.g., down, D) movement of the wheel, W. A sixth movement according to the direction of arrow, D6, may cause the end effecter 114 to rotate the wheel, W, in, for example, a further clockwise direction. The movement according to the direction of the arrows, D5, D6, may be conducted separately or simultaneously, as desired.

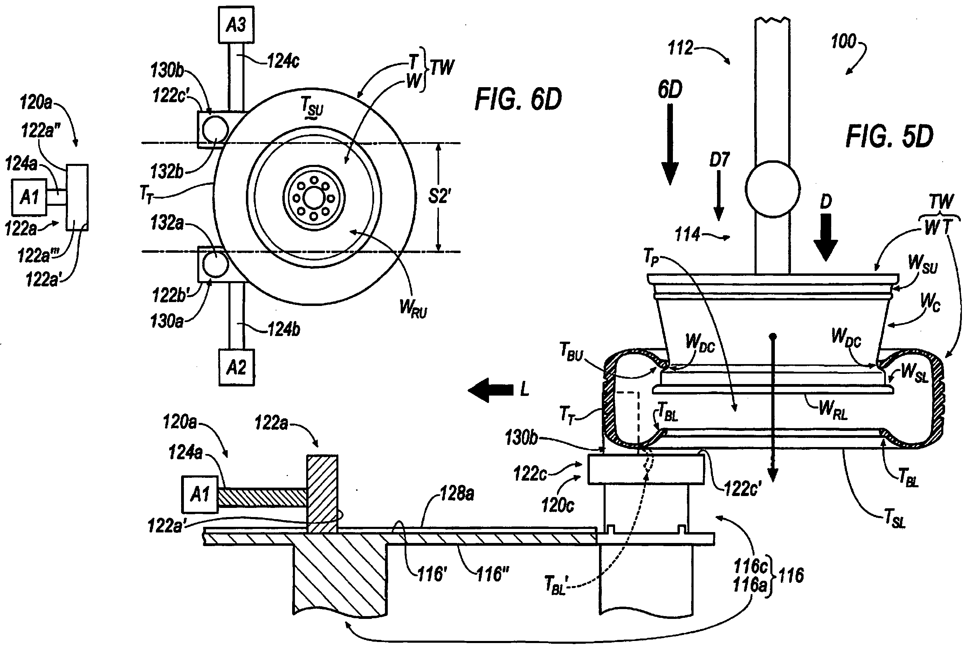

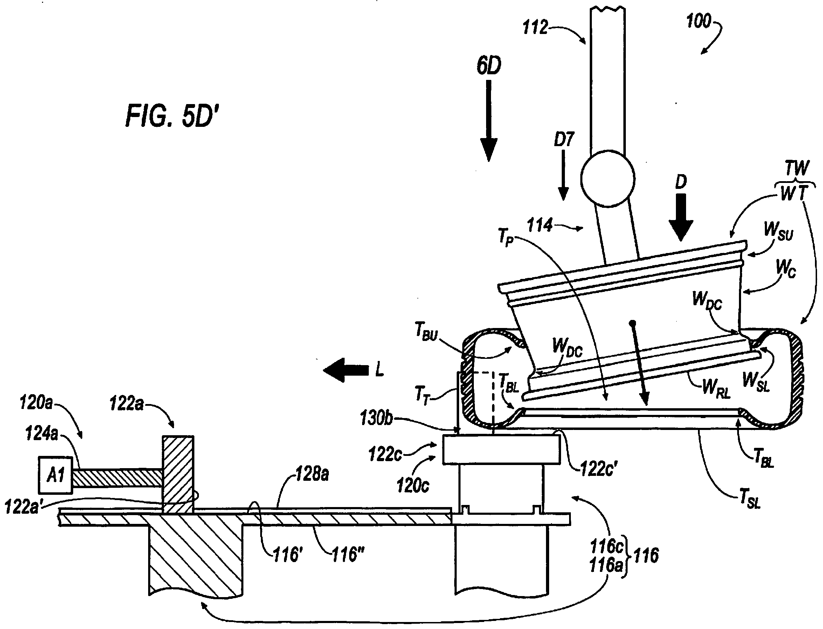

Referring to Figure 5D, the movement according to the direction of the arrows, D5, D6, may cease upon adjusting an orientation of the wheel, W, relative to the tire, T, as follows: (1) the entire lower bead seat, W_{SL}, is located within the passage, T_{P}, of the tire, T, and (2) the entire upper bead, T_{BU}, is disposed about and adjacent the drop center, W_{DC}, of the wheel, W

Further, as seen in Figure 5D, the movement according to the direction of the arrows, D5, D6, may result in the wheel, W, being disposed within the passage, T_{P}, of the tire, T, and partially connected to the tire, T, such that the robotic arm 112 may utilize the wheel, W, to lift and carry the tire, T, by way of the temporary connection of the entire upper bead, T_{BU}, being disposed about and adjacent the drop center, W_{DC}, of the wheel, W. Further, the wheel, W, and the tire, T, may be said to be arranged in a "partially mounted" orientation.

Once arranged in the "partially mounted" orientation, the robotic arm 112 may move the wheel, W, and tire, T, forwardly (e.g., to the right, R) such that the front, tire-tread-engaging surface 122a' of the body 122a of the first tire-engaging device 120a is no longer arranged adjacent the tread surface, T_{T}, of the tire, T. Further, the movement according to the direction of the arrows, D5, D6, may result in the wheel, W, carrying the tire, T, up or over the first and second tire-tread-engaging posts 130a, 130b such that the tire, T, and wheel, W, are arranged substantially forwardly of (e.g., to the right, R) of the first and second tire-engaging posts 130a, 130b. Yet even further, the movement according to the direction of the arrows, D5. D6. may result in the lower, outer rim surface, W_{RL}, of the wheel, W, and the lower sidewall surface, T_{SL}, of the tire, T, being arranged proximate, but in a substantially parallel, but spaced-apart relationship with respect to the upper tire-sidewall-engaging surface 122b', 122c' of the body 122b, 122c of the second and third tire-engaging devices 120b, 120c.

With reference to Figure 6D, which is a top view of Figure 5D, the tread surface, T_{T}, of the tire, T, is arranged proximate, but in a spaced-apart relationship with respect to the first and second tire-tread-engaging posts 130a, 130b. Further, as seen in Figure 5D, because the tread surface, T_{T}, of the tire, T, no longer contacts the front, tire-tread-engaging surface 122a' of the body 122a of the first tire-engaging device 120a, the first tire-engaging device 120a may be moved rearwardly (e.g., to the left, L) and away from the second and third tire-engaging devices 120b, 120c. With continued reference to Figure 5D, a seventh movement according to the direction of arrow, D7, may cause a downwardly, D, movement of the wheel, W.

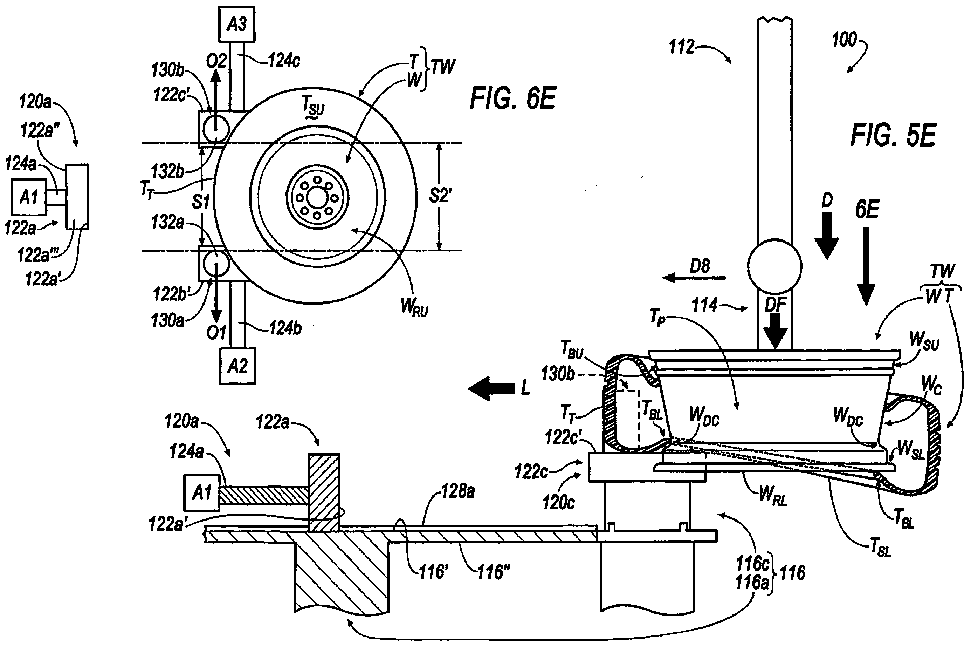

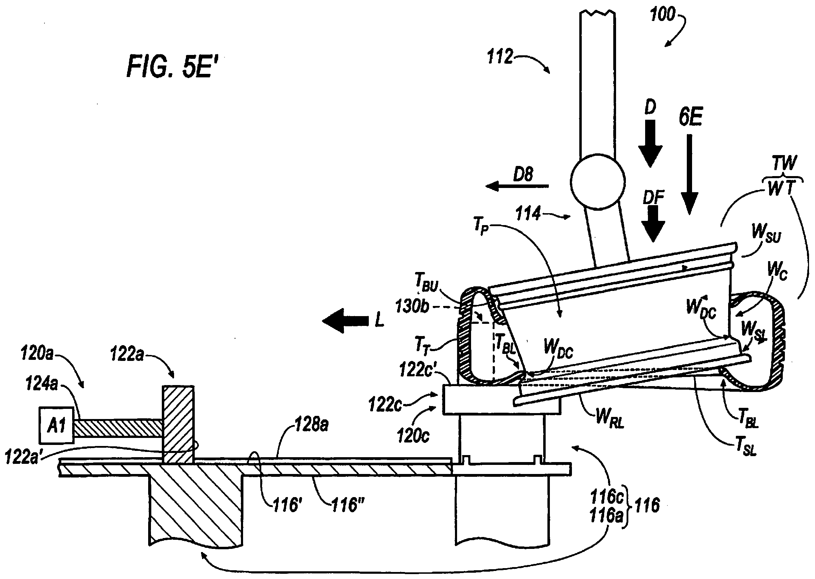

Referring to Figure 5E, the movement according to the direction of the arrow, D7, results in the wheel, W, "plunging" through the passage, T_{P}, of the tire, T, such that: (1) the first (e.g., left) portion of the lower bead seat, W_{SL}, and drop center, W_{DC}, of the wheel, W, are orientated out of the passage, T_{P}, of the tire, T, and in a spaced-apart, opposing orientation with the lower sidewall surface, T_{SL}, of the tire, T, and (2) a portion (e.g., a right portion) of a lower, outer rim surface, W_{RL}, of the wheel, W, (proximate the second (e.g., right) portion of the lower bead seat, W_{SL}, and drop center, W_{DC}, of the wheel, W), is disposed within the passage, T_{P}, of the tire, T, and adjacent to the second (e.g., right) portion of the lower bead, T_{BL}, of the tire, T.

Per the phantom lines of the body 122c of the third tire-engaging device 120c (as a result of the orientation of the wheel, W, and tire, T), the movement of the robotic arm 112 according to the direction of the arrow, D7, results in a portion of the wheel, W, being arranged in the gap or first spacing, S1, and the left tire chord, T_{C1} (see, e.g., corresponding top view Figure 6E), being arranged proximate but slightly to the right of the first and second tire-tread-engaging posts 130a, 130b such that a portion of the tire, T, is arranged in the gap or second spacing, S2', but not adjacent the first and second tire-tread-engaging posts 130a, 130b.

Because the gap or first spacing, S1, is approximately equal to but greater than a diameter, W_{D}, of the wheel, W, the robotic arm 112 is permitted to move the wheel, W, into / through the gap or first spacing, S1, and below the upper tire-sidewall-engaging surface 122b', 122c' of the body 122b, 122c of the second and third tire-engaging devices 120b, 120c; however, because the diameter, T_{D}, of the tire, T, is greater than that of the gap or first spacing, S1, the movement of robotic arm 112 prohibits movement of the tire, T, through the gap or first spacing, S1, with that of the wheel, W. As a result of the wheel, W, being permitted to pass through the gap or first spacing, S1, without the tire, T, the lower bead seat, W_{SL}, and drop center, W_{DC}, of the wheel, W, are permitted to "plunge" through (as seen in Figure 5E) the passage, T_{P}, of the tire, T.

As a result of the wheel, W, plunging through the passage, T_{P}, of the tire, T, a first (e.g., left) portion of the safety bead, W_{SB}, of the wheel, W, may be disposed substantially adjacent the first (e.g., left) portion of the upper bead, T_{BU}, of the tire, T. Further, as a result of the arrangement of the safety bead, W_{SB}, substantially adjacent the first (e.g., left) portion of the upper bead, T_{BU}, of the tire, T, and the arrangement of the portion of the lower, outer rim surface, W_{RL}, of the wheel, W, adjacent the second (e.g., right) portion of the lower bead, T_{BL}, of the tire, T, a substantially downwardly force, DF, is transmitted from the robotic arm 112, to the wheel, W, and to the contact points of the wheel, W, with the tire, T, described above at the safety bead, W_{SB}, and lower, outer rim surface, W_{RL}. The substantially downwardly force, DF, further causes a portion of the lower sidewall surface, T_{SL}, of the tire, T, to no longer be spaced-apart, but, adjacent with respect to and in direct contact with the upper surfaces 122b', 122c' of the second and third support members 116b, 116c; accordingly, the downwardly force, DF, is distributed from the wheel, W, and to the tire, T, and ultimately arrives at and is distributed to the upper surfaces 122b', 122c' of the second and third support members 116b, 116c.

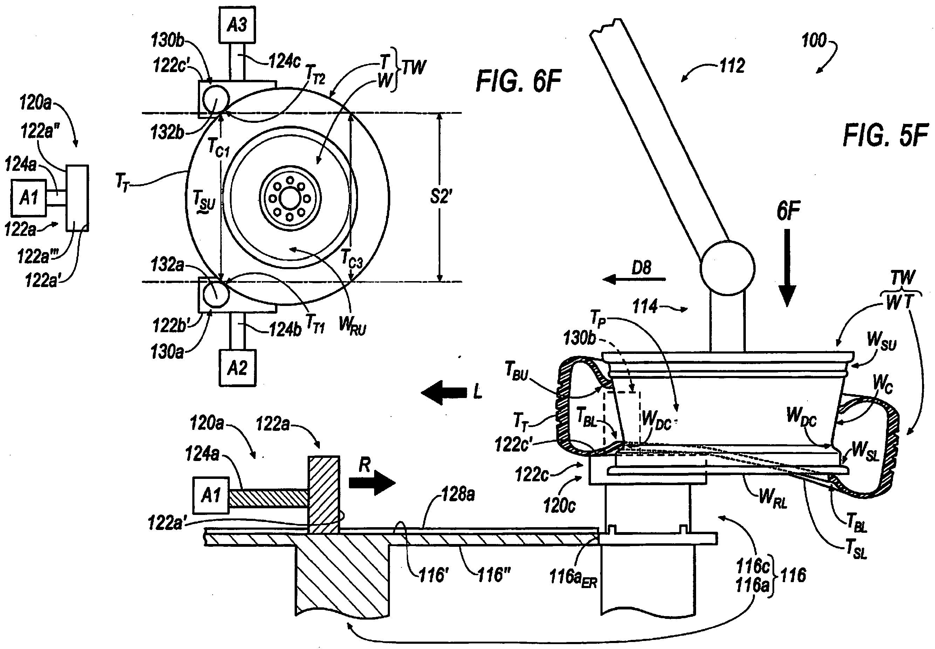

With continued reference to Figure 5E, an eighth movement according to the direction of arrow, D8, may cause a rearwardly (e.g., to the left, L) movement of the wheel, W. Referring to Figure 5F, as a result of the movement according to the direction of the arrows D1-D8, the lower bead, T_{BL}, of the tire, T, is arranged in a curved, substantially arcuate orientation over the sidewall-engaging surface 122b', 122c' of the body 122b, 122c of the second and third tire-engaging devices 120b, 120c. Further, as a result of the initial rearwardly (e.g., to the left, L) movement of the wheel, W, the tire, T, is advanced through the second spacing, S2', from the left chord, T_{C1}, to the right chord, T_{C3}; as seen in Figure 6F-6J, because chords (including, e.g., the central chord, T_{C2}) of the tire, T, between the left chord, T_{C1}, to the right chord, T_{C3}, are greater than that of the left chord, T_{C1}, and the right chord, T_{C3}, the first and second tire-tread-engaging posts 130a, 130b interfere with movement of the tire, T, through the second spacing, S2'. The interference of the first and second tire-tread-engaging posts 130a, 130b with the tire, T, includes the contacting of a first tread surface portion, T_{T1} (see, e.g., Figure 6F) and a second tread surface portion, T_{T2} (see, e.g., Figure 6F) of the tread surface, T_{T}, of the tire, T, with that of the tire-tread-engaging posts 130a, 130b.

Referring back to Figure 5D, the "plunging" action described above may result in, for example, the wheel, W, pushing upon the tire, T, such that the lower sidewall surface, T_{SL}, of the tire, T, contact the upper surfaces 122b', 122c' of the second and third support members 116b, 116c. Further, because the diameter, W_{D}, of the wheel, W, is larger than the diameter, To, of the tire, T, a portion of the lower bead, T_{BL}, of the tire, T (see, e.g., phantom portion of the lower bead, T_{BL}'), may be deformed or deflected in order to pass the wheel, W, through the passage, T_{P}, of the tire, T. Although such deformation / deflection permits the tire-wheel assembly, TW, to be processed, in some circumstances, the deformation / deflection may not be desirable (e.g., the integrity of the lower bead, T_{BL}, of the tire, T, may be unintentionally compromised).

In order to obviate the exemplary deformation, T_{BL}', of the tire, T, described above, the direction of the arrows, D5, D6 (from Figure 5C), may include a directional component that results in the wheel, W, being arranged at an offset angle with respect to the tire, T. As seen in Figure 5D', the lower sidewall surface, T_{SL}, of the tire, T, is arranged in a substantially parallel relationship with respect to the upper surfaces 122b', 122c' of the second and third support members 116b, 116c; the wheel, W, however, is not arranged in parallel with respect to the upper surfaces 122b', 122c' of the second and third support members 116b, 116c, and, as such, is arranged in a canted or angularly-offset relationship with respect to the tire, T. Referring to Figure 5E', as a result of the arrangement of the wheel, W, with respect to the tire, T, when the wheel, W, is plunged through the passage, T_{P}, of the tire, T, the portion of the lower bead, T_{BL}, of the tire, T, may be less likely to interfere with the movement of the wheel, W, and, as a result, the tire, T, is less likely to be deformed or deflected (as shown at T_{BL}' in Figure 5D) as the wheel, W, passes through the passage, T_{P}, of the tire, T.

Referring to Figure 6E, in an embodiment, the second and third actuators, A2, A3 may include, for example, motors that may retract the second and third tire-engaging devices 120b, 120c in a manner to arrange the first and second tire-tread-engaging posts 130a, 130b in order to provide the (variable) second spacing, S2'. Prior to the initial rearwardly (e.g., to the left, L) movement, of the wheel, W, and tire, T, the actuators, A2, A3, may cause an initial, partial retraction of the second and third tire-engaging devices 120b, 120c in a manner to arrange the first and second tire-tread-engaging posts 130a, 130b according to the direction of arrows, O1 02.

Referring to Figures 6F-6I, upon the initial rearwardly (e.g., to the left, L) movement of the wheel, W, the tire, T, is advanced through the second spacing, S2', without further actuation of the motors, A2, A3; accordingly the first and second tire-tread-engaging posts 130a, 130b remain in a fixed orientation and interfere with the tire, T, and press the tire, T, radially inwardly in a manner such that the tire, T, is temporality deformed such that the diameter, T_{P-D}, of the passage, T_{P}, of the tire, T, is temporality upset to include a substantially oval form rather than a circular form. Accordingly, in a substantially similar fashion, the upper tire opening diameter, T_{OU-D}, and the lower tire opening diameter, T_{OL-D}, are also temporality upset to include a substantially oval form rather than a circular form.

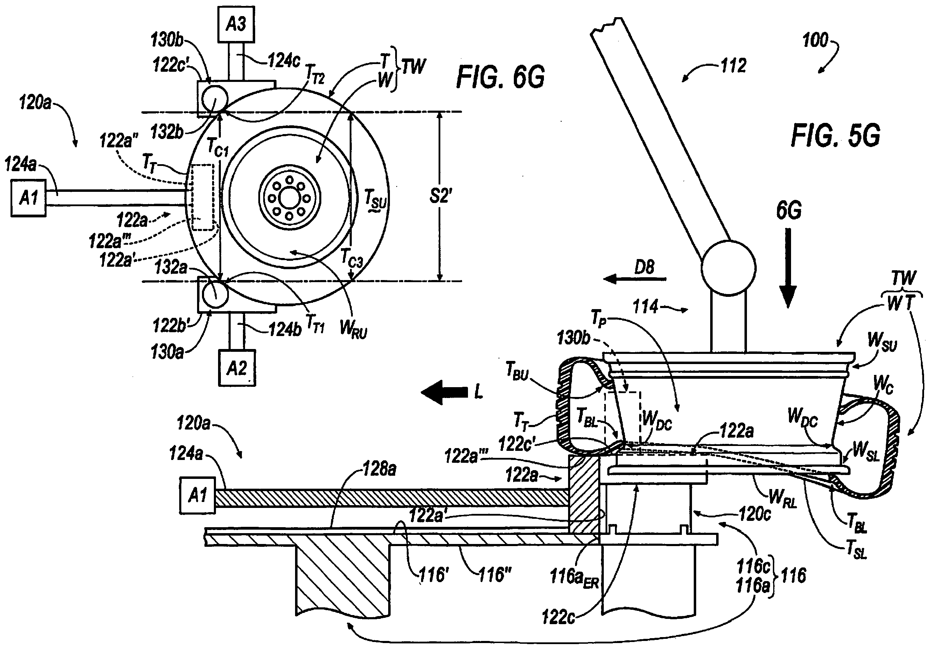

The oval form of the upper tire opening diameter, T_{OU-D}, and the lower tire opening diameter, T_{OL-D}, reduces a portion of contact (and, as a result, friction) of the lower bead, T_{BL}, and the upper bead, T_{BU}, of the tire, T, with that of the outer circumferential surface, W_{C}, of the wheel, W. Accordingly, referring to Figures 5G-5I and 6G-6I, as the wheel, W, advances the tire, T, through the second spacing, S2', the oval deformation of diameters, T_{P-D}, T_{OU-D}, T_{OL-D} results in the lower bead, T_{BL}, of the tire, T, encountering less resistance or interference with the outer rim surface, W_{R-L}, of the wheel, W, as the lower bead, T_{BL}, is advanced from being orientated opposite the outer rim surface, W_{RL}, to being arranged over the lower bead seat, W_{SL}, and to a final position adjacent the drop center, W_{DC}, of the wheel, W, as the tire, T, is advanced from the forwardly orientation (e.g., to the right, R) of the first and second tire-tread-engaging posts 130a, 130b back to the rearwardly orientation (e.g., to the left, L) of the first and second tire-tread-engaging posts 130a, 130b.

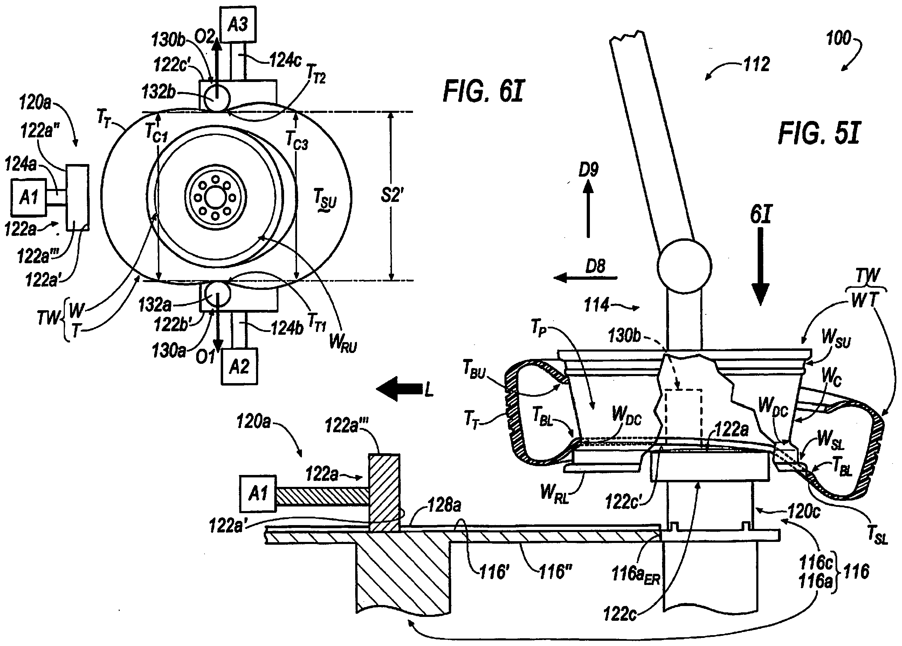

Referring to Figures 5I-5J and 6I-6J, once the central chord, T_{C2}, or the right chord, T_{C3}, has been advanced through the second spacing, S2', the motors, A2, A3, may be actuated in order to further retract the first and second tire-tread-engaging posts 130a, 130b outwardly according to the direction of the arrows, O1, 02. Accordingly, as seen in Figure 6J, the first and second tire-tread-engaging posts 130a, 130b may no longer contact the tread surface, T_{T}, of the tire, T. Further, as a result of the movement of the wheel, W, and tire, T, through the spacing, S2', the entire circumference of the lower bead, T_{BL}, is advanced to its final "mounted position" adjacent to and about the drop center, W_{DC}; further, the entire circumference of the upper bead, T_{BU}, is arranged in its final "mounted position" adjacent to and about the outer circumferential surface, W_{C}, of the wheel, W, proximate the safety bead, W_{SB}.

In addition to the result of the movement according to the direction of the arrow, D8, and the actuation of the actuators, A2, A3, referring to Figure 5F, the first actuator, A1, may be actuated in order to move the body 122a of the first tire-engaging device 120a in a forwardly (e.g., right, R) direction along the at least one male guide member 128a toward the forward end 116a_{ER} of the first support member 116a; the movement of the first tire-engaging device 120a by way of the actuator, A1, in the forwardly direction may be conducted just prior to, or, in conjunction with the rearwardly, (to the left, L) movement initiated by the robotic arm 112 according to the direction of the arrow, D8.

Referring to Figure 5G, when driven to the forward end 116a_{ER} of the first support member 116a, the upper surface 122a'" of the body 122a of the first tire-engaging device 120a may be substantially coplanar with the upper tire-sidewall-engaging surface 122b', 122c' of the body 122b, 122c of the second and third tire-engaging devices 120b, 120c. Accordingly, the upper surface 122a"' of the body 122a of the first tire-engaging device 120a may serve as an "extension surface" of the upper tire-sidewall-engaging surface 122b', 122c' of the body 122b, 122c of the second and third tire-engaging devices 120b, 120c. Referring to Figures 5H-5I, as the tire, T, through the second spacing, S2', rearwardly (e.g., to the left, L), the first actuator, A1, may be actuated in order to move the body 122a of the first tire-engaging device 120a in a correspondingly, rearwardly (e.g., left, L) direction along the at least one male guide member 128a away from the forward end 116a_{ER} of the first support member 116a.

With reference to Figure 5I, after mounting the tire, T, to the wheel, W, a ninth movement of the robotic arm 112 according to the direction of arrow, D9, may cause upwardly movement, U, of the wheel, W, and tire, T, away from the support member 116. The robotic arm 112 may move the tire-wheel assembly, TW, to, for example, a subsequent sub-station (not shown), such as, for example, an inflation sub-station in order to inflate the tire-wheel assembly, TW, which may cause the upper bead, T_{BU}, to be seated adjacent the upper bead seat, W_{SU}, and the lower bead, T_{BL}, to be seated adjacent the lower bead seat, W_{SL}.

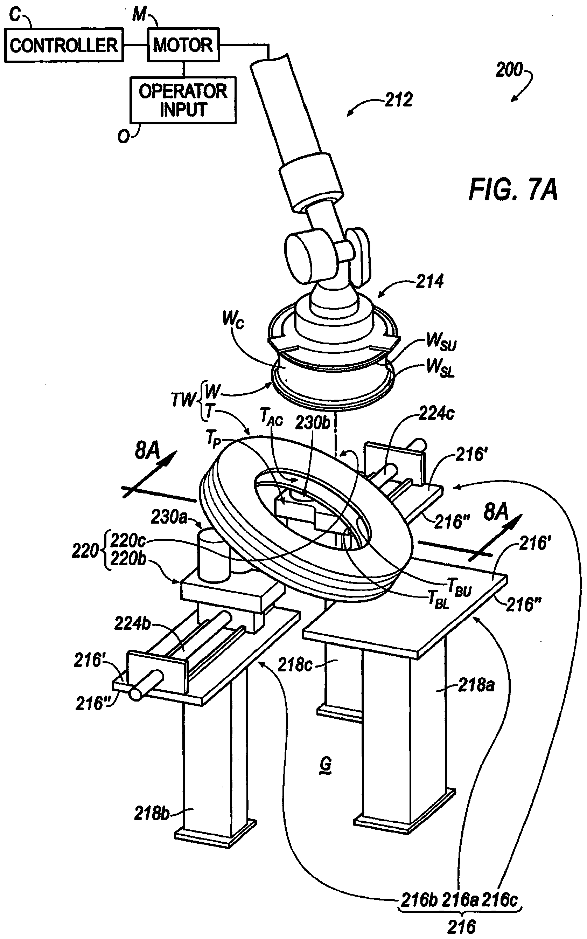

Referring to Figure 7A, a processing sub-station 200 for processing a tire-wheel assembly, TW, is shown according to an embodiment. The "processing" conducted by the processing sub-station 200 may include the act of "joining" or "mounting" a tire, T, to a wheel, W, for forming the tire-wheel assembly, TW. The act of "joining" or "mounting" may mean to physically couple, connect or marry the tire, T, and wheel, W, such that the wheel, W, may be referred to as a male portion that is inserted into a passage, T_{P}, of a tire, T, being a female portion.

As described and shown in the following Figures, although the desired result of the processing sub-station 200 is the joining or mounting of the tire, T, and wheel, W, to form a tire-wheel assembly, TW, it should be noted that the processing sub-station 200 does not inflate the circumferential air cavity, T_{AC}, of the tire, T, of the tire-wheel assembly, TW, nor does the processing sub-station 200 contribute to an act of "seating" the upper bead, T_{BU}, or the lower bead, T_{BL}, of the tire, T, adjacent the upper bead seat, W_{SU}, and the lower bead seat, W_{SL}, of the wheel, W (because the act of "seating" typically arises from an inflating step where the tire-wheel assembly, TW, is inflated). Accordingly, upon joining or mounting the tire, T, to the wheel, W, the upper bead, T_{BU}, or the lower bead, T_{BL}, of the tire, T, may be arranged about and/or disposed adjacent the outer circumferential surface, W_{C}, of the wheel, W.

In an implementation, the processing sub-station 200 may be included as part of a "single-cell" workstation. A single-cell workstation may include other sub-stations (not shown) that contribute to the processing of a tire-wheel assembly, TW; other sub-stations may include, for example: a soaping sub-station, a stemming sub-station, an inflating sub-station, a match-marking sub-station, a balancing sub-station and the like. The term "single-cell" indicates that the sub-stations contribute to the production of a tire-wheel assembly, TW, without requiring a plurality of successive, discrete workstations that may otherwise be arranged in a conventional assembly line such that a partially-assembled tire-wheel assembly, TW, is "handed-off" along the assembly line (i.e., "handed-off" meaning that an assembly line requires a partially-assembled tire-wheel assembly, TW, to be retained by a first workstation of an assembly line, worked on, and released to a subsequent workstation in the assembly line for further processing). Rather, a single cell workstation provides one workstation having a plurality of sub-stations each performing a specific task in the process of assembling a tire-wheel assembly, TW. This assembling process takes place wherein the tire and/or wheel "handing-off" is either minimized or completely eliminated. As such, a single-cell workstation significantly reduces the cost and investment associated with owning/renting the real estate footprint associated with a conventional tire-wheel assembly line while also having to provide maintenance for each individual workstation defining the assembly line. Thus, capital investment and human oversight is significantly reduced when a single cell workstation is employed in the manufacture of tire-wheel assemblies, TW.

Referring to Figure 7A, the processing sub-station 200 includes a device 212. The device212 may be referred to as a robotic arm. The robotic arm 212 may be located in a substantially central position relative to a plurality of sub-stations (including, e.g., the processing sub-station 200) of a single-cell workstation. The robotic arm 212 may be attached to and extend from a base / body portion (not shown) connected to ground, G.

The robotic arm 212 may include an end effecter 214. The end effecter 214 may include a claw, gripper, or other means for removably-securing the wheel, W, to the robotic arm 212. The end effecter 214 permits the robotic arm 212 to have the ability to retain and not release the wheel, W, throughout the entire procedure performed by the processing sub-station 200 (and, if applied in a single-cell workstation, the ability to retain and not release the wheel, W, throughout the entire assembling procedure of the tire-wheel assembly, TW). Accordingly, the end effecter 214 minimizes or eliminates the need of the robotic arm 212 to "hand-off" the tire-wheel assembly, TW, to (a) subsequent sub-station(s) (not shown).

The processing sub-station 200 may perform several functions / duties including that of: (1) a tire repository sub-station and (2) a mounting sub-station. A tire repository sub-station typically includes one or more tires, T, that may be arranged in a "ready" position for subsequent joining to a wheel, W. A mounting sub-station typically includes structure that assists in the joining of a tire, T, to a wheel, W (e.g., the disposing of a wheel, W, within the passage, T_{P}, of the tire, T).

Referring to Figure 7A, the processing sub-station 200 may be initialized by joining a wheel, W, to the robotic arm 212 at the end effecter 214. The processing sub-station 200 may also be initialized by positioning the tire, T, upon a support member 216. The support member 216 may include a first support member 216a, a second support member 216b and a third support member 216c. Each of the first, second and third support members 216a, 216b, 216c include an upper surface 216' and a lower surface 216".

The lower surface 216" of each of the first, second and third support members 216a, 216b, 216c may be respectively connected to at least one first leg member 218a, at least one second leg member 218b and at least one third leg member 218c. Each of the at least one first, second and third leg members 218a, 218b, 218c respectively include a length for elevating or spacing each of the first, second and third support members 216a, 216b, 216c from an underlying ground surface, G. Although the robotic arm 212 is not directly connected to the support member 216 (but, rather may be connected to ground, G), the robotic arm 212 may be said to be interfaceable with (as a result of the movements D1-D6 described in the following disclosure) and/or indirectly connected to the support member 216 by way of a common connection to ground, G, due the leg members 218a-218c connecting the support member 216 to ground, G.

The processing sub-station 200 may further include a plurality of tire-engaging devices 220. The plurality of tire-engaging devices 220 may include a first tire-engaging device 220b connected to the upper surface 216' of the second support member 216b and a second tire-engaging device 220c connected to the upper surface 216' of the third support member 216c.

In reference to the processing sub-station 10 of Figures 1A-3J, the plurality of tire-engaging devices 20 may be said to be in a fixed orientation with respect to the upper surface 16' of each of the first, second and third support members 16a, 16b, 16c. However, as will be described in the following disclosure, the plurality of tire-engaging devices 220 of the processing sub-station 200 may be said to be in a non-fixed, moveable orientation with respect to the upper surface 216' of each of the second and third support members 216b, 216c. Further, in comparison the processing sub-station 10, the processing sub-station 200 does not include a tire-engaging device connected to the first support member 216a; accordingly the processing sub-station 200 includes the first and second tire-engaging device 220b, 220c connected to the second and third support members 216b, 216c.

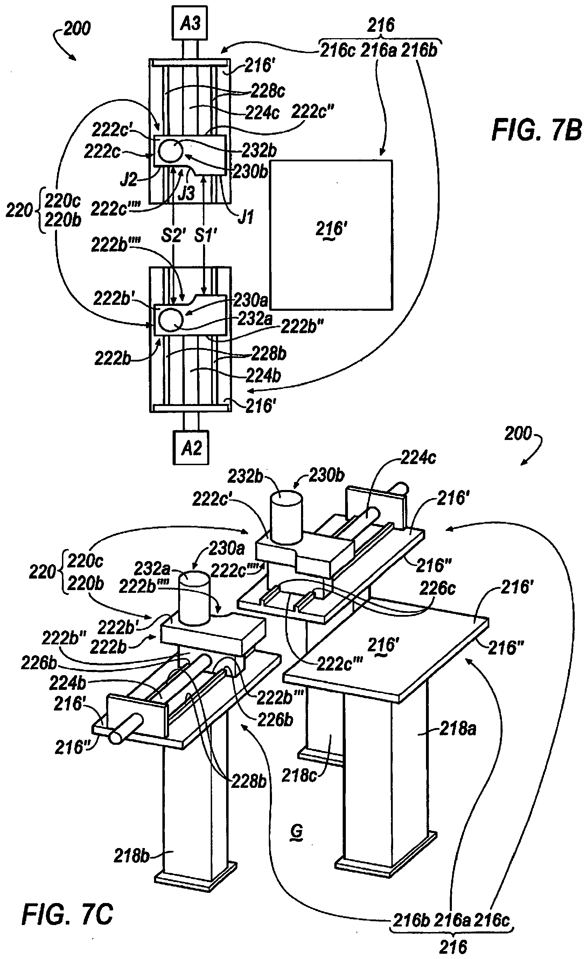

Referring to Figures 7B-7C, each of the first and second tire-engaging devices 220b, 220c may include a body 222b, 222c having an upper tire-sidewall-engaging surface 222b', 222c' a rear side surface 222b", 222c" (see, e.g., Figure 7B), a lower surface 222b"', 222c"' (see, e.g., Figure 7C) and a side, wheel-circumference-engaging surface 222b"", 222c"". The geometry of the side, wheel-circumference-engaging surface 222b"", 222c"" defines the upper tire-sidewall-engaging surface 222b', 222c' of the first and second tire-engaging devices 220b, 220c to include a substantially "L shape" or "J shape." For example, as seen in Figures 7B and 7C, each of the side, wheel-circumference-engaging surfaces 222b"", 222c"" include a first, substantially linear segment, J1, and a second, substantially linear segment, J2, that are connected by a third, substantially arcuate segment, J3.

The upper sidewall-engaging surfaces 222b', 222c' of the first and second tire-engaging devices 220b, 220c may be co-planar with one another. The upper sidewall-engaging surfaces 222b', 222c' of the second and third tire-engaging devices 220b, 220c may be arranged in a spaced-apart relationship with respect to ground, G, that is greater than that of the spaced-apart relationship of the upper surface 216' of the first support member 216a; accordingly, the upper sidewall-engaging surfaces 222b', 222c' of the first and second tire-engaging devices 220b, 220c may be arranged in a non-co-planar relationship with respect to the upper surface 216' of the first support member 216a.

The rear side surface 222b" of the body 222b of the first tire-engaging device 220b may be connected to a first rod 224b. The first rod 224b may be connected to a first actuator, A2. The lower surface 222b'" of the body 222b of the first tire-engaging device 220b may include at least one female recess 226b. The at least one female recess 226b receives at least one male guide member 228b connected to the upper surface 216' of the second support member 116b.

The rear side surface 222c" of the body 222c of the second tire-engaging device 220c may be connected to a second rod 224c. The second rod 224c may be connected to a second actuator, A3. The lower surface 222c'" of the body 222c of the second tire-engaging device 220c may include at least one female recess 226c. The at least one female recess 226c receives at least one male guide member 228c connected to the upper surface 216' of the third support member 216c.

The rods 224b-224c, female recesses 226b-226c and male guide members 228b-228c may assist in or contribute to the movement of the plurality of tire-engaging devices 220 relative the upper surface 216' of each of the second and third support members 216b, 216c. For example, each of the first and second rods 224b, 224c may providing a driving force and/or a reactive force (e.g., by way of a spring) to, respectively, the first, and second tire-engaging devices 220b, 220c, in order to respectively cause or react to forward or backward movement of the first and second tire-engaging devices 220b, 220c. If a spring is part of or included with one or more of the actuators A2, A3, the spring may bias one or more of the first and second rods 224b, 224c to a particular orientation; accordingly, if an object, such as, for example, one or more of the tire, T, and wheel, W, pushes or exerts a force upon one or more of the first and second tire-engaging devices 220b, 220c, the reactive / biasing force may act upon one or more of the first and second tire-engaging devices 220b, 220c in order to regulate movement relative to the upper surface 216' of one or more of the second and third support members 216b, 216c. The female recesses 226b-226c and male guide members 228b-228c may assist in providing linear movement of the first and second tire-engaging devices 220b, 220c relative to the upper surface 216' of the second and third support members 216b, 216c.

With continued reference to Figures 7B-7C, a first tire-tread-engaging post 230a may extend from the upper tire-sidewall-engaging surface 222b' of the first tire-engaging device 220b. A second tire-tread-engaging post 230b may extend from the upper tire-sidewall-engaging surface 222c' of the second tire-engaging device 220c. Each of the first and second tire-tread-engaging posts 230a, 230b include an upper tire-sidewall-engaging surface 232a, 232b.

Referring to Figure 7B, the side, wheel-circumference-engaging surface 222b"", 222c"" of the first and second tire-engaging devices 220b, 200c are separated by a gap or first spacing, S1'. The first tire-tread-engaging post 230a is separated from the second tire-tread-engaging post 230b by a gap or second spacing, S2'. The second spacing, S2', may be greater than the first spacing, S1'. The first spacing, S1', may be approximately equal to, but slightly less than the diameter, W_{D}, of the wheel, W; further, the tire diameter, T_{D}, / central chord, T_{C2}, may be greater than the first spacing, S1'. The second spacing, S2', may be approximately equal to the left chord, T_{C1}, and the right chord, T_{C3}, of the tire, T; further, the tire diameter, T_{D}, / central chord, T_{C2}, may be greater than the second spacing, S2'.

Because the first spacing, S1', of the processing sub-station 200 is referenced from the side, wheel-circumference-engaging surface 222b"", 222c"", the first spacing, S1', is different than that of the first spacing, S1, of the processing sub-stations 10, 100. Further, the first spacing, S1', of the processing sub-station is differentiated from the first spacing, S1, of the processing sub-stations 10, 100 due to the fact that the first spacing, S1', is associated with the moveable first and second tire-engaging devices 220b, 220c; accordingly, the first spacing, S1', may be referred to as a "variable" or "adjustable" first spacing, S1'..

The second spacing, S2', of the processing sub-station 200 is substantially similar to the second spacing, S2', of the processing sub-station 100 due to the fact that the first and second tire-engaging devices 220b, 220c are movable (as compared to the second and third tire-engaging devices 120b, 120c of the processing sub-station 100). Accordingly, the second spacing, S2', of the processing sub-station 200 may be referred to as a "variable" or "adjustable" second spacing, S2'.

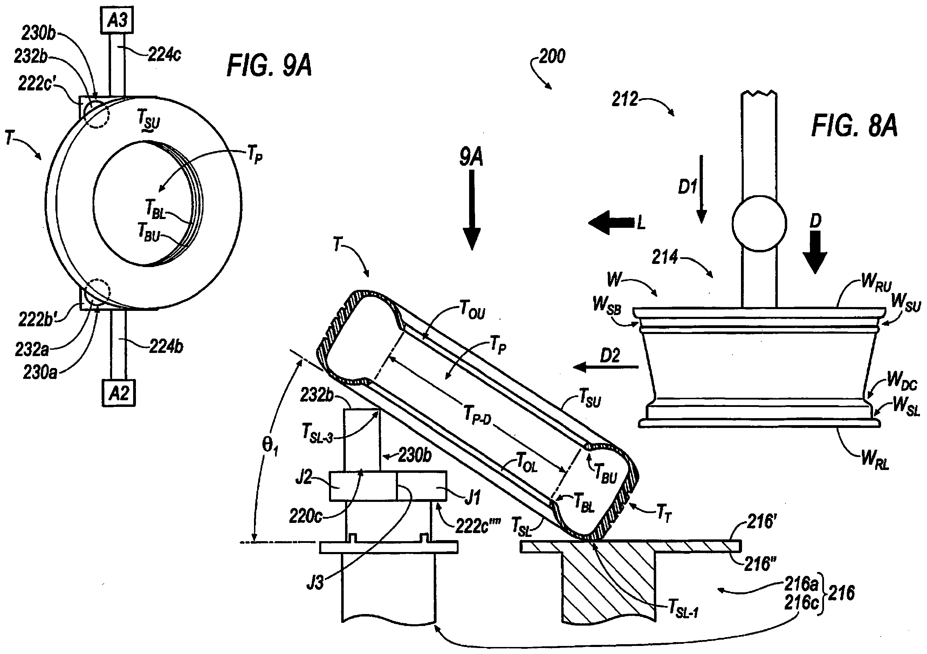

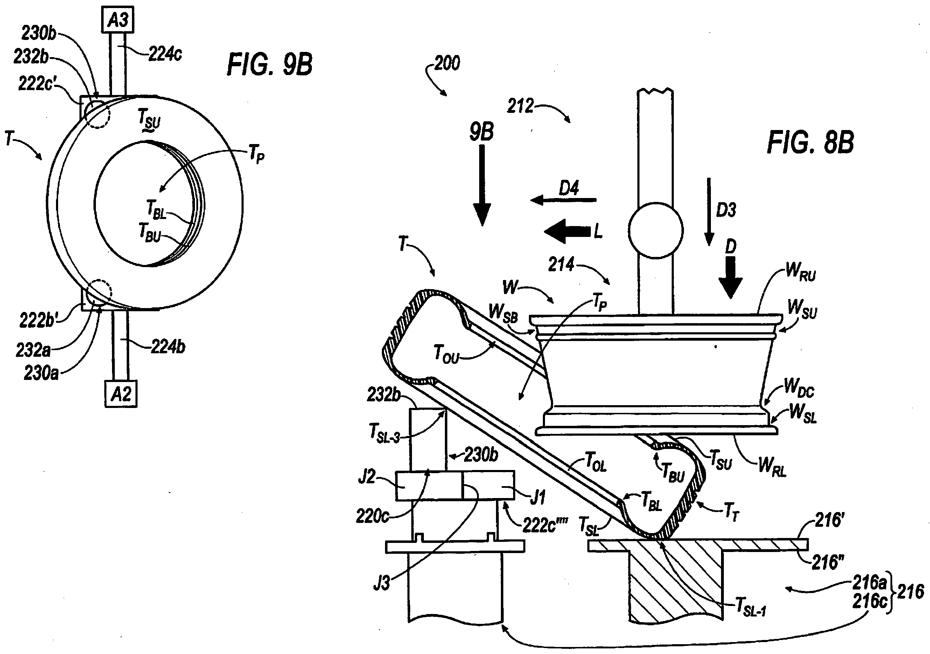

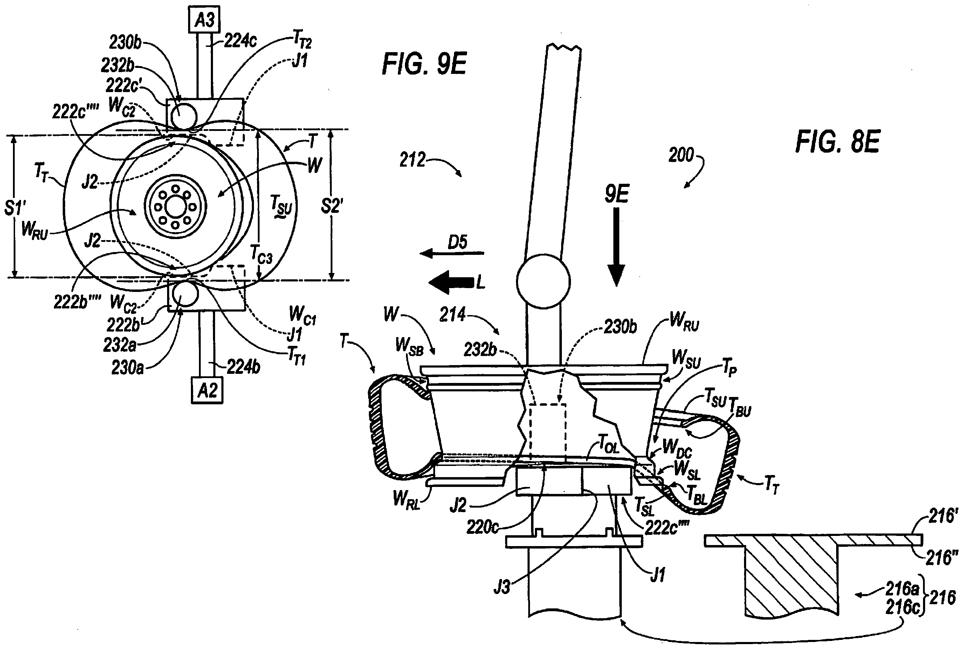

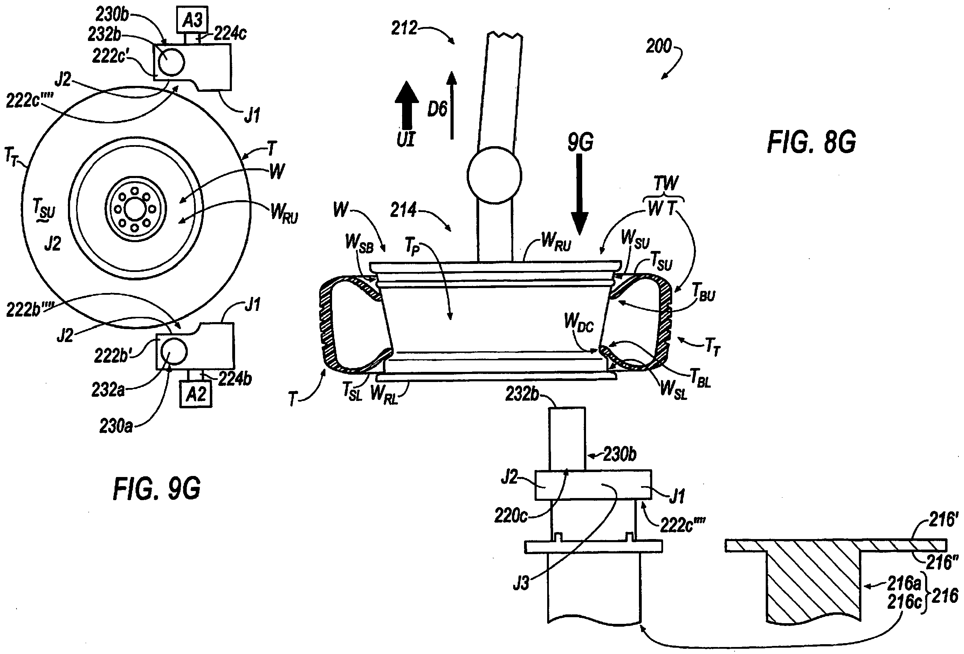

As seen in Figure 7A with reference to Figures 8A and 9A, prior to joining the tire, T, to the wheel, W, the tire, T, may be said to be arranged in a first relaxed, unbiased orientation such that the upper tire opening, T_{OU}, and the lower tire opening, T_{OL}, define the passage, T_{P}, to include a diameter, T_{P-D}. When the tire, T, is joined to the wheel, W (see, e.g., Figures 8G and 9G), the upper bead, T_{BU}, and the lower bead, T_{BL}, may be arranged proximate but not seated adjacent, respectively, the upper bead seat, W_{SU}, and the lower bead seat, W_{SL}, of the wheel, W; later, upon inflating the tire, T, at, e.g., an inflation sub-station (not shown), the upper bead, T_{BU}, and the lower bead, T_{BL}, may be seated (i.e., disposed adjacent), respectively, the upper bead seat, W_{SU}, and the lower bead seat, W_{SL}, of the wheel, W. Further, when the tire, T, is joined to the wheel, W (see, e.g., Figures 8G and 9G), the tire, T, may be said to be arranged in a second substantially relaxed, but somewhat biased orientation such that the diameter, T_{P-D}, of the passage, T_{P}, is substantially circular and substantially similar to its geometry of the first relaxed, unbiased orientation of the tire, T.

Referring to Figure 8A, the robotic arm 212 is arranged in a spaced-apart orientation with respect to the support member 216, which includes the tire, T, arranged in a "ready" position. The "ready" position may include a portion of one or more of the lower sidewall surface, T_{SL}, and the tread surface, T_{T}, of the tire, T, arranged adjacent the upper surface 216' of the first support member 216a. Referring to Figure 8A, the "ready" position may further include the tire, T, being arranged in a first angularly-offset orientation, θ₁, with respect to the upper surface 116' of the first support member 116a.

The first angularly-offset orientation, θ₁, of the tire, T, may result from the non-co-planar relationship the upper sidewall-engaging surfaces 222b', 222c' of the first and second tire-engaging devices 220b, 220c with that of the upper surface 216' of the first support member 216a such that: (1) the first portion, T_{SL-1}, of the lower sidewall surface, T_{SL}, being arranged adjacent the upper surface 216' of the first support member 216a, (2) the second portion, T_{SL-2}, of the lower sidewall surface, T_{SL}, being arranged adjacent a portion of the upper tire-sidewall-engaging surface 232a of the first tire-tread-engaging post 230a of the first tire-engaging device 220b (noting that the second portion, T_{SL-2}, is not represented in Figure 8A due to the cross-sectional reference line of Figure 7A), and (3) a third portion, T_{SL}-3, of the lower sidewall surface, T_{SL}, being arranged adjacent a portion of the upper tire-sidewall-engaging surface 232b of the second tire-tread-engaging post 230b of the second tire-engaging device 220c. Accordingly, the support member 216 may provide a three-point support (which is more clearly shown at Figure 7A) at T_{SL-1}, T_{SL-2}, T_{SL-3} for the lower sidewall surface, T_{SL}, of the tire, T, while remaining portions of the lower sidewall surface, T_{SL}, of the tire, T, are not in direct contact with any other portion of the upper surface surfaces 216', 232a, 232b of the support member 216 when the tire, T, is arranged in the first angularly-offset orientation, θ₁.

The processing sub-station 200 may execute a mounting procedure by causing a controller, C (see, e.g., Figure 7A) to send one or more signals to a motor, M (see, e.g., Figure 7A), that drives movement (according to the direction of the arrows, D1-D6 - see Figures 8A-8G) of the robotic arm 212. Alternatively or in addition to automatic operation by the controller, C, according to inputs stored in memory, the movement, D1-D6, may result from one or more of a manual, operator input, O (e.g., by way of a joystick, depression of a button or the like).

As seen in Figure 8A, a first, down, D, movement according to the direction of arrow, D1, may reduce the spaced-apart orientation of robotic arm 212 with respect to the support member 216. A second movement according to the direction of arrow, D2, may cause the end effecter 214 to move the wheel, W, rearwardly (e.g., to the left, L) toward the tire, T. The movement according to the direction of the arrows, D1, D2, may be conducted separately or simultaneously, as desired.

Referring to Figure 8B, the movement according to the direction of the arrows, D1, D2, may cease upon locating a first (e.g., left) portion of the lower bead seat, W_{SL}, and drop center, W_{DC}, of the wheel, W, within the passage, T_{P}, of the tire, T. With continued reference to Figure 8B, a third movement according to the direction of arrow, D3, may cause further downwardly, D, movement of the wheel, W. A fourth movement according to the direction of arrow, D4, may cause further rearwardly (e.g., to the left, L) movement of the wheel, W. The movement according to the direction of the arrows, D3, D4, may be conducted separately or simultaneously, as desired.

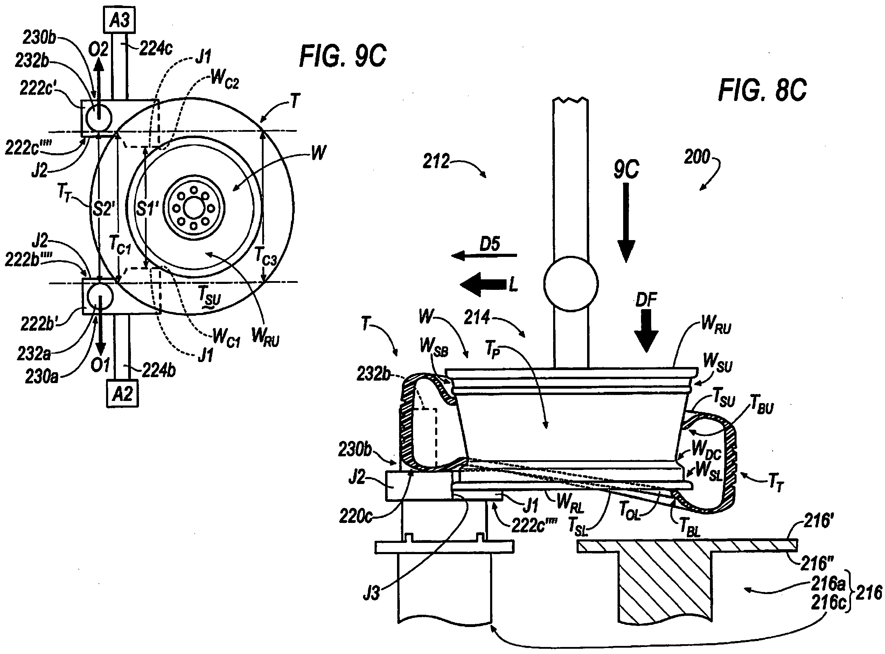

Referring to Figure 8C, the movement according to the direction of the arrows, D3, D4, may cause the tire, T, to rotate (e.g., in a counter-clockwise direction) as a result of the wheel, W, pushing or exerting a downwardly, D, force upon the tire, T. Accordingly, the portion (e.g., T_{SL-1}) of the lower sidewall surface, T_{SL}, of the tire, T, is no longer arranged adjacent the upper surface 216' of the first support member 216a. Further, as a result of the downwardly, D, force upon the tire, T, the lower sidewall surface, T_{SL}, of the tire, T, no longer is arranged adjacent the upper tire-sidewall-engaging surface 232a, 232b of the first and second tire-tread-engaging posts 230a, 230b. Thus, the tire, T, may no longer be arranged adjacent the support member 216 at three points of support; rather, the second and third portions (e.g., T_{SL-2}, T_{SL-3}) that were formerly disposed adjacent the upper tire-sidewall-engaging surface 232a, 232b of the first and second tire-tread-engaging posts 230a, 230b are displaced downwardly, D, and contact the upper tire-sidewall-engaging surface 222b', 222c' of the first and second tire-engaging devices 220b, 220c to thereby provide two points of support for the lower sidewall surface, T_{SL}, of the tire, T. As a result the orientation of the tire, T, being supported upon the upper tire-sidewall-engaging surface 222b', 222c' of the first and second tire-engaging devices 220b, 220c, the tire, T, is no longer arranged at the first angularly-offset orientation, θ₁, with respect to the support member 216.

Further, as seen in Figure 8C, the movement according to the direction of the arrows, D3, D4, may result in the wheel, W, being disposed within the passage, T_{P}, of the tire, T, and partially connected to the tire, T, such that the robotic arm 212 utilizes the wheel, W, to move rearwardly (e.g., to the left, L) such that the tire, T, is moved from the "ready" position to a "partially mounted" position.. With reference to Figure 9C, which is a top view of Figure 8C, the tread surface, T_{T}, of the tire, T, is arranged proximate, but in a space-apart relationship with respect to the first and second tire-tread-engaging posts 230a, 230b.

Referring to Figure 8C, the movement according to the direction of the arrow, D3, D4 results in the wheel, W, "plunging" through the passage, T_{P}, of the tire, T, such that: (1) the first (e.g., left) portion of the lower bead seat, W_{SL}, and drop center, W_{DC}, of the wheel, W, are orientated out of the passage, T_{P}, of the tire, T, and in a spaced-apart, opposing orientation with the lower sidewall surface, T_{SL}, of the tire, T, and (2) a portion (e.g., a right portion) of a lower, outer rim surface, W_{RL}, of the wheel, W, (proximate the second (e.g., right) portion of the lower bead seat, W_{SL}, and drop center, W_{DC}, of the wheel, W), is disposed within the passage, T_{P}, of the tire, T, and adjacent to the second (e.g., right) portion of the lower bead, T_{BL}, of the tire, T. Because the gap or first spacing, S1', is approximately equal to but less than the diameter, T_{D}, of the tire, T, the tire, T, is not permitted to move into / through the gap or first spacing, S1', and below the upper tire-sidewall-engaging surface 222b', 222c' of the body 222b, 222c of the first and second tire-engaging devices 220b, 220c.

Further, as seen in Figures 8C and 9C, the movement of the robotic arm 212 according to the direction of the arrows, D3, D4 results in a portion of the wheel, W, being arranged between the side, wheel-circumference-engaging surface 222b"", 222c"" of the first and second tire-engaging devices 220b, 200c such that a first and second portion, W_{C1}, W_{C2}, of the circumference, W_{C}, of the wheel, W, respectively engages the side, wheel-circumference-engaging surface 222b"", 222c"" of the first and second tire-engaging devices 220b, 200c; further, the wheel, W, may be said to be arranged in the gap or first spacing, S1'. Further, the movement of the robotic arm 212 results in the left tire chord, T_{C1}, being arranged proximate but slightly to the right of the first and second tire-tread-engaging posts 230a, 230b such that a portion of the tire, T, may be said to be arranged in the gap or second spacing, S2', but not adjacent the first and second tire-tread-engaging posts 230a, 230b.

As a result of the wheel, W, plunging through the passage, T_{P}, of the tire, T, a first (e.g., left) portion of the safety bead, W_{SB}, of the wheel, W, is disposed adjacent the first (e.g., left) portion of the upper bead, T_{BU}, of the tire, T. Further, as a result of the arrangement of the safety bead, W_{SB}, adjacent the first (e.g., left) portion of the upper bead, T_{BU}, of the tire, T, and the arrangement of the portion of the lower, outer rim surface, W_{R-L}, of the wheel, W, adjacent the second (e.g., right) portion of the lower bead, T_{BL}, of the tire, T, a substantially downwardly force, DF, is transmitted from the robotic arm 212, to the wheel, W, and to the contact points of the wheel, W, with the tire, T, described above at the safety bead, W_{SB}, and lower, outer rim surface, W_{RL}. The substantially downwardly force, DF, further causes a portion of the lower sidewall surface, T_{SL}, of the tire, T, to no longer be spaced-apart, but, adjacent with respect to and in direct contact with the upper surfaces 222', 222c' of the first and second tire-engaging devices 220b, 220c; accordingly, the downwardly force, DF, is distributed from the wheel, W, and to the tire, T, and ultimately arrives at and is distributed to the upper surfaces 222b', 222c' of the first and second tire-engaging members 220b, 220c.

With continued reference to Figure 8C, a fifth movement according to the direction of arrow, D5, may cause a rearwardly (e.g., to the left, L) movement of the wheel, W. Referring to Figure 5D, as a result of the movement according to the direction of the arrows D1-D5, the lower bead, T_{BL}, of the tire, T, is arranged in a curved, substantially arcuate orientation over the sidewall-engaging surface 222b', 222c' of the body 222b, 222c of the first and second tire-engaging devices 220b, 220c.

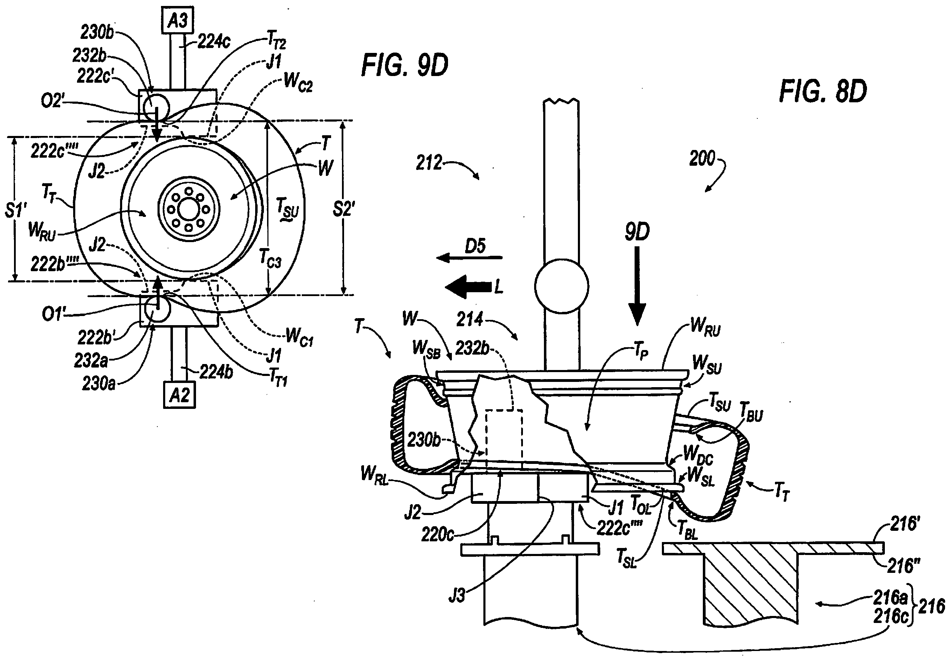

As a result of the initial rearwardly (e.g., to the left, L) movement of the wheel, W, the wheel, W, is advanced through the first spacing, S1', as the tire, T, is advanced through the second spacing, S2', from the left chord, T_{C1}, to the right chord, T_{C3}. As seen in Figure 9D-9F, because chords (including, e.g., the central chord, T_{C2}) of the tire, T, between the left chord, T_{C1}, to the right chord, T_{C3}, are greater than that of the left chord, T_{C1}, and the right chord, T_{C3}, the first and second tire-tread-engaging posts 230a, 230b interfere with movement of the tire, T, through the second spacing, S2'. The interference of the first and second tire-tread-engaging posts 230a, 230b with the tire, T, includes the contacting of a first tread surface portion, T_{T1}, and a second tread surface portion, T_{T2}, of the tread surface, T_{T}, of the tire, T, with that of the tire-tread-engaging posts 230a, 230b.

Further, as a result of the initial rearwardly (e.g., to the left, L) movement of the wheel, W, as seen in Figure 9D-9F, because the diameter, W_{D}, of the wheel, W, is greater than that of the first spacing, S1', the side, wheel-circumference-engaging surface 222b"", 222c"" of the first and second tire-engaging devices 220b, 200c interfere with movement of the wheel, W, through the first spacing, S1'. The interference of the side, wheel-circumference-engaging surface 222b"", 222c"" of the first and second tire-engaging devices 220b, 200c with the wheel, W, includes the contacting of the first and second portion, W_{C1}, W_{C2}, of the circumference, W_{C}, of the wheel, W, with that of the side, wheel-circumference-engaging surface 222b"", 222c"" of the first and second tire-engaging devices 220b, 200c.

In an embodiment, first and second actuators, A2, A3 may include, for example, motors that may retract / deploy the first and second tire-engaging devices 220b, 220c in a manner to provide the (variable) first and second spacings, S1', S2'. Referring to Figures 9C-9D, upon the initial rearwardly (e.g., to the left, L) movement of the wheel, W, the first and second portion, W_{C1}, W_{C2}, of the circumference, W_{C}, of the wheel, W, directly contact the first, substantially linear segment, J1, of the side, wheel-circumference-engaging surface 222b"", 222c"" of the first and second tire-engaging devices 220b, 200c; as a result, the first and second actuators, A2, A3, cause the first and second tire-engaging devices 220b, 200c to retract and move outwardly (i.e., away from one another) according to the direction of the arrows, O1, 02.

Referring to Figure 9D, as the wheel, W, is moved rearwardly (e.g., to the left, L), just as the first and second portion, W_{C1}, W_{C2}, of the circumference, W_{C}, of the wheel, W, cease direct contact of the first, substantially linear segment, J1, of the side, wheel-circumference-engaging surface 222b"", 222c"" of the first and second tire-engaging devices 220b, 220c, the first and second actuators, A2, A3, cause the first and second tire-engaging devices 220b, 200c to deploy and move inwardly (i.e., toward one another) according to the direction of the arrows, O1', O2', which is opposite the direction of the arrows, O1, 02. Referring to Figure 9E, as a result of further rearwardly (e.g., to the left, L) movement of the wheel, W, and, as a result of the deployment, according to the direction of the arrows, O1', 02', of the first and second tire-engaging devices 220b, 200c, the first and second portion, W_{C1}, W_{C2}, of the circumference, W_{C}, of the wheel, W, directly contact the second, substantially linear segment, J2, of the side, wheel-circumference-engaging surface 222b"", 222c"" of the first and second tire-engaging devices 220b, 200c.

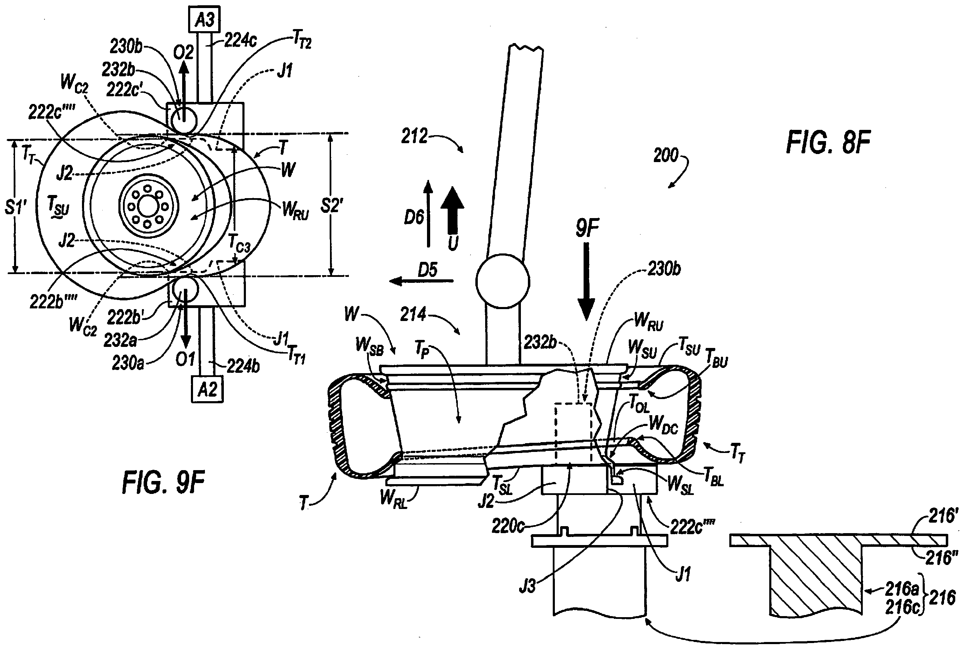

Referring to Figure 9F, as the wheel, W, is moved rearwardly (e.g., to the left, L), just as the first and second portion, W_{C1}, W_{C2}, of the circumference, W_{C}, of the wheel, W, cease direct contact of the second, substantially linear segment, J2, of the side, wheel-circumference-engaging surface 222b"", 222c"" of the first and second tire-engaging devices 220b, 220c, the first and second actuators, A2, A3, cause the first and second tire-engaging devices 220b, 200c to retract and move outwardly (i.e., in opposite directions) according to the direction of the arrows, O1, O2, which is opposite the direction of the arrows, O1', O2'. Referring to Figure 9G, as a result of further rearwardly (e.g., to the left, L) movement of the wheel, W, and, as a result of the retraction, according to the direction of the arrows, O1, O2, of the first and second tire-engaging devices 220b, 220c, the first and second portion, W_{C1}, W_{C2}, of the circumference, W_{C}, of the wheel, W, no longer contact the second, substantially linear segment, J2, of the side, wheel-circumference-engaging surface 222b"", 222c"".

During the contact of the side, wheel-circumference-engaging surface 222b"", 222c"" of the first and second tire-engaging devices 220b, 200c with the wheel, W, as described above, the tire, T, is concurrently advanced through the second spacing, S2'. Although each of the first and second tire-tread-engaging posts 230a, 230b is concurrently moved with its corresponding side, wheel-circumference-engaging surface 222b"", 222c"", the second spacing S2', includes a geometry that results in interference with the tire, T, in order to cause the first and second tire-tread-engaging posts 230a, 230b to press the tire, T, radially inwardly in a manner such that the tire, T, is temporality deformed. As a result of the tire, T, being deformed, the diameter, T_{P-D}, of the passage, Tp, of the tire, T, is temporality upset to include a substantially oval form rather than a circular form. Accordingly, in a substantially similar fashion, the upper tire opening diameter, T_{OU-D}, and the lower tire opening diameter, T_{OL-D}, are also temporality upset to include a substantially oval form rather than a circular form.

The oval form of the upper tire opening diameter, T_{OU-D}, and the lower tire opening diameter, T_{OL-D}, reduces a portion of contact (and, as a result, friction) of the lower bead, T_{BL}, and the upper bead, T_{BU}, of the tire, T, with that of the outer circumferential surface, W_{C}, of the wheel, W. Accordingly, referring to Figures 8D-8F and 9D-9F, as the wheel, W, advances the tire, T, through the second spacing, S2', the oval deformation of diameters, T_{P-D}, T_{OU-D}, T_{OL-D} results in the lower bead, T_{BL}, of the tire, T, encountering less resistance or interference with the outer rim surface, W_{RL}, of the wheel, W, as the lower bead, T_{BL}, is advanced from the outer rim surface, W_{RL}, over the lower bead seat, W_{SL}, and to a final position adjacent the drop center, W_{DC}, of the wheel, W, as the tire, T, is advanced from the forwardly orientation (e.g., to the right, R) of the first and second tire-tread-engaging posts 230a, 230b to a rearwardly orientation (e.g., to the left, L) of the first and second tire-tread-engaging posts 230a, 230b.

Referring to Figures 8F and 9F, once the central chord, T_{C2}, or the right chord, T_{C3}, has been advanced through the second spacing, S2' (and, just as the first and second portion, W_{C1}, W_{C2}, of the circumference, W_{C}, of the wheel, W, cease direct contact of the second, substantially linear segment, J2, of the side, wheel-circumference-engaging surface 222b"", 222c"" of the first and second tire-engaging devices 220b, 220c), the motors, A2, A3, may be actuated in order to retract the first and second tire-engaging devices 220b, 220c such that the first and second tire-tread-engaging posts 230a, 230b are correspondingly moved outwardly according to the direction of the arrows, O1, O2. Accordingly, as seen in Figure 9G, the first and second tire-tread-engaging posts 230a, 230b may no longer contact the tread surface, T_{T}, of the tire, T. Further, as seen in Figure 8G, as a result of the movement of the wheel, W, and tire, T, through the spacing, S2', the entire circumference of the lower bead, T_{BL}, is advanced to its final "mounted position" adjacent to and about the drop center, W_{DC}; further, the entire circumference of the upper bead, T_{BU}, is arranged in its final "mounted position" adjacent to and about the outer circumferential surface, W_{C}, of the wheel, W, proximate the safety bead, W_{SB}.

With reference to Figures 8F-8G, a sixth movement according to the direction of arrow, D6, may cause upwardly movement, U, of the wheel, W, and tire, T, away from the support member 216. The robotic arm 212 may move the tire-wheel assembly, TW, to, for example, a subsequent sub-station (not shown), such as, for example, an inflation sub-station in order to inflate the tire-wheel assembly, TW, which may cause the upper bead, T_{BU}, to be seated adjacent the upper bead seat, W_{SU}, and the lower bead, T_{BL}, to be seated adjacent the lower bead seat, W_{SL}.

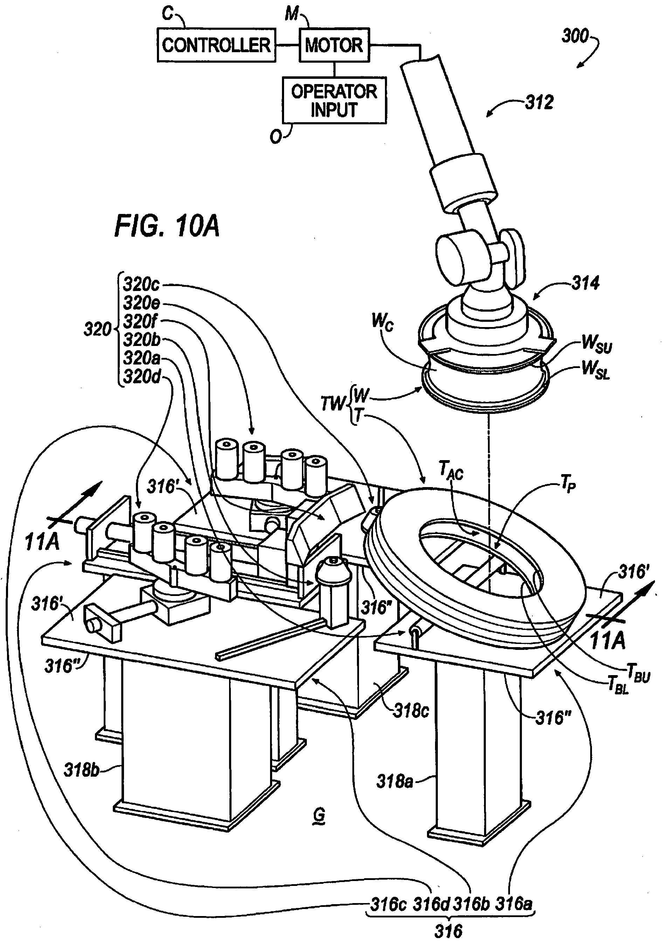

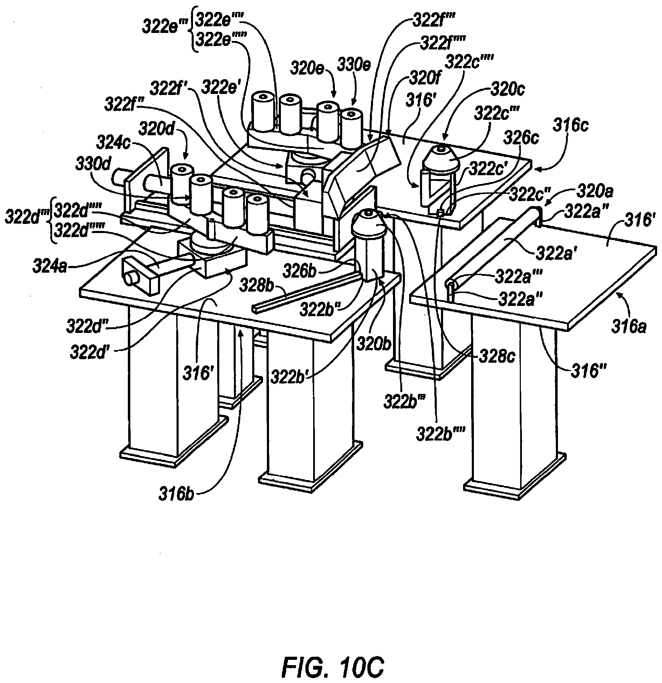

Referring to Figure 10A, a processing sub-station 300 for processing a tire-wheel assembly, TW, is shown according to an embodiment. The "processing" conducted by the processing sub-station 300 may include the act of "joining" or "mounting" a tire, T, to a wheel, W, for forming the tire-wheel assembly, TW. The act of "joining" or "mounting" may mean to physically couple, connect or marry the tire, T, and wheel, W, such that the wheel, W, may be referred to as a male portion that is inserted into a passage, T_{P}, of a tire, T, being a female portion.

As described and shown in the following Figures, although the desired result of the processing sub-station 300 is the joining or mounting of the tire, T, and wheel, W, to form a tire-wheel assembly, TW, it should be noted that the processing sub-station 300 does not inflate the circumferential air cavity, T_{AC}, of the tire, T, of the tire-wheel assembly, TW, nor does the processing sub-station 300 contribute to an act of "seating" the upper bead, T_{BU}, or the lower bead, T_{BL}, of the tire, T, adjacent the upper bead seat, W_{SU}, and the lower bead seat, W_{SL}, of the wheel, W (because the act of "seating" typically arises from an inflating step where the tire-wheel assembly, TW, is inflated). Accordingly, upon joining or mounting the tire, T, to the wheel, W, the upper bead, T_{BU}, or the lower bead, T_{BL}, of the tire, T, may be arranged about and/or disposed adjacent the outer circumferential surface, W_{C}, of the wheel, W.

In an implementation, the processing sub-station 300 may be included as part of a "single-cell" workstation. A single-cell workstation may include other sub-stations (not shown) that contribute to the processing of a tire-wheel assembly, TW; other sub-stations may include, for example: a soaping sub-station, a stemming sub-station, an inflating sub-station, a match-marking sub-station, a balancing sub-station and the like. The term "single-cell" indicates that the sub-stations contribute to the production of a tire-wheel assembly, TW, without requiring a plurality of successive, discrete workstations that may otherwise be arranged in a conventional assembly line such that a partially-assembled tire-wheel assembly, TW, is "handed-off" along the assembly line (i.e., "handed-off" meaning that an assembly line requires a partially-assembled tire-wheel assembly, TW, to be retained by a first workstation of an assembly line, worked on, and released to a subsequent workstation in the assembly line for further processing). Rather, a single cell workstation provides one workstation having a plurality of sub-stations each performing a specific task in the process of assembling a tire-wheel assembly, TW. This assembling process takes place wherein the tire and/or wheel "handing-off" is either minimized or completely eliminated. As such, a single-cell workstation significantly reduces the cost and investment associated with owning/renting the real estate footprint associated with a conventional tire-wheel assembly line while also having to provide maintenance for each individual workstation defining the assembly line. Thus, capital investment and human oversight is significantly reduced when a single cell workstation is employed in the manufacture of tire-wheel assemblies, TW.

Referring to Figure 10A, the processing sub-station 300 includes a device 312. The device 312 may be referred to as a robotic arm. The robotic arm 312 may be located in a substantially central position relative to a plurality of sub-stations (including, e.g., the processing sub-station 300) of a single-cell workstation. The robotic arm 312 may be attached to and extend from a base / body portion (not shown) connected to ground, G.

The robotic arm 312 may include an end effecter 314. The end effecter 314 may include a claw, gripper, or other means for removably-securing the wheel, W, to the robotic arm 312. The end effecter 314 permits the robotic arm 312 to have the ability to retain and not release the wheel, W, throughout the entire procedure performed by the processing sub-station 300 (and, if applied in a single-cell workstation, the ability to retain and not release the wheel" W, throughout the entire assembling procedure of the tire-wheel assembly, TW). Accordingly, the end effecter 314 minimizes or eliminates the need of the robotic arm 312 to "hand-off" the tire-wheel assembly, TW, to (a) subsequent sub-station(s) (not shown).

The processing sub-station 300 may perform several functions / duties including that of: (1) a tire repository sub-station and (2) a mounting sub-station. A tire repository sub-station typically includes one or more tires, T, that may be arranged in a "ready" position for subsequent joining to a wheel, W. A mounting sub-station typically includes structure that assists in the joining of a tire, T, to a wheel, W (e.g., the disposing of a wheel, W, within the passage, T_{P}, of the tire, T).

Referring to Figure 10A, the processing sub-station 300 may be initialized by joining a wheel, W, to the robotic arm 312 at the end effecter 314. The processing sub-station 300 may also be initialized by positioning the tire, T, upon a support member 316. The support member 316 may include a first support member 316a, a second support member 316b, a third support member 316c and fourth support member 316d. Each of the first, second, third and fourth support members 316a, 316b, 316c, 316d include an upper surface 316' and a lower surface 316". In the illustrated embodiment of Figure 10A, the tire, T, may be arranged upon the first support member 316a.

The lower surface 316" of each of the first, second, third and fourth support members 316a, 316b, 316c, 316d may be respectively connected to at least one first leg member 318a, at least one second leg member 318b, at least one third leg member 318c and at least one fourth leg member 318d. Each of the at least one first, second, third and fourth leg members 318a, 318b, 318c, 318d respectively include a length for elevating or spacing each of the first, second, third and fourth support members 316a, 316b, 316c, 316d from an underlying ground surface, G. Although the robotic arm 312 is not directly connected to the support member 316 (but, rather may be connected to ground, G), the robotic arm 312 may be said to be interfaceable with (as a result of the movements D1-D3 described in the following disclosure) and/or indirectly connected to the support member 316 by way of a common connection to ground, G, due the leg members 318a-318d connecting the support member 316 to ground, G.

The processing sub-station 300 may further include a plurality of tire-engaging devices 320. The plurality of tire-engaging devices 320 may include a first tire-engaging device 320a connected to the upper surface 316' of the first support member 316a, a second tire-engaging device 320b connected to the upper surface 316' of the second support member 316b, a third tire-engaging device 320c connected to the upper surface 316' of the third support member 316c, a fourth tire-engaging device 320d connected to the upper surface 316' of the second support member 316b, a fifth tire-engaging device 320e connected to the upper surface 316' of the third support member 316c and a sixth tire-engaging device 320f connected to the upper surface 316' of the fourth support member 316d.

In reference to the processing sub-station 10 of Figures 1A-3J, the plurality of tire-engaging devices 20 may be said to be in a fixed orientation with respect to the upper surface 16' of each of the first, second and third support members 16a, 16b, 16c. However, as will be described in the following disclosure, one or more of the plurality of tire-engaging devices 320 of the processing sub-station 300 may be said to be in a non-fixed, moveable orientation with respect to the upper surface 316' of one or more of the first, second, third and fourth support members 316a-316d.

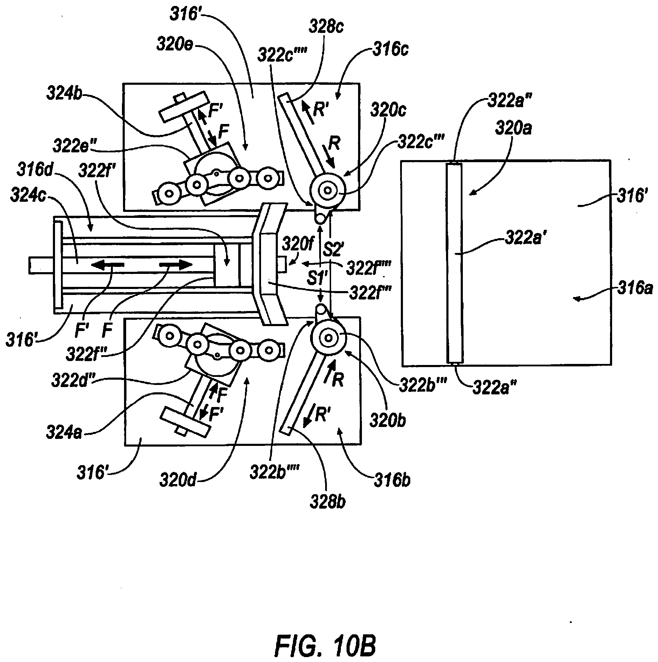

Referring to Figures 10B-10C, the first tire-engaging device 320a includes a substantially cylindrical body 322a' that is supported by one or more brackets 322a". The one or more brackets 322a" may support the substantially cylindrical body 322a' at a distance away from the upper surface 316' of the first support member 316a. The one or more brackets 322a" may include a pair of brackets. The substantially cylindrical body 322a' may be a tubular body having an axial passage.

A central pin 322a"' may be disposed within the axial passage. The central pin 322a"' may be connected and fixed to the pair of brackets 322a"; accordingly, the substantially tubular, cylindrical body 322a' may be movably-disposed about the central pin 322a'" such that the substantially tubular, cylindrical body 322a' is permitted to move in a rotating / rolling motion relative to a fixed orientation of the central pin 322a"'. Alternatively, the substantially cylindrical body 322a' may not include an axial passage and may rotatably-connected-to or non-movably-fixed-to the pair of brackets 322a".

Referring to Figures 10B-10C, each of the second and third tire-engaging devices 320b, 320c may include a tire tread engaging post / body 322b', 322c' having a lower surface 322b", 322c" including at least one female recess 326b, 326c. The at least one female recess 326c, 326c receives at least one male guide member 328b, 328c connected to the upper surface 316' of each of the second and third support members 316b, 316c. Accordingly, as will be explained in the following disclosure, upon one or more of the tire, T, and the wheel, W, contacting the second and third tire-engaging devices 320b, 320c, the tire tread engaging post / body 322b', 322c' may be slidably-moved relative to the upper surface 316' and along the male guide member 328b, 328c in a repeatable, controlled fashion.

The tire tread engaging post / body 322b', 322c' may further include an upper, tire-sidewall-engaging surface 322b"', 322c'" and a laterally-extending wheel-engaging portion 322b"", 322c"". The upper tire-sidewall-engaging surface 322b"', 322c'" may include a substantially conical geometry and may be rotatably-disposed relative to a non-rotatable, but slidable orientation with respect to the tire tread engaging post / body 322b', 322c'. The laterally-extending wheel-engaging portion 322b"", 322c"" may include a substantially L-shaped member that is fixed to a lateral side surface of the tire tread engaging post / body 322b', 322c'. The laterally-extending wheel-engaging portions 322b"", 322c"" may be arranged directly facing one another in an opposing, spaced-apart relationship; further, as seen in Figures 10B-10C, each tire tread engaging post / body 322b', 322c' may be arranged in a default orientation near an end of each male guide member 328b, 328c such that the laterally-extending wheel-engaging portions 322b"", 322c"" are spaced apart at a distance that is less than the diameter, W_{D}, of the wheel, W.

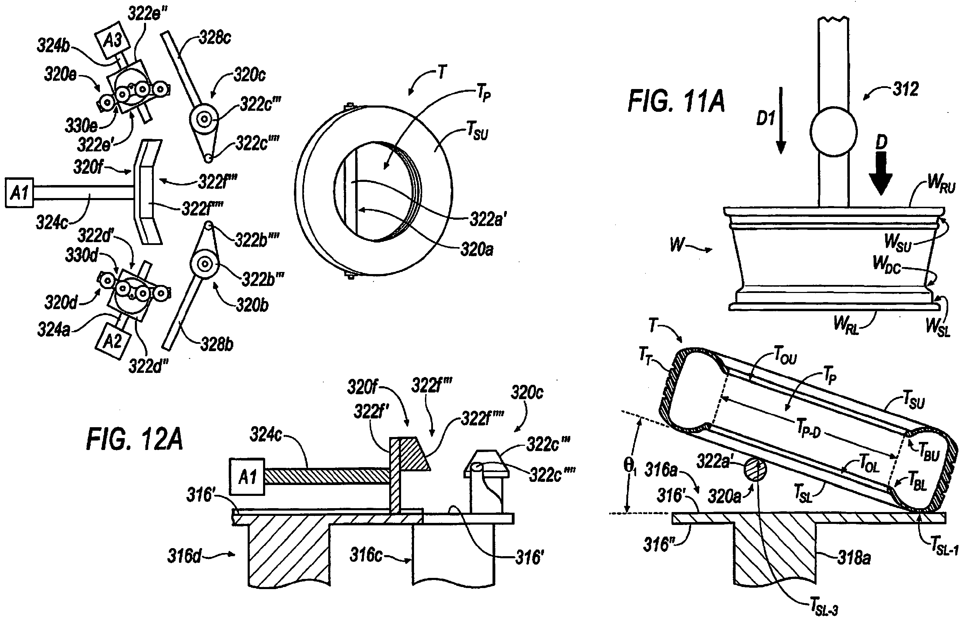

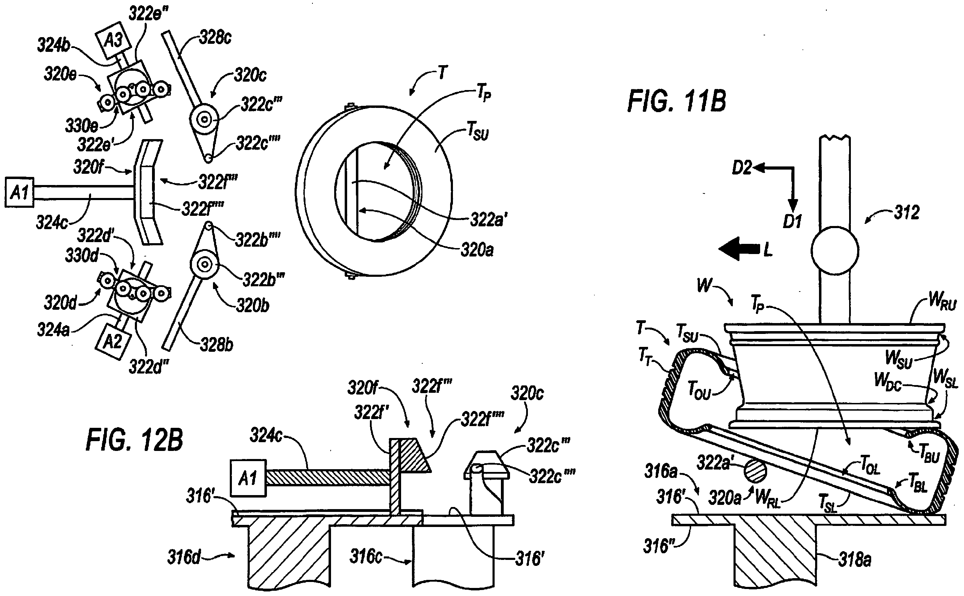

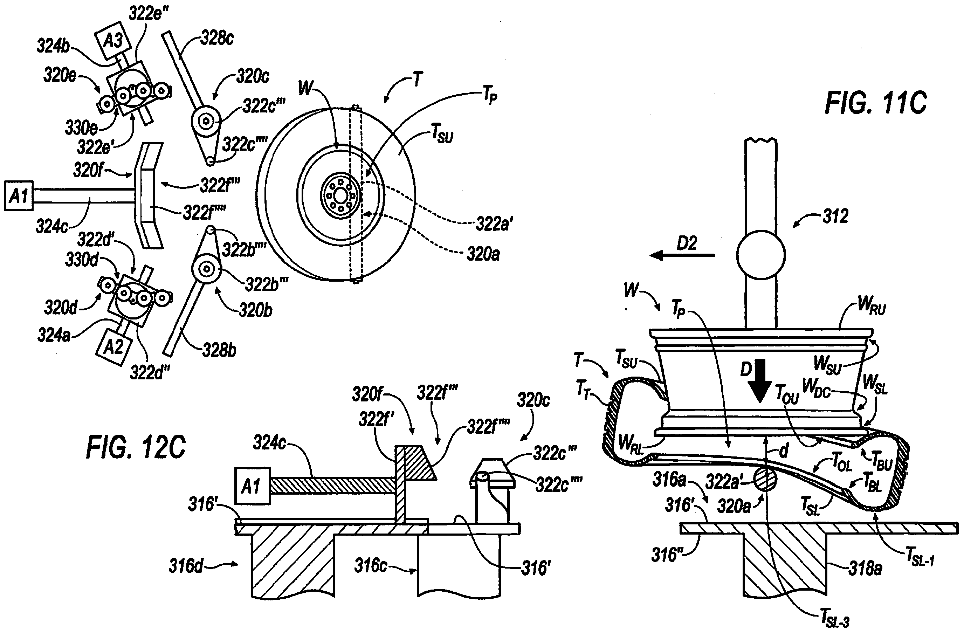

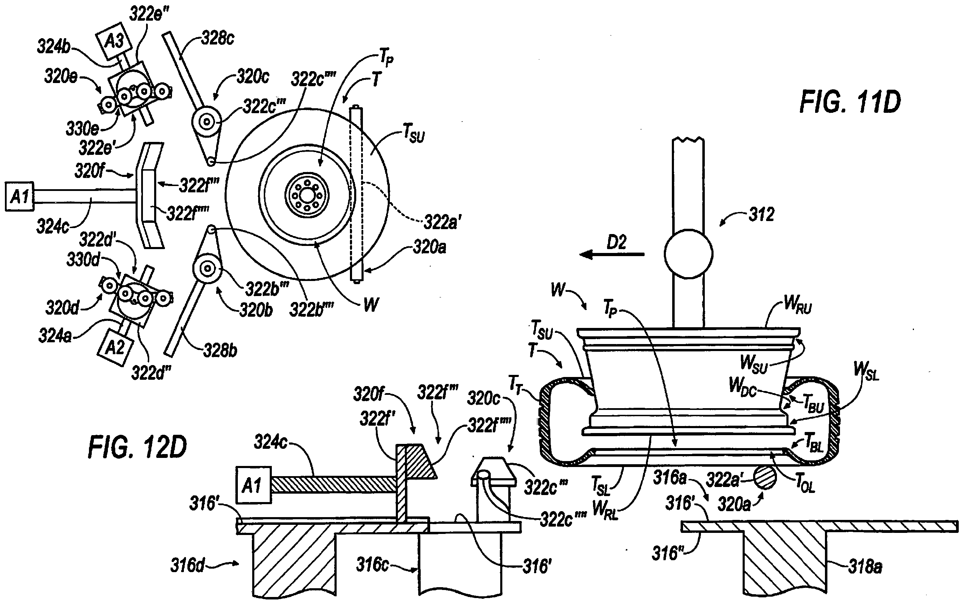

Referring to Figures 10B-10C, each of the fourth and fifth tire-engaging devices 320d, 320e may include a body 322d', 322e' having a side surface 322d", 322e" connected, respectively, to a first rod 324a and a second rod 324b. The first rod 324a may be connected to a first actuator, A1 (see, e.g., Figures 12A-12I), and, the second rod 324b may be connected to a second actuator, A2 (see, e.g., Figures 12A-12I). As will be explained in the following disclosure, the actuators A1, A2, may push or pull the body 322d', 322e' such that the body 322d', 322e' is movably-disposed relative to the upper surface 316' of each of the second and third support members 316b, 316c in a repeatable, controlled fashion.

The body 322d', 322e' may further include a tire-tread-surface-engaging member 322d"', 322e"'. The tire-tread-surface-engaging member 322d"', 322e"' may be movably-connected to an upper surface of the body 322d', 322e' such that the tire-tread-surface-engaging member 322d"', 322e'" is permitted to rotate or swivel relative to the body 322d', 322e'.

The tire-tread-surface-engaging member 322d"', 322e"' may include a first linear segment 322d"", 322e"" and a second linear segment 322d""', 322e'"" that are arranged to form an obtuse angle. Although the tire-tread-surface-engaging member 322d"', 322e"' may include a first linear segment 322d"", 322e"" and a second linear segment 322d""', 322e""' forming an obtuse angle, the tire-tread-surface-engaging member 322d"', 322e"' may include one curved segment having an arc shape (i.e., the tire-tread-surface-engaging member 322d"', 322e'" may be alternatively referred to as an arcuate segment).

Each tire-tread-surface-engaging member 322d"', 322e'" may include an array of tire-tread-engaging posts 330d, 330e. In an embodiment, each tire-tread-surface-engaging member 322d"', 322e'" may include four tire-tread-engaging posts 330d, 330e comprising a first pair of posts 330d, 330e arranged upon the first linear segment 322d"", 322e"" and a second pair of posts arranged upon the second linear segment 322d'"', 322e""'. One or more of each of the tire-tread engaging posts 330d, 330e may rotate relative to the first / second linear segment 322d"", 322e"" / 322d""', 322e""'; rotation of one or more of the tire-tread engaging posts 330d, 330e relative to the first / second linear segment 322d"", 322e"" / 322d""', 322e'"' may occur upon contact of the tread surface, T_{T}, of the tire, T, with the one or more of the tire-tread engaging posts 330d, 330e.

Referring to Figures 10B-10C, the sixth tire-engaging device 320f may include a body 322f' having a side surface 322f" connected to a third rod 324c. The third rod 324c may be connected to a third actuator, A3 (see, e.g., Figures 12A-12I). As will be explained in the following disclosure, the actuator, A3, may push or pull the body 322f' such that the body 322f is movably-disposed relative to the upper surface 316' of the fourth support member 316d in a repeatable, controlled fashion.

The body 322f may further include a tire-tread-surface-engaging member 322f"'. The tire-tread-surface-engaging member 322f" may be fixed to an upper surface of the body 322f' in a non-rotatable fashion.

The tire-tread-surface-engaging member 322f"' may form a cradle 322f"" formed by first, second and third linear segments. Although the cradle 322f"" may include first, second and third linear segments, the cradle 322f"" may include one curved segment having an arc shape (i.e., the cradle 322f"" may be alternatively referred to as an arcuate or C-shaped cradle).

Referring to Figure 10B, the actuators, A1-A3 (not shown), and rods 324a-324c may assist in or contribute to the movement of the fourth, fifth and sixth tire-engaging devices 320d-320f relative the upper surface 316' of each of the second, third and fourth support members 316b-316d by way of a push or pull driving force, F / F', whereas movement of the second and third tire-engaging devices 320b, 320c may be regulated / biased with a reactive force, R (by way of, e.g., a spring, not shown). Accordingly, if an object, such as, for example, one or more of the tire, T, and wheel, W, pushes or exerts a force upon one or more of the second and third tire-engaging devices 320b-320c, the reactive / biasing force, R, may permit, but resist, movement (in a direction according to arrow, R', that is opposite the direction of the reactive force, R) relative to the upper surface 316' of the second and third support members 316b-316c. Although one or more of an actuator and a rod is/are not shown connected to the second and third tire-engaging devices 320b, 320c, an actuator and/or rod may be coupled to the second and third tire-engaging devices 320b, 320c to permit a similar movement as described above with respect to the fourth, fifth and sixth tire-engaging devices 320d-320f.

Referring to Figure 10B, the laterally-extending wheel-engaging portion 322b"", 322c"" of the second and third tire-engaging devices 320b, 320c are separated by a gap or first spacing, S1'. Additionally, the substantially conical upper tire-sidewall-engaging surfaces 322b"', 322c'" are separated by a gap or second spacing, S2'. The first spacing, S1', may be approximately equal to, but slightly less than the diameter, W_{D}, of the wheel, W; the second spacing, S2', may be approximately equal to, but slightly less than the diameter, T_{D}, of the tire, T. The first and second spacings, S1' / S2', of the processing sub-station 300 is substantially similar to the first / second spacing, S1' /' S2', of the processing sub-station 200 due to the fact that the first / second spacings, S1' / S2' are associated with the moveable tire-engaging devices; accordingly, the first and second spacing, S1', S2', of the processing sub-station 300 may be similarly referred to as a "variable" or "adjustable" first and second spacing, S1', S2'.

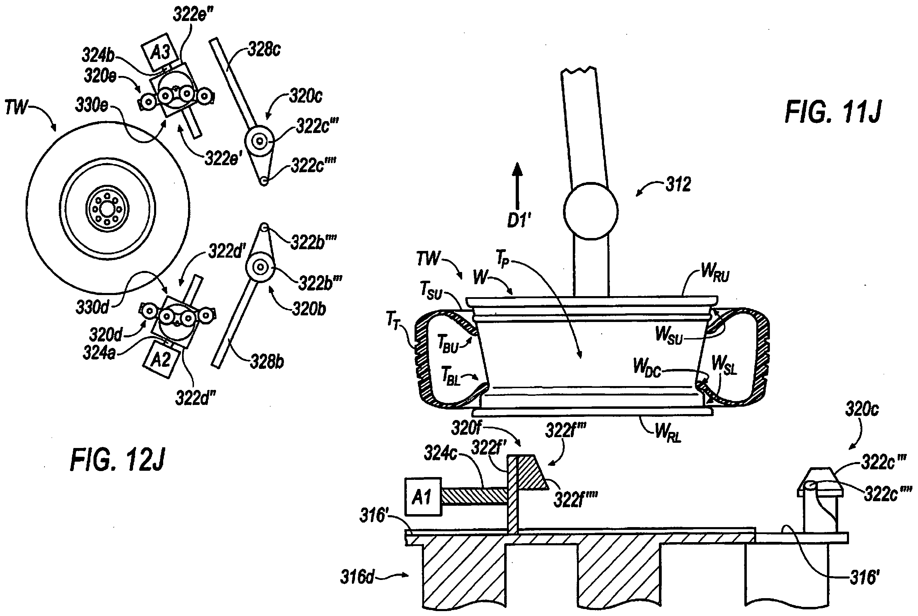

Referring to Figures 10A, 11A and 12A, prior to joining the tire, T, to the wheel, W, the tire, T, may be said to be arranged in a first relaxed, unbiased orientation such that the upper tire opening, T_{OU}, and the lower tire opening, T_{OL}, define the passage, T_{P}, to include a diameter, T_{P-D}. When the tire, T, is joined to the wheel, W (see, e.g., Figures 11J and 12J), the upper bead, T_{BU,} and the lower bead, T_{BL}, may be arranged proximate but not seated adjacent, respectively, the upper bead seat, W_{SU}, and the lower bead seat, W_{SL}, of the wheel, W; later, upon inflating the tire, T, at, e.g., an inflation sub-station (not shown), the upper bead, T_{BU}, and the lower bead, T_{BL}, may be seated (i.e., disposed adjacent), respectively, the upper bead seat, W_{SU}, and the lower bead seat, W_{SL}, of the wheel, W. Further, when the tire, T, is joined to the wheel, W (see, e.g., Figures 11J and 12J), the tire, T, may be said to be arranged in a second substantially relaxed, but somewhat biased orientation such that the diameter, T_{P-D}, of the passage, T_{P}, is substantially circular and substantially similar to its geometry of the first relaxed, unbiased orientation of the tire, T.

Referring to Figure 11A, the robotic arm 312 is arranged in a spaced-apart orientation with respect to the first support member 316a, which includes the tire, T, arranged in a "ready" position. The "ready" position may include a portion (i.e., T_{SL-1}, T_{SL-2} and T_{SL-3}) of one or more of the lower sidewall surface, T_{SL}, and the tread surface, T_{T}, of the tire, T, arranged adjacent the upper surface 316' of the first support member 316a. Referring to Figure 11A, the "ready" position may further include the tire, T, being arranged in a first angularly-offset orientation, θ₁, with respect to the upper surface 316' of the first support member 316a.

The first angularly-offset orientation, θ₁, of the tire, T, results from the non-co-planar relationship of the substantially cylindrical body 322a' of the first tire-engaging device 320a that engages the lower sidewall surface, T_{SL}, of the tire, T (at T_{SL-2} and T_{SL-3}), with that of a portion of the upper surface 316' of the first support member 316a (at T_{SL-1}) such that:
(1) the first portion, T_{SL-1}, of the lower sidewall surface, T_{SL}, of the tire, T, is arranged adjacent the upper surface 316' of the first support member 316a, (2) the second portion, T_{SL-2}, of the lower sidewall surface, T_{SL}, of the tire, T, is arranged adjacent a portion of the substantially cylindrical body 322a' of the first tire-engaging device 320a (noting that the second portion, T_{SL-2}, is not represented in Figure 11A due to the cross-sectional reference line of Figure 10A), and (3) a third portion, T_{SL-3}, of the lower sidewall surface, T_{SL}, of the tire, T, is arranged adjacent a portion of the substantially cylindrical body 322a' of the first tire-engaging device 320a. Accordingly, the support member 316 may provide a three-point support (which is more clearly shown at Figure 10A) at T_{SL-1}, T_{SL-2}, T_{SL-3} for the lower sidewall surface, T_{SL}, of the tire, T, while remaining portions of the lower sidewall surface, T_{SL}, of the tire, T, are not in direct contact with any other portion of the support member 316 when the tire, T, is arranged in the first angularly-offset orientation, θ₁.

The processing sub-station 300 may execute a mounting procedure by causing a controller, C (see, e.g., Figure 10A) to send one or more signals to a motor, M (see, e.g., Figure 10A), that drives movement (according to the direction of the arrows, D1-D3 - see Figures 11A-11I) of the robotic arm 312. Alternatively or in addition to automatic operation by the controller, C, according to inputs stored in memory, the movement, D1-D3, may result from one or more of a manual, operator input, O (e.g., by way of a joystick, depression of a button or the like).

As seen in Figure 11A, the wheel, W, may be arranged above and be substantially aligned-with the passage, T_{P}, of the tire, T. A first, down, D, movement according to the direction of arrow, D1, may reduce the spaced-apart orientation of robotic arm 312 with respect to the support member 316 such that the wheel, W, may also be moved closer with respect to the tire, T, that is positioned upon the support member 316.

Referring to Figure 11B, the robotic arm 312 may continue movement according to the direction of the arrow, D1, upon locating a first (e.g., left) portion of the lower bead seat, W_{SL}, and drop center, W_{DC}, of the wheel, W, within the passage, T_{P}, of the tire, T. The robotic arm 312 may then conduct a second movement according to the direction of arrow, D2, to cause the robotic arm 312 to directly move the wheel, W (and, as a result of the orientation of the wheel, W, within the passage, T_{P}, of the tire, T, indirectly move the tire, T), rearwardly (e.g., to the left, L).

Referring to Figure 11C, the movement according to the direction of the arrow, D1, may continue such that the wheel, W, pushes or exerts a downwardly, D, force upon the tire, T, such that a portion of the lower, outer rim surface, W_{RL}, of the wheel, W, is partially disposed within the passage, T_{P}, while a portion of the lower, outer rim surface, W_{RL}, of the wheel, W, is disposed adjacent and pushes down upon the upper sidewall surface, T_{SU}, of the tire, T; accordingly, the tire, T, may be leveraged about the substantially cylindrical body 322a' such that a portion (e.g., T_{SL-1}) of the lower sidewall surface, T_{SL}, of the tire, T, is no longer arranged adjacent the upper surface 316' of the first support member 316a. Thus, the tire, T, may no longer be arranged adjacent the support member 316 at three points of support; rather, the second and third portions (e.g., T_{SL-2}, T_{SL-3}) are still arranged adjacent the substantially cylindrical body 322a' of the first tire-engaging device 320a to thereby provide two points of support for the lower sidewall surface, T_{SL}, of the tire, T. As a result the orientation of the tire, T, being supported upon the substantially cylindrical body 322a' of the first tire-engaging device 320a, the tire, T, is no longer arranged at the first angularly-offset orientation, θ₁, with respect to the support member 316.

Referring to Figure 11C, downward movement according to the direction of the arrow, D1, may cease when, for example, the lower, outer rim surface, W_{RL}, of the wheel, W, is arranged in a space-apart relationship with respect to the substantially cylindrical body 322a' at a distance, d. During the downward movement according to the direction of the arrow, D1 (in the view according to Figure 11B), or, in an alternative embodiment, just after ceasing the downward movement according to the direction of the arrow, D1, the robotic arm 312 may cause rearwardly movement (e.g., to the left) of the wheel, W, and the tire, T, according to the direction of the arrow, D2.

Referring to Figures 11D-11E, the movement according to the direction of the arrow, D2, results in the lower sidewall surface, T_{SL}, of the tire, T, to being "dragged over" the substantially cylindrical body 322a' of the first tire-engaging device 320a due to the rearwardly (e.g., to the left, L) movement in conjunction with the lower, outer rim surface, W_{RL}, of the wheel, W, being disposed adjacent and pushing down upon the upper sidewall surface, T_{SU}, of the tire, T. Accordingly, as the wheel, W, drags the lower sidewall surface, T_{SL}, of the tire, T, over the substantially cylindrical body 322a', the upper and lower beads, T_{BU}, T_{BL}, of the tire, T, are arranged closer in proximity to one anther. As the wheel, W, is advanced rearwardly (e.g., to the left, L) past the substantially cylindrical body 322a', the upper bead, T_{BU}, of the tire, T, is urged or flexed over one or both of the lower bead seat, W_{SL}, and drop center, W_{DC}, of the wheel, W, such that the lower, outer rim surface, W_{RL}, of the wheel, W, is no longer disposed adjacent the upper sidewall surface, T_{SU}, of the tire, T. Accordingly, as seen in Figure 11D, the tire, T, is arranged relative to the wheel, W, such that the upper bead, T_{BU}, of the tire, T, circumscribes the wheel, W, and is arranged proximate the drop center, W_{DC}, while the lower, outer rim surface, W_{RL}, the lower bead seat, W_{SL}, and the drop center, W_{DC}, of the wheel, W, are arranged within the passage, T_{P}, of the tire, T; accordingly, the robotic arm 312 utilizes the wheel, W, to move rearwardly (e.g., to the left, L) such that the tire, T, is moved from the "ready" position (of Figures 11A-11C) to a "partially mounted" position (of Figure 11D) upon the wheel, W.

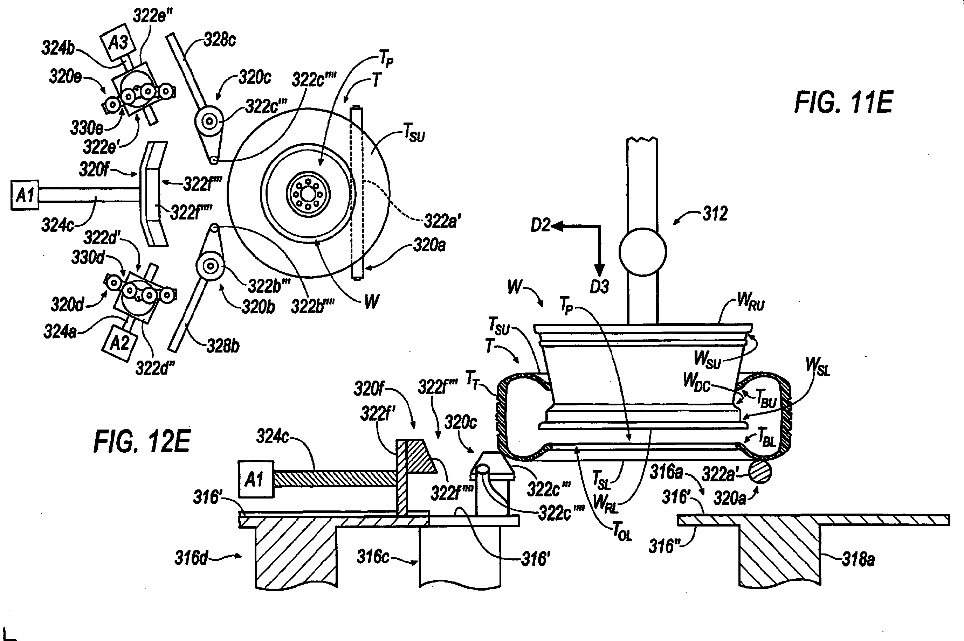

Referring to Figure 11E, once the tire, T, is arranged relative to the wheel, W, as described above, the second movement according to the direction of arrow, D2, continues while the robotic arm 312 may slightly lower the wheel, W, and the tire, T, according to a second downwardly direction according to the direction of the arrow, D3. The movement according to the direction of the arrows, D2, D3, may be conducted separately or simultaneously, as desired.

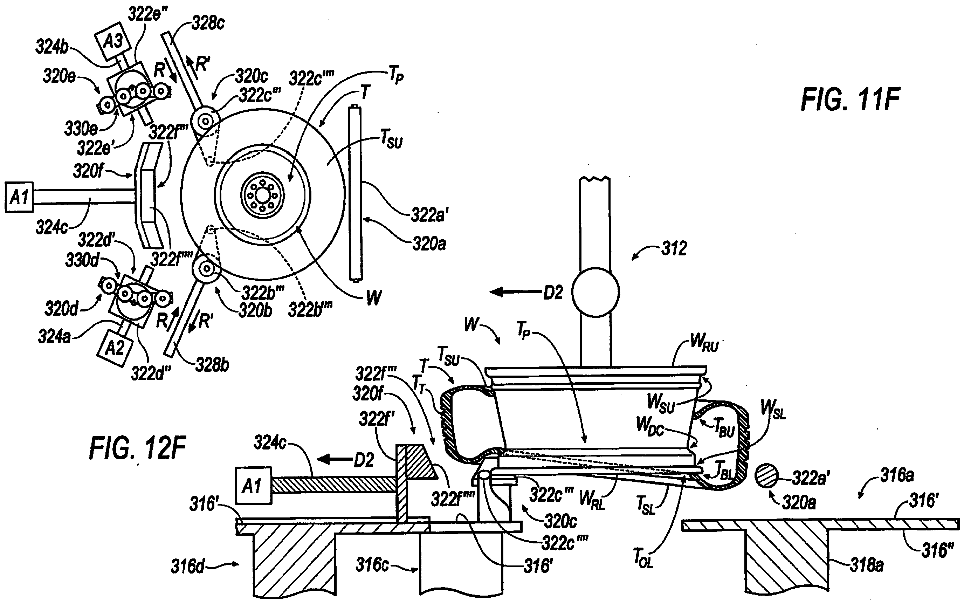

Referring to Figure 11F, the third movement according to the direction of the arrow, D3, may result in the robotic arm 312 arranging at least a portion of the tire, T, in alignment with the substantially conical upper tire-sidewall-engaging surface 322b"', 322c'" and at least a portion of the wheel, W, in alignment with the laterally-extending wheel-engaging portion 322b"", 322c"" of the second and third tire-engaging devices 320b, 320c. Further, the third movement according to the direction of the arrows, D2, D3, eventually results in, the tire, T, being arranged in an orientation of contact with the second and third tire-engaging devices 320b, 320c, and, then eventually results in the wheel, W, being arranged in an orientation of contact with the second and third tire-engaging devices 320b, 320c.

As described above, the first spacing, S1', may be approximately equal to, but slightly less than the diameter, W_{D}, of the wheel, W, and, the second spacing, S2', may be approximately equal to, but slightly less than the diameter, T_{D}, of the tire, T. Accordingly, as the robotic arm 312 advances the tire, T, and the wheel, W, rearwardly (e.g., to the left, L) according to the direction of the arrow, D2, past / through the spacing, S1', S2' as seen in Figures 12E-12I, one or more of the tread surface, T_{T}, tire, T, and the lower rim surface, W_{RL}, of the wheel, W, engages and pushes, R' (see Figures 12F-12G) the second and third tire-engaging devices 320b, 320c outward.

The second and third tire-engaging devices 320b, 320c may at least partially resist, R, as seen in Figure 10B) the movement imparted to the tire, T (i.e., the second and third tire-engaging devices 320b, 320c may provide a countering, "push-back" force according to the direction of the arrow, R), such that the tire, T, is permitted to flex relative to a fixed orientation of the wheel, W, that is joined to the robotic arm 312. As described above, the push-back force, R, may arise from any desirable structure, such as, for example, a spring (not shown) that is connected to the second and third tire-engaging devices 320b, 320c. Referring to Figures 12F-12I, the push-back force, R, results in the laterally-extending wheel-engaging portion 322b"", 322c"" of the second and third tire-engaging devices 320b, 320c 'tracing' / following a portion of the lower rim surface, W_{RL}, of the wheel, W, while the substantially conical upper tire-sidewall-engaging surface 322b"', 322c"' 'traces' / follows a portion of the tread surface, T_{T}, of the tire, T.

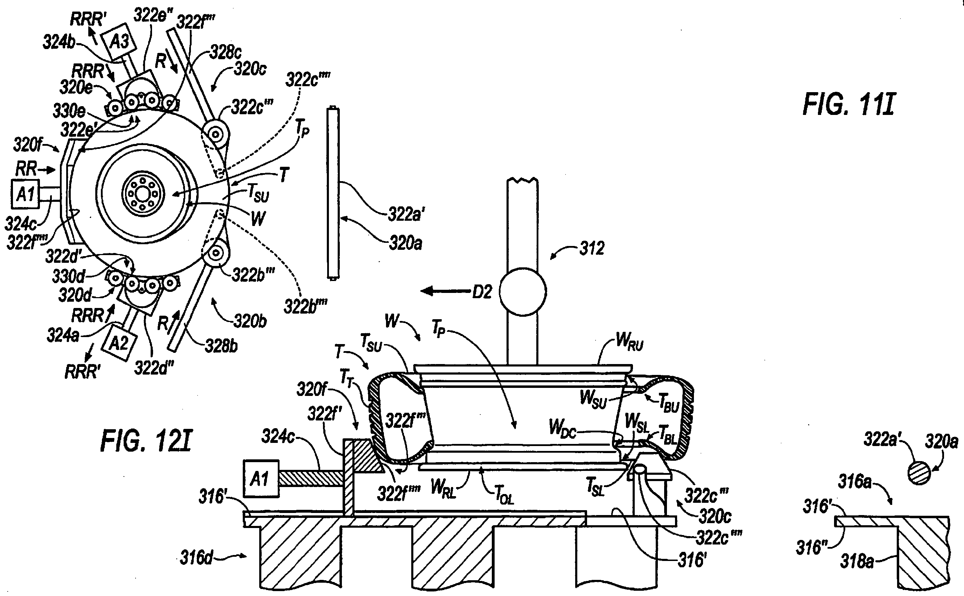

As seen in Figures 11F-11I, the countering push-back force, R, provided by the second and third tire-engaging members 320b, 320c may result in the substantially conical upper tire-sidewall-engaging surface 322b"', 322c'" interfering with movement of the tire, T, through the spacing, S2', according to the direction of the arrow, D2; as a result of the interference, the tire, T, physically deforms relative to the wheel, W, in a manner that results in the lower bead, T_{BL}, of the tire, T, being permitted to flex or wrap-over the lower rim surface, W_{RL}, of the wheel, W, as seen in Figures 11F-11I. Continued movement according to the direction of the arrow, D2, results in the lower bead, T_{BL}, of the tire, T, circumscribing the wheel, W, about the drop center, W_{DC} (see Figure 11I), once the tire, T, and the wheel, W, is passed through the spacing, S1', S2'.

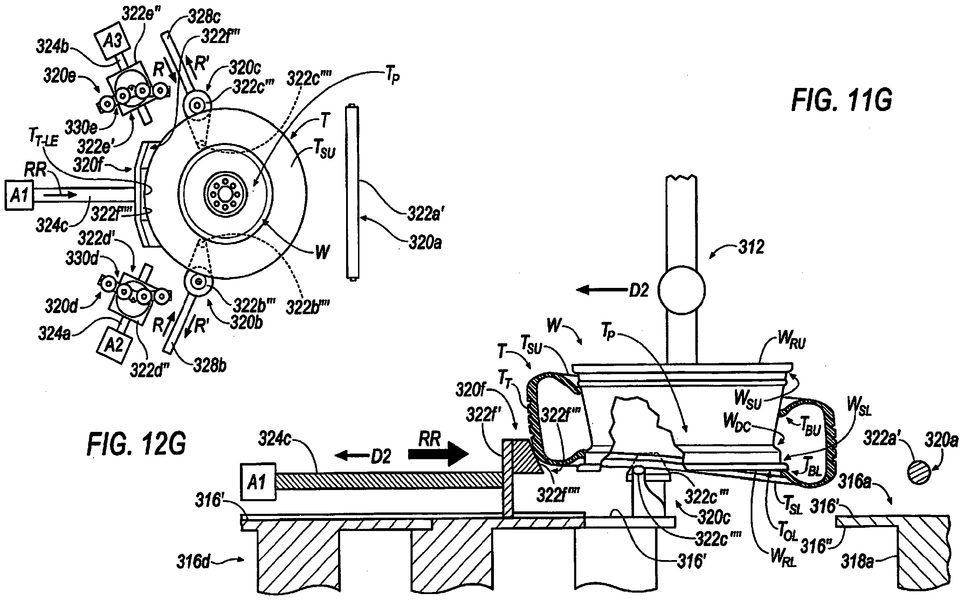

In addition to the push-back force, R, provided by the second and third tire-engaging devices 320b, 320c, additional push-back force RR and RRR may be provided by the fourth, fifth and sixth tire-engaging devices 320d, 320e, 320f. Referring to Figures 11G and 12G, continued movement of the robotic arm 312 according to the direction of the arrow, D2, results in a leading-end, T_{T-LE} (see Figure 12G), of the tread surface, T_{T}, of the tire, T, coming into contact with the cradle 322f"" of the sixth tire-engaging device 320f; as seen, comparatively in Figures 11F-12F and 11G-12G, the actuator, A1, may retract (according to the direction of the arrow, D2) the cradle 322f"" as the robotic arm 312 advances the wheel, W, and the tire, T. The speed of retraction of the sixth tire-engaging device 320f according to the direction of the arrow, D2, may be slower than the speed of advancement of the tire, T, and the wheel, W, according to the direction of the arrow, D2, such that the sixth tire-engaging device may interfere with movement of (and, as a result, "push-back," RR, upon) the tire, T, as the tire, T, is moved through the spacing, S2', in order to contribute to the physical manipulation of the orientation of the tire, T, relative to the wheel, W, described above.

In an alternative embodiment, upon the leading-end, T_{T-LE}, of the tread surface, T_{T}, of the tire, T, coming into contact with the cradle 322f"", the sixth tire-engaging device 320f may move in concert with the robotic arm 312 according to the direction of the arrow, D2; accordingly the cradle 322f"" may provide a support surface for the tire, T, that may serve as a leverage surface to assist in the manipulation of the tire, T, and not necessarily contribute to an interference of the tire, T, as the tire, T, is moved through the spacing, S2'. In another embodiment, the sixth tire-engaging device 320f may remain in a static, fixed orientation after the leading-end, T_{T-LE}, of the tread surface, T_{T}, of the tire, T, comes into contact with the cradle 322f"" and, then, subsequently, move in concert with the robotic arm 312 according to the direction of the arrow, D2. In another embodiment, the speed of retraction of the sixth tire-engaging device 320f according to the direction of the arrow, D2, may be faster than the speed of advancement of the tire, T, and the wheel, W, according to the direction of the arrow, D2 (e.g., after, as described above, remaining in a static orientation). Accordingly, the first actuator, A1, may control the timing and/or speed of movement of the sixth tire-engaging device 320f according to the direction of the arrow, D2, in any desirable manner in order to control a particular physical manipulation of an orientation of the tire, T, relative the wheel, W.

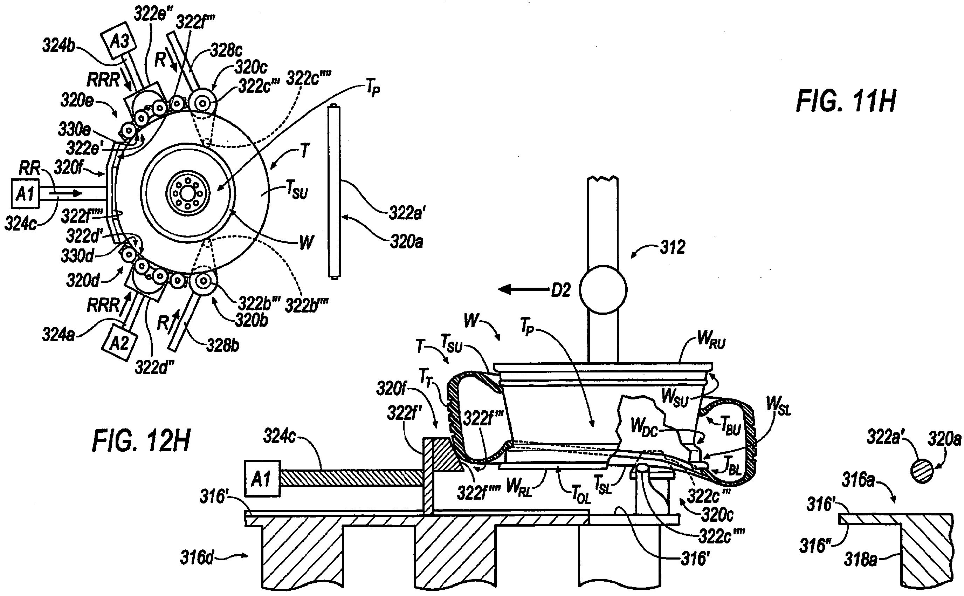

Referring to Figures 11h and 12H, the second and third actuators, A2, A3, may be actuated for driving the fourth and fifth tire-engaging devices 320d, 320e toward the tread surface, T_{T}, of the tire, T, such that the array of tire-tread-engaging posts 330d, 330e come into contact with and engage portions of the tread surface, T_{T}, of the tire, T. The actuators, A2, A3, may drive the array of tire-tread-engaging posts 330d, 330e into contact with and engage portions of the tread surface, T_{T}, of the tire, T, before, during or after the leading-end, T_{T-LE}, of the tread surface, T_{T}, of the tire, T, comes into contact with the cradle 322f"" of the sixth tire-engaging device 320f; in the illustrated embodiment, the the leading-end, T_{T-LE}, of the tread surface, T_{T}, of the tire, T, comes into contact with the cradle 322f"" first (see Figures 11G and 12G) and then secondly, the array of tire-tread-engaging posts 330d, 330e into contact with and engage portions of the tread surface, T_{T}, of the tire, T (see Figures 11H and 12H).

In a substantially similar manner as described above, the second and third actuators, A2, A3, may drive or retract the array of tire-tread-engaging posts 330d, 330e into a dis/engaged orientation with respect to the tread surface, T_{T}, of the tire, T. If driven to an engaged orientation with the tread surface, T_{T}, of the tire, T, the array of tire-tread-engaging posts 330d, 330e may "push-back," RRR, upon the tire, T, as the tire, T, is moved through the spacing, S2', by the robotic arm 312 in order to contribute to the manipulation of the orientation of the tire, T, relative to the wheel, W. Alternatively, as similarly described above, the array of tire-tread-engaging posts 330d, 330e may provide a support surface for the tire, T, that may serve as a leverage surface to assist in the manipulation of the tire, T, and not necessarily contribute to an interference of the tire, T, as the tire, T, is moved through the spacing, S2'.

Referring to Figures 12H-12I, the push-back force, RRR, may also results in the array of tire-tread-engaging posts 330d, 330e 'tracing' / following a portion of the tread surface, T_{T}, of the tire, T, in a substantially similar fashion as that of the substantially conical upper tire-sidewall-engaging surface 322b"', 322c"'. The tracing conducted by the array of tire-tread-engaging posts 330d, 330e is permitted by the swiveling-connection of the tire-tread-surface-engaging member 322d"', 322e'" and the body 322d', 322e' of each of the fourth and fifth tire-engaging devices 320d, 320e.

Referring to Figures 12I, once the robotic arm 312 has moved the tire, T, through the spacing, S2', the movement according to the direction of the arrow, D2, may cease; additionally, the second and third actuators, A2, A3, may retract the fourth and fifth tire-engaging devices 320d, 320e to a "ready orientation" according to the direction of the arrow, RRR', which is opposite that of the direction of the arrow, RRR, that is substantially similar to what is shown in Figure 12A. Additionally, as seen in Figure 12I, the second and third tire-engaging devices 320b, 320c may be returned to a "ready orientation" that is substantially similar to what is shown in Figure 12A as a result of, for example, a spring (not shown) that provides the "push-back" force, R, being fully expanded. Referring to Figure 11J, as a result of the tire, T, now being mounted to the wheel, W, by the processing sub-station 300, the robotic arm 312 may move upwardly according to the direction of the arrow, D1', which is substantially opposite the direction of the arrow, D1, to carry the tire-wheel assembly, TW, to another processing sub-station, such as, for example, an inflation sub-station (not shown) for inflating the tire-wheel assembly, TW, which may cause the upper bead, T_{BU}, to be seated adjacent the upper bead seat, W_{SU}, and the lower bead, T_{BL}, to be seated adjacent the lower bead seat, W_{SL}.

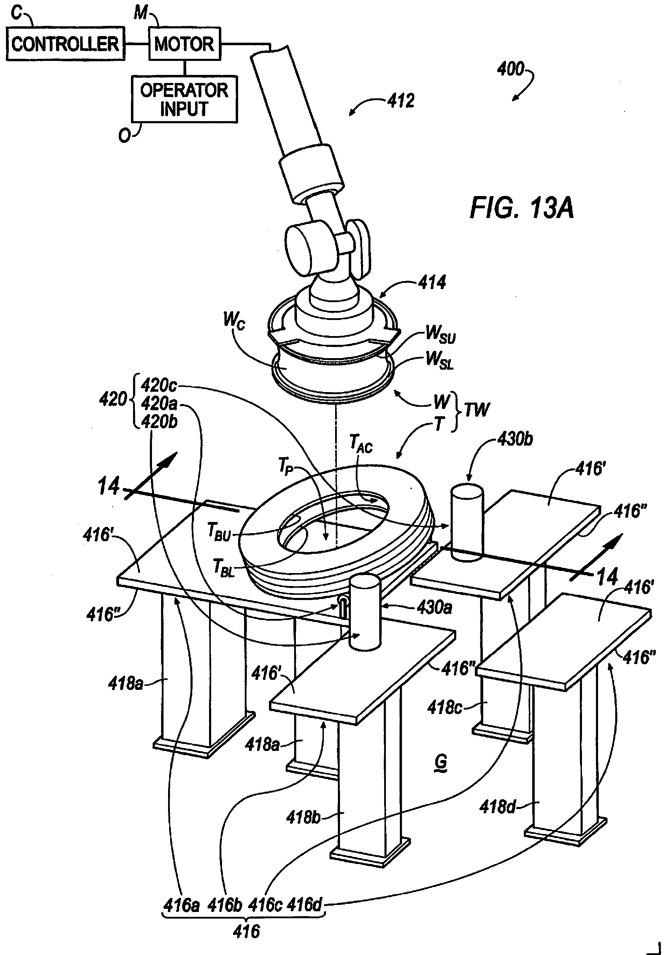

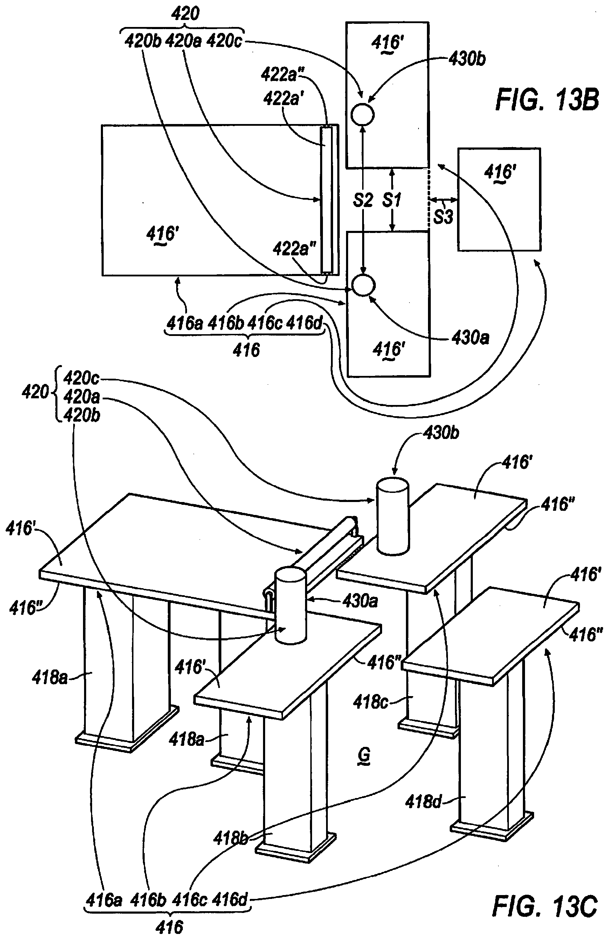

Referring to Figure 13A, a processing sub-station 400 for processing a tire-wheel assembly, TW, is shown according to an embodiment. The "processing" conducted by the processing sub-station 400 may include the act of "joining" or "mounting" a tire, T, to a wheel, W, for forming the tire-wheel assembly, TW. The act of "joining" or "mounting" may mean to physically couple, connect or marry the tire, T, and wheel, W, such that the wheel, W, may be referred to as a male portion that is inserted into a passage, T_{P}, of a tire, T, being a female portion.

As described and shown in the following Figures, although the desired result of the processing sub-station 400 is the joining or mounting of the tire, T, and wheel, W, to form a tire-wheel assembly, TW, it should be noted that the processing sub-station 400 does not inflate the circumferential air cavity, T_{AC}, of the tire, T, of the tire-wheel assembly, TW, nor does the processing sub-station 400 contribute to an act of "seating" the upper bead, T_{BU}, or the lower bead, T_{BL}, of the tire, T, adjacent the upper bead seat, W_{SU}, and the lower bead seat, W_{SL}, of the wheel, W (because the act of "seating" typically arises from an inflating step where the tire-wheel assembly, TW, is inflated). Accordingly, upon joining or mounting the tire, T, to the wheel, W, the upper bead, T_{BU}, or the lower bead, T_{BL}, of the tire, T, may be arranged about and/or disposed adjacent the outer circumferential surface, W_{C}, of the wheel, W.

In an implementation, the processing sub-station 400 may be included as part of a "single-cell" workstation. A single-cell workstation may include other sub-stations (not shown) that contribute to the processing of a tire-wheel assembly, TW; other sub-stations may include, for example: a soaping sub-station, a stemming sub-station, an inflating sub-station, a match-marking sub-station, a balancing sub-station and the like. The term "single-cell" indicates that the sub-stations contribute to the production of a tire-wheel assembly, TW, without requiring a plurality of successive, discrete workstations that may otherwise be arranged in a conventional assembly line such that a partially-assembled tire-wheel assembly, TW, is "handed-off" along the assembly line (i.e., "handed-off" meaning that an assembly line requires a partially-assembled tire-wheel assembly, TW, to be retained by a first workstation of an assembly line, worked on, and released to a subsequent workstation in the assembly line for further processing). Rather, a single cell workstation provides one workstation having a plurality of sub-stations each performing a specific task in the process of assembling a tire-wheel assembly, TW. This assembling process takes place wherein the tire and/or wheel "handing-off' is either minimized or completely eliminated. As such, a single-cell workstation significantly reduces the cost and investment associated with owning/renting the real estate footprint associated with a conventional tire-wheel assembly line while also having to provide maintenance for each individual workstation defining the assembly line. Thus, capital investment and human oversight is significantly reduced when a single cell workstation is employed in the manufacture of tire-wheel assemblies, TW.

Referring to Figure 13A, the processing sub-station 400 includes a device 412. The device 412 may be referred to as a robotic arm. The robotic arm 412 may be located in a substantially central position relative to a plurality of sub-stations (including, e.g., the processing sub-station 400) of a single-cell workstation. The robotic arm 412 may be attached to and extend from a base / body portion (not shown) connected to ground, G.

The robotic arm 412 may include an end effecter 414. The end effecter 414 may include a claw, gripper, or other means for removably-securing the wheel, W, to the robotic arm 412. The end effecter 414 permits the robotic arm 412 to have the ability to retain and not release the wheel, W, throughout the entire procedure performed by the processing sub-station 400 (and, if applied in a single-cell workstation, the ability to retain and not release the wheel, W, throughout the entire assembling procedure of the tire-wheel assembly, TW). Accordingly, the end effecter 414 minimizes or eliminates the need of the robotic arm 412 to "band-off" the tire-wheel assembly, TW, to (a) subsequent sub-station(s) (not shown).

The processing sub-station 400 may perform several functions / duties including that of: (1) a tire repository sub-station and (2) a mounting sub-station. A tire repository sub-station typically includes one or more tires, T, that may be arranged in a "ready" position for subsequent joining to a wheel, W. A mounting sub-station typically includes structure that assists in the joining of a tire, T, to a wheel, W (e.g., the disposing of a wheel, W, within the passage, TP, of the tire, T).

deferring to Figure 13A, the processing sub-station 400 may be initialized by joining a wheel, W, to the robotic arm 412 at the end effecter 414. The processing sub-station 400 may also be initialized by positioning the tire, T, upon a support member 416. The support member 416 may include a first support member 416a, a second support member 416b, a third support member 416c and a fourth support member 416d. Each of the first, second, third and fourth support members 416a, 416b, 416c, 416d include an upper surface 416' and a lower surface 416".

The lower surface 416" of each of the first, second, third and fourth support members 416a, 416b, 416c, 416d may be respectively connected to at least one first leg member 418a, at least one second leg member 418b, at least one third leg member 418c and at least one fourth leg member 418d. Each of the at least one first, second, third and fourth leg members 418a, 418b, 418c, 418d respectively include a length for elevating or spacing each of the first, second, third and fourth support members 416a, 416b, 416c, 416d from an underlying ground surface, G. Although the robotic arm 412 is not directly connected to the support member 416 (but, rather may be connected to ground, G), the robotic arm 412 may be said to be interfaceable with (as a result of the movements D1-D5 described in the following disclosure) and/or indirectly connected to the support member 416 by way of a common connection to ground, G, due the leg members 418a-418d connecting the support member 416 to ground, G.

The processing sub-station 400 may further include a plurality of tire-engaging devices 420. The plurality of tire-engaging devices 420 may include a first tire-engaging device 420a connected to the upper surface 416' of the first support member 416a, a second tire-engaging device 420b connected to the upper surface 416' of the second support member 416b and a third tire-engaging device 420c connected to the upper surface 416' of the third support member 416c.

Referring to Figures 13B-13C, the first tire-engaging device 420a includes a substantially cylindrical body 422a' that is supported by one or more brackets 422a". The one or more brackets 422a" may support the substantially cylindrical body 422a' at a distance away from the upper surface 416' of the first support member 416a. The one or more brackets 422a" may include a pair of brackets. The substantially cylindrical body 422a' may be a tubular body having an axial passage (nor shown). A central pin (not shown) may be disposed within the axial passage. The central pin may be connected and fixed to the pair of brackets 422a"; accordingly, the substantially tubular, cylindrical body 422a' may be movably-disposed about the central pin such that the substantially tubular, cylindrical body 422a' is permitted to move in a rotating / rolling motion relative to a fixed orientation of the central pin. Alternatively, the substantially cylindrical body 422a' may not include an axial passage and may rotatably-connected-to or non-movably-fixed-to the pair of brackets 422a".

Referring to Figure 13A, the second tire-engaging device 420b includes a first tire-tread-engaging post 430a that may extend from the upper surface 416' of the second support member 416b. The third tire-engaging device 420c includes a second tire-tread-engaging post 430b that may extend from the upper surface 416' of the third support member 416c.

Referring to Figure 13B, the second and third support members 416b, 416c are separated by a gap or first spacing, S1. The first tire-tread-engaging post 430a is separated from the second tire-tread-engaging post 430b by a gap or second spacing, S2. The fourth support member 416d is separated from the second and third support members 416b, 416c by a third gap or spacing, S3.

The second spacing, S2, is greater than the first spacing, S1. The first spacing, S1, may be approximately equal to, but slightly greater than the diameter, W_{D}, of the wheel, W; further, the tire diameter, T_{D}, / central chord, T_{C2}, may be greater than the first spacing, S1. The second spacing, S2, may be approximately equal to the left chord, T_{C1}, and the right chord, T_{C3}, of the tire, T; further, the tire diameter, T_{D}, / central chord, T_{C2}, may be greater than the second spacing, S2. The third spacing, S3, may be approximately equal to, but slightly greater than the diameter, W_{D}, of the wheel, W, and less than the diameter, T_{D}, of the tire, T.

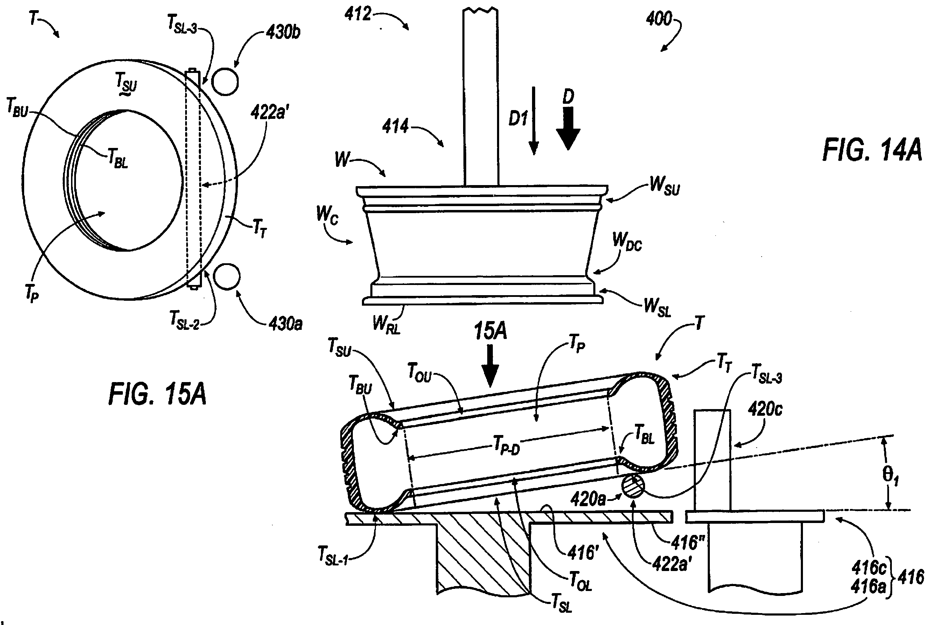

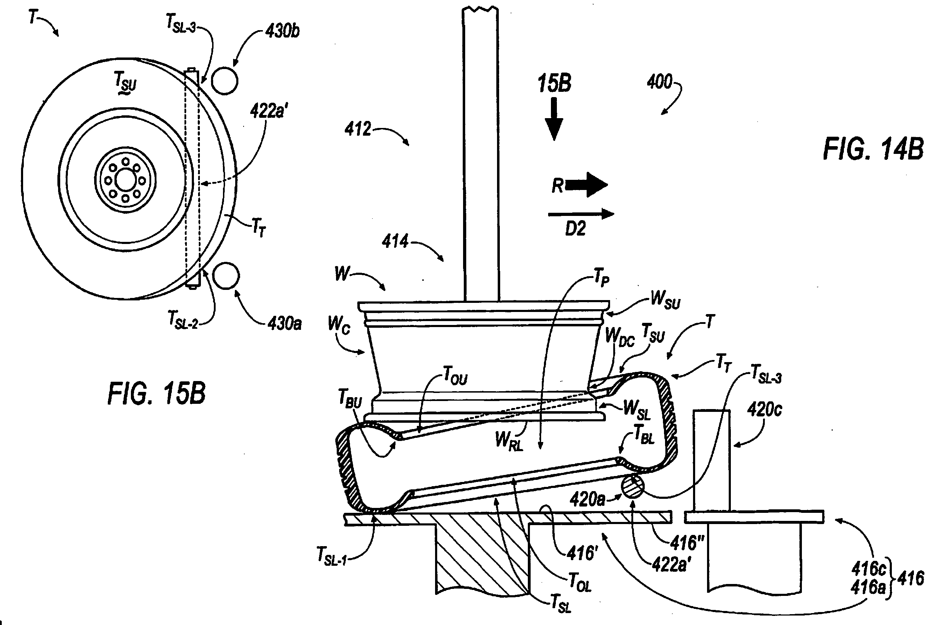

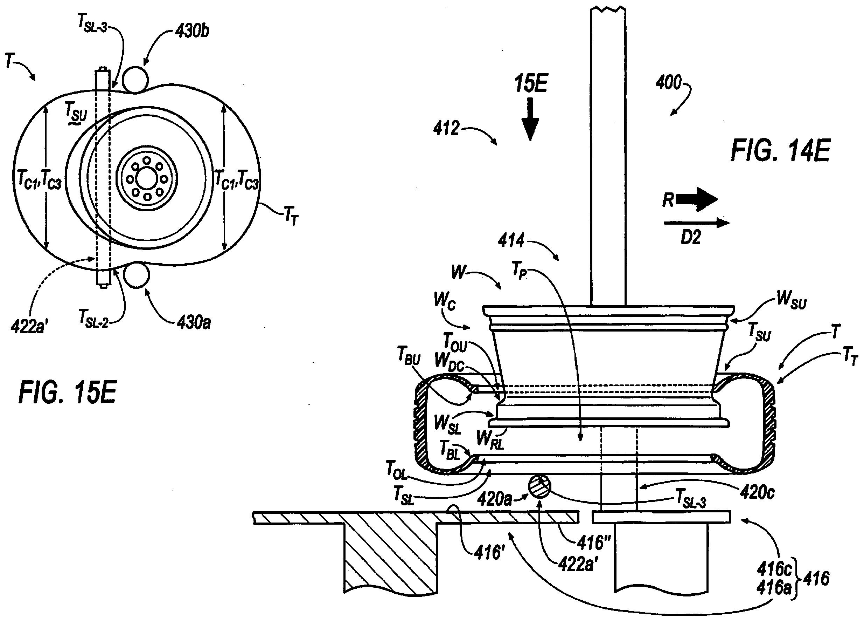

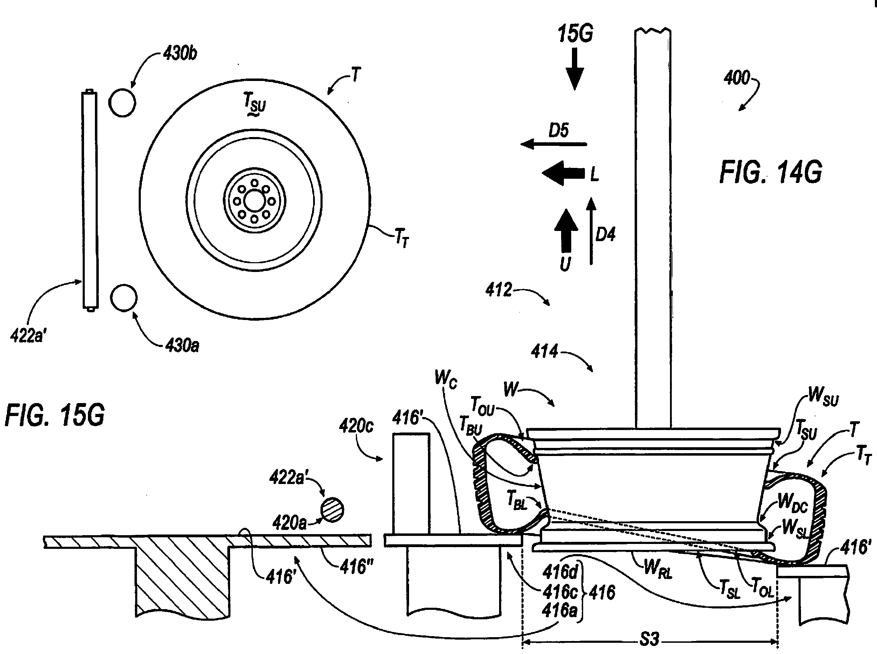

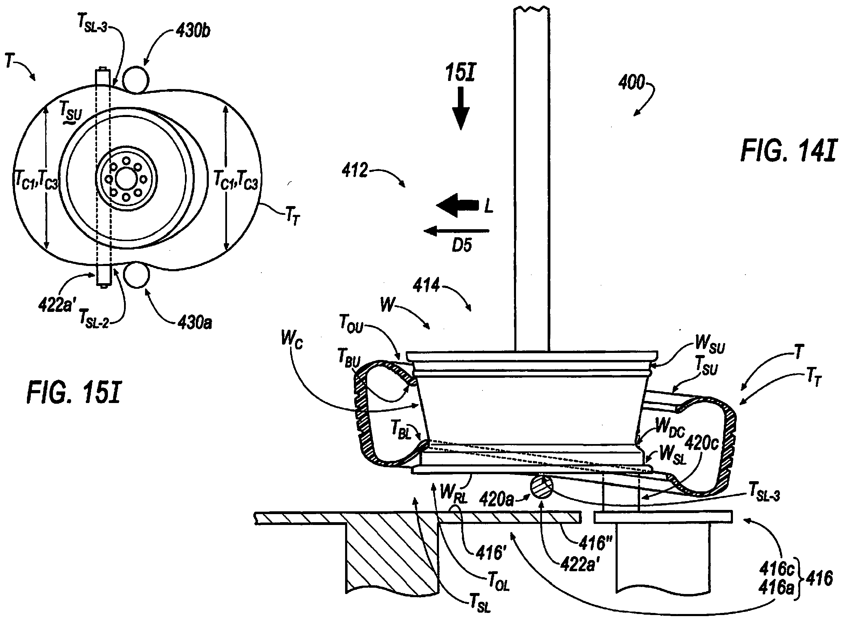

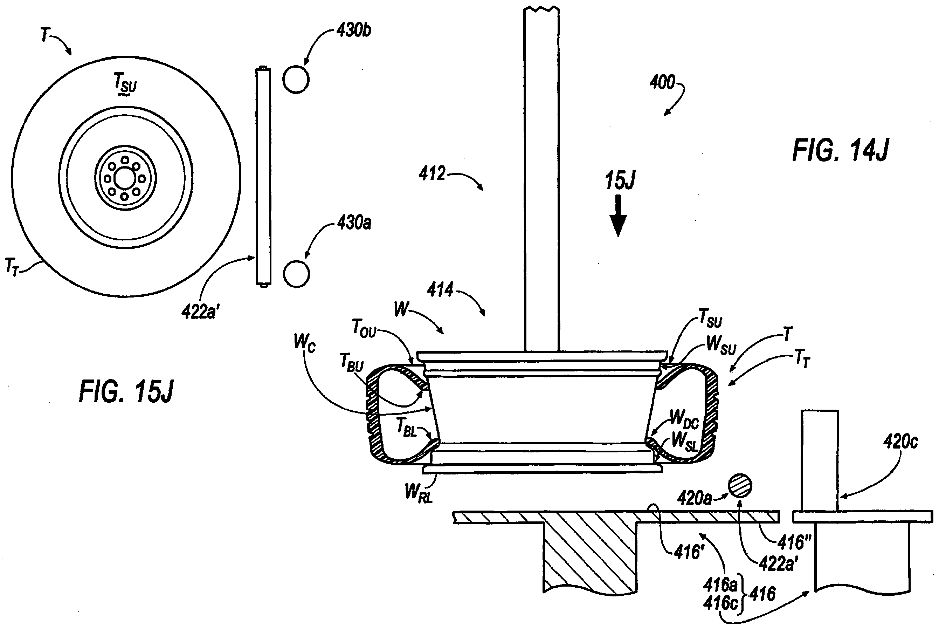

As seen in Figure 14A and with reference to Figure 15A, prior to joining the tire, T, to the wheel, W, the tire, T, may be said to be arranged in a first relaxed, unbiased orientation such that the upper tire opening, T_{OU}, and the lower tire opening, T_{OL}, define the passage, T_{P}, to include a diameter, T_{P-D}. When the tire, T, is eventually joined to the wheel, W (see, e.g., Figure 14J), the upper bead, T_{BU}, and the lower bead, T_{BL}, may be arranged proximate but not seated adjacent, respectively, the upper bead seat, W_{SU}, and the lower bead seat, W_{SL}, of the wheel, W; later, upon inflating the tire, T, at, e.g., an inflation sub-station (not shown), the upper bead, T_{BU}, and the lower bead, T_{BL}, may be seated (i.e., disposed adjacent), respectively, the upper bead seat, W_{SU}, and the lower bead seat, W_{SL}, of the wheel, W. Further, when the tire, T, is joined to the wheel, W (see, e.g., Figures 14J), the tire, T, may be said to be arranged in a second substantially relaxed, but somewhat biased orientation such that the diameter, T_{P-D}, of the passage, T_{P}, is substantially circular and substantially similar to its geometry of the first relaxed, unbiased orientation of the tire, T.

Referring to Figure 14A, the robotic arm 412 is arranged in a spaced-apart orientation with respect to the support member 416, which includes the tire, T, arranged in a "ready" position. The "ready" position may include a portion of the lower sidewall surface, T_{SL}, of the tire, T, arranged adjacent the substantially cylindrical body 422a' of the first tire-engaging device 420a. The "ready" position may further include the tire, T, being arranged in a first angularly-offset orientation, θ₁, with respect to the upper surface 416' of the first support member 416a.

The first angularly-offset orientation, θ₁, of the tire, T, may result from the non-co-planar relationship the substantially cylindrical body 422a' of the first tire-engaging device 420a with that of the upper surface 416' of the first support member 416a such that:
(1) the first portion, T_{SL-1}, of the lower sidewall surface, T_{SL}, is arranged adjacent the upper surface 416' of the first support member 416a, (2) the second portion, T_{SL-2}, of the lower sidewall surface, T_{SL}, is arranged adjacent the substantially cylindrical body 422a' of the first tire-engaging device 420a (noting that, in Figure 14A, the second portion, T_{SL-2}, is not represented due to the line-of-view of the cross-sectional reference line of Figure 13A, but, however, is shown in Figure 15A), and (3) a third portion, T_{SL-3}, of the lower sidewall surface, T_{SL}, is arranged adjacent the substantially cylindrical body 422a' of the first tire-engaging device 420a. Accordingly, the support member 416 may provide a three-point support (which is more clearly shown at Figure 13A) at T_{SL-1}, T_{SL-2}, T_{SL-3} for the lower sidewall surface, T_{SL}, of the tire, T, while remaining portions of the lower sidewall surface, T_{SL}, of the tire, T, are not in direct contact with any other portion of the upper surface surfaces 416', 422b', 422c' of the support member 416 when the tire, T, is arranged in the first angularly-offset orientation, θ₁.

The processing sub-station 400 may execute a mounting procedure by causing a controller, C (see, e.g., Figure 13A) to send one or more signals to a motor, M (see, e.g., Figure 13A), that drives movement (according to the direction of the arrows, D1-D5 - see Figures 14A-14J) of the robotic arm 412. Alternatively or in addition to automatic operation by the controller, C, according to inputs stored in memory, the movement, D1-D5, may result from one or more of a manual, operator input, O (e.g., by way of a joystick, depression of a button or the like).

As seen in Figure 14A, a first, down, D, movement according to the direction of arrow, D1, may reduce the spaced-apart orientation of robotic arm 412 with respect to the support member 416. Referring to Figure 14B, the movement according to the direction of the arrow, D1, may cease upon locating: (1) a first (e.g., left) portion of the lower rim surface, W_{RL}, of the wheel, W, adjacent a first (e.g., left) portion of the upper sidewall surface, T_{SU}, of the tire, T, and (2) a second (e.g. right) portion of the lower bead seat, W_{SL}, and drop center, W_{DC}, of the wheel, W, within the passage, T_{P}, of the tire, T, such that a portion of the drop center, W_{DC}, of the wheel, W, is disposed in a spaced-apart relationship with respect to a first (e.g., right) portion of the upper bead, T_{BU}, of the tire, T.

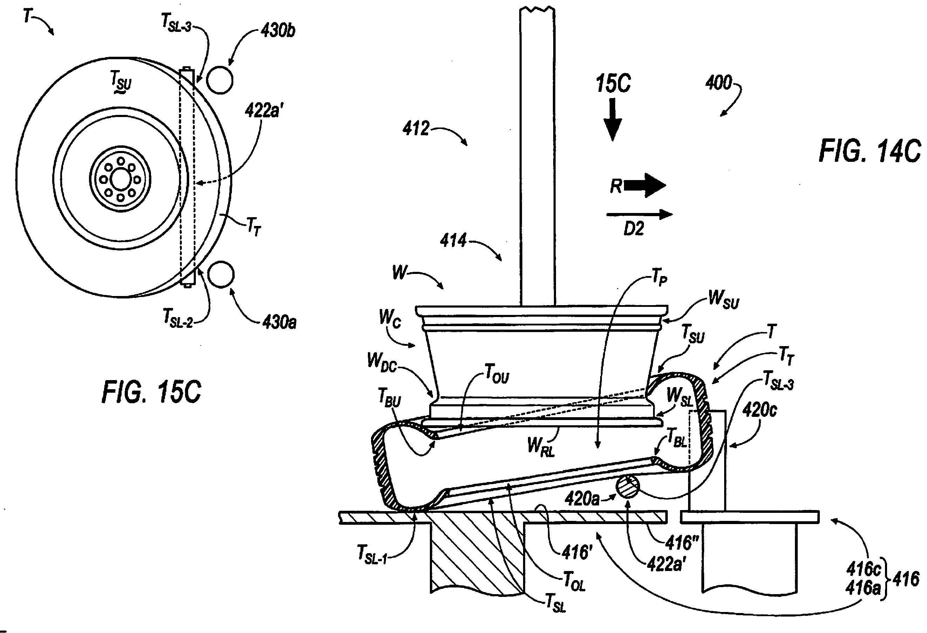

With continued reference to Figure 14B, a second movement according to the direction of arrow, D2, may cause forwardly (e.g., to the right, R) movement of the wheel, W. Referring to Figure 14C, the movement according to the direction of the arrow, D2, results in the spaced-apart relationship of the drop center, W_{DC}, of the wheel, W, and the first (e.g., right) portion of the upper bead, T_{BU}, of the tire, T, being reduced such that the drop center, W_{DC}, of the wheel, W, and the first (e.g., right) portion of the upper bead, T_{BU}, of the tire, T, are eventually in direct contact with one another. With corresponding reference to Figure 15C, the tread surface, T_{T}, of the tire, T, is arranged in a spaced-apart relationship with respect to the first tire-tread-engaging post 430a and the second tire-tread-engaging post 430b.

In addition to the drop center, W_{DC}, of the wheel, W, and the first (e.g., right) portion of the upper bead, T_{BU}, of the tire, T, eventually being in direct contact with one another, movement according to the direction of the arrow, D2, also results in a change in orientation of the lower rim surface, W_{RL}, of the wheel, W, with respect to the first (e.g., left) portion of the upper sidewall surface, T_{SU}, of the tire, T. For example, as seen in Figure 14C, movement according to the direction of the arrow, D2, results in the lower rim surface, W_{RL}, of the wheel, W, being arranged in an opposing relationship with a lesser amount of a portion of the first (e.g., left) portion of the upper sidewall surface, T_{SU}, of the tire, T but more so in a substantially opposing relationship with a left portion of the upper bead, T_{BU}, of the tire, T.

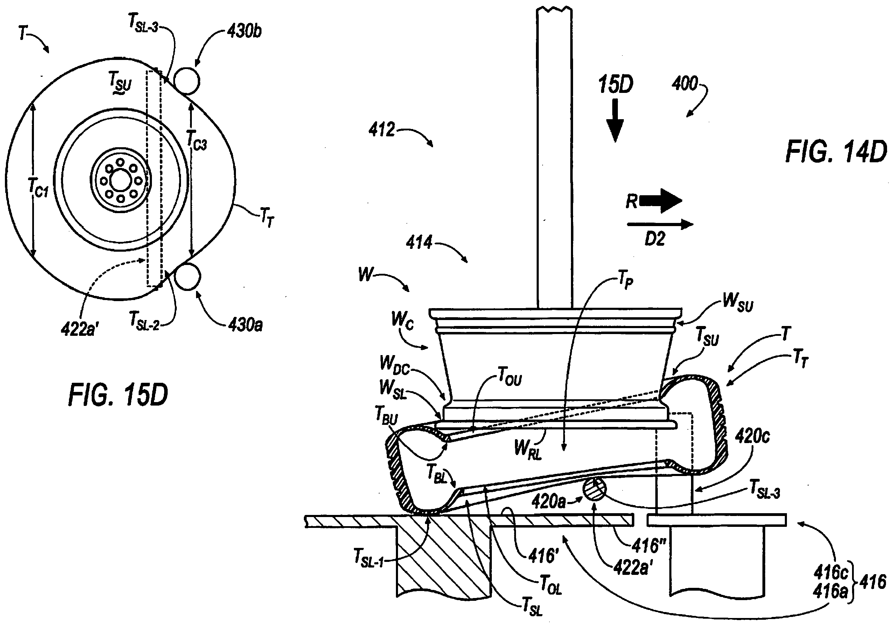

Referring to Figures 14C-14D, after the drop center, W_{DC}, of the wheel, W, and the first (e.g., right) portion of the upper bead, T_{BU}, of the tire, T, are eventually in direct contact with one another, further movement according to the direction of the arrow, D2, results in the lower sidewall surface, T_{SL}, of the tire, T, being dragged across the substantially cylindrical body 422a' of the first tire-engaging device 420a from left-to-right as the tread surface, T_{T}, of the tire, T, is moved closer to the first tire-tread-engaging post 430a and the second tire-tread-engaging post 430b such that, as seen in Figures 14D and 15D, the tread surface, T_{T}, is ultimately arranged in direct contact with both of the first tire-tread-engaging post 430a and the second tire-tread-engaging post 430b.

Referring to Figures 14D-14F, as a result of the forwardly (e.g., to the right, R) movement of the wheel, W, according to the direction of the arrow, D2, the tire, T, is advanced through the second spacing, S2, formed by the first and second tire-tread-engaging pasts 430a, 430b from the right chord, T_{C3}, to the left chord, T_{C1}; because chords (including, e.g., the central chord, T_{C2}) of the tire, T, between the left chord, T_{C1}, and the right chord, T_{C3}, are greater than that of the left chord, T_{C1}, and the right chord, T_{C3}, the first and second tire-tread-engaging posts 430a, 430b interfere with movement of the tire, T, through the second spacing, S2.

As a result of the above-described interference, the tire, T, temporality deforms such that the diameter, T_{P-D}, of the passage, T_{P}, of the tire, T, is temporality upset to include a substantially oval form rather than a circular form. Accordingly, in a substantially similar fashion, the upper tire opening diameter, T_{OU-D}, and the lower tire opening diameter, T_{OL-D}, are also temporality upset to include a substantially oval form rather than a circular form.

The oval form of the upper tire opening diameter, T_{OU-D}, and the lower tire opening diameter, T_{OL-D}, reduces a portion of contact (and, as a result, friction) of the upper bead, T_{BU}, of the tire, T, with that of the outer circumferential surface, W_{C}, of the wheel, W, and, as such permits at least a partial mounting of the tire, T, to the wheel, W, to occur. Accordingly, as seen in Figures 14D-14F and 15D-15F, as the wheel, W, advances the tire, T, forwardly (e.g., to the right, R) through the second spacing, S2, according to the direction of the arrow, D2, the oval deformation of at least the diameter, T_{OU-D}, results in an oval deformation of the upper bead, T_{BU}, of the tire, T, such that the first (e.g., left) portion of the lower rim surface, W_{RL}, of the wheel, W, encounters less resistance or interference with the upper bead, T_{BU}, of the tire, T, as the left portion of the upper bead, T_{BU}, of the tire, T, is moved from the substantially opposing relationship with a left portion of the upper bead, T_{BU}, of the tire, T, as seen in Figure 14E to a different orientation substantially adjacent one or more of the outer circumferential surface, W_{C}, and drop center, W_{DC}, of the wheel, W.

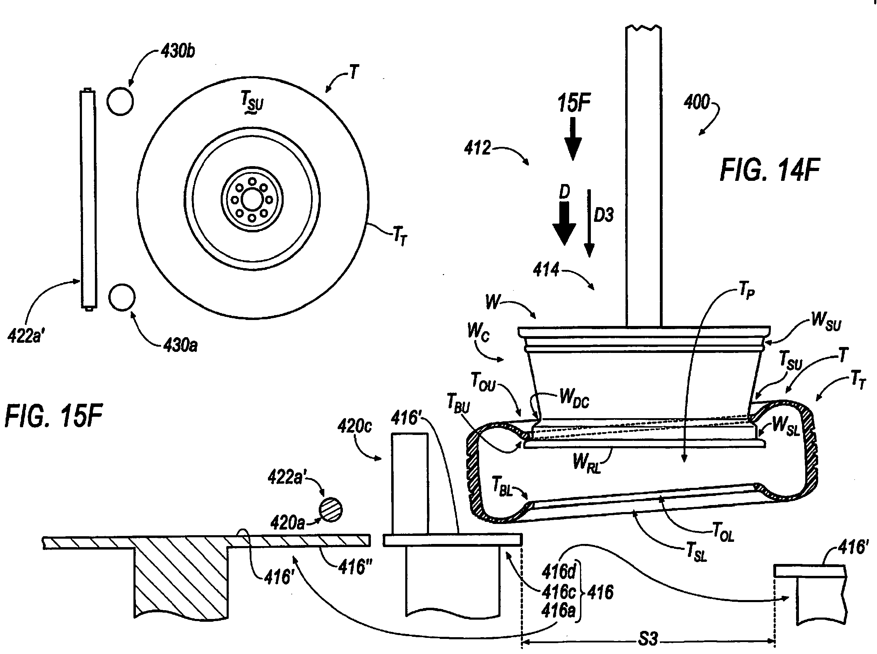

Referring to Figures 14F and 15F, once the left chord, T_{C1}, has been advanced through the second spacing, S2, from a rearwardly orientation (e.g., to the left, L) of the first and second tire-tread-engaging posts 430a, 430b to a forwardly orientation (e.g., to the right, R) of the first and second tire-tread-engaging posts 430a, 430b, the entire circumference of the upper bead, T_{BU}, of the tire, T, may be said to be arranged in a preliminary "mounted position" adjacent/about one or more of the outer circumferential surface, W_{C}, and the drop center, W_{DC}, of the wheel, W. As illustrated, however, the entire circumference of the lower bead, T_{BL}, of the tire, T, may be said to be arranged in "un-mounted position" due to the lower bead, T_{BL}, of the tire, T, being arranged in a non-adjacent orientation with respect to any portion of the wheel, W.

As seen in Figure 14F, the movement according to the direction of the arrow, D2, may cease upon arranging the wheel, W, above the third spacing, S3. Then, as seen in Figure 14F, a second, down, D, movement according to the direction of arrow, D3, may occur in order to move the wheel, W, toward the support member 416. Referring to Figure 14G, the movement according to the direction of the arrow, D3, may cease upon locating: (1) the left portion of the lower sidewall surface, T_{SL}, of the tire, T, adjacent the upper surface 416' of each of the second support member 416b and the third support member 416c, (2) the right portion of the lower sidewall surface, T_{SL}, of the tire, T, adjacent the upper surface 416' of the fourth support member 416d, and (3) the lower bead seat, W_{SL}, of the wheel, W, substantially coplanar with both of the second support member 416b and the third support member 416c. Additionally, as shown in Figures 14F-14G, the upper surface 416' of the second and third support members 416b, 416c are not co-planar with but arranged at a higher orientation when compared to the orientation of the upper surface 416' of the fourth support member 416d.

As seen in Figure 14G, a result of the movement according to the direction of the arrow, D3, the wheel, W, is permitted to plunge through the passage, T_{P}, of the tire, T, in order to arrange the tire, T, relative to the wheel, W, in a "further mounted" orientation. As seen in Figure 14G, movement according to the direction of the arrow, D3, results in: (1) the left portion of the lower bead seat, W_{SL}, and drop center, W_{DC}, of the wheel, W, being orientated out of the passage, T_{P}, of the tire, T, and in a spaced-apart, opposing orientation with the left portion of the lower bead, T_{BL}, of the tire, T, and (2) a right portion of a lower, outer rim surface, W_{RL}, of the wheel, W, proximate the right portion of the lower bead seat, W_{SL}, such that a right portion of the lower sidewall surface T_{SL} of the tire, T, is disposed adjacent the upper surface 416' of the fourth support member 416d, and (3) the drop center, W_{DC}, of the wheel, W, being disposed within the passage, T_{P}, of the tire, T, and adjacent to the right portion of the lower bead, T_{BL}, of the tire, T, while (4) the upper bead, T_{BU}, of the tire, T, substantially circumscribes the circumferential surface, W_{C}, of the wheel, W.

Referring to Figure 14G, after the movement according to the direction of the arrow, D3, has ceased, an upward movement, U, according to the direction of arrow, D4, may occur in order to move the wheel, W, away from the support member 416 and then, subsequently, a rearwardly movement to the left, L, according to the direction of arrow, D5, may occur. The upward movement, U, according to the direction of the arrow, D4, results in the lower bead seat, W_{SL}, of the wheel, W, being no longer substantially coplanar with both of the second support member 416b and the third support member 416c, but, rather, the lower bead seat, W_{SL}, and lower, outer rim surface, W_{RL}, of the wheel, W, are arranged at least above the upper surface 416' of both of the second support member 416b and the third support member 416c.

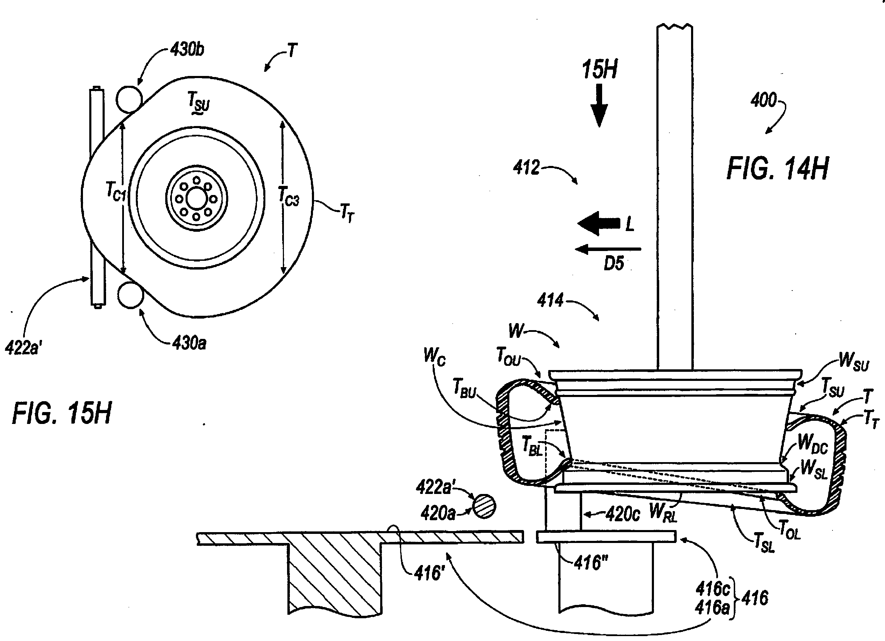

Referring to Figure 14H, as a result of the rearwardly (e.g., to the left, L) movement of the wheel, W, according to the direction of the arrow, D5, the tire, T, is advanced toward the first and second tire-tread-engaging posts 430a, 430b and through the second spacing, S2, formed by the first and second tire-tread-engaging pasts 430a, 430b from the left chord, T_{C1}, to the right chord, T_{C3}; as similarly explained above, because chords (including, e.g., the central chord, T_{C2}) of the tire, T, between the left chord, T_{C1}, and the right chord, T_{C3}, are greater than that of the left chord, T_{C1}, and the right chord, T_{C3}, the first and second tire-tread-engaging posts 430a, 430b interfere with movement of the tire, T, through the second spacing, S2.

As a result of the above-described interference, the tire, T, in a similar manner as explained above, temporality deforms such that the diameter, T_{P-D}, of the passage, T_{P}, of the tire, T, is temporality upset to include a substantially oval form rather than a circular form. Accordingly, in a substantially similar fashion, the upper tire opening diameter, T_{OU-D}, and the lower tire opening diameter, T_{OL-D}, are also temporality upset to include a substantially oval form rather than a circular form.

The oval form of the upper tire opening diameter, T_{OU-D}, and the lower tire opening diameter, T_{OL-D}, reduces a portion of contact (and, as a result, friction) of the lower bead, T_{BL}, of the tire, T, with that of the outer circumferential surface, W_{C}, of the wheel, W, and, as such permits a further mounting of the tire, T, to the wheel, W, to occur such that the partial mounting of the tire, T, with the wheel, W, transitions to a "full mounting" of the tire, T, with the wheel, W. Accordingly, as seen in Figures 14H-14I and 15H-15I, as the wheel, W, advances the tire, T, rearwardly (e.g., to the left, L) through the second spacing, S2, according to the direction of the arrow, D5, the oval deformation of at least the diameter, T_{OL-D}, results in an oval deformation of the lower bead, T_{BL}, of the tire, T, such that the right portion of the lower rim surface, W_{RL}, of the wheel, W, encounters less resistance or interference with the lower bead, T_{BL}, of the tire, T, as the right portion of the lower bead, T_{BL}, of the tire, T, is moved from an un-mounted orientation with respect to the drop center, W_{DC}, of the wheel, W, to a mounted orientation (see, e.g., Figure 14J) with respect to the drop center, W_{DC}, of the wheel, W. Referring to Figure 14I, as the tire, T, is moved through the second spacing; S2, the lower sidewall surface, T_{SL}, of the tire, T, may contact and be biased by the substantially cylindrical body 422a' in order to assist movement of the lower bead, T_{BL}, of the tire, T, from the un-mounted orientation with respect to the drop center, W_{DC}, of the wheel, W, to the mounted orientation. Referring to Figure 14J, once the tire, T, has been completely moved through the second spacing, S2, according to the direction of the arrow, D5, the tire, T, may be said to be mounted to the wheel, W, such that the upper bead, T_{BU}, of the tire, T, circumscribes the outer circumferential surface, W_{C}, and as the lower bead, T_{BL}, of the tire, T, circumscribes and is disposed adjacent the drop center, W_{DC}, of the wheel, W.

The present invention has been described with reference to certain exemplary embodiments thereof. However, it will be readily apparent to those skilled in the art that it is possible to embody the invention in specific forms other than those of the exemplary embodiments described above. This may be done without departing from the spirit of the invention. For example most embodiments shown herein depict engaging a wheel (by way of a robotic arm) and manipulating the wheel to mount a tire thereon. However, nothing herein shall be construed to limit the scope of the present invention to only manipulating a wheel to mount a tire thereon. The exemplary embodiments are merely illustrative and should not be considered restrictive in any way. The scope of the invention is defined by the appended claims and their equivalents, rather than by the preceding description.

## Claims

1. An apparatus (300) for processing a tire (T) and a wheel (W) for forming a tire wheel assembly (TW), comprising:
a tire support member (316) including a first tire support member (316a), a second tire support member (316b) and a third tire support member (316c), wherein each of the first, second and third tire support members (316a, 316b, 316c) include an upper surface (316') and a lower surface (316"); and
a robotic arm (312) for moving the wheel (W);
**characterised by** further comprising a plurality of tire engaging devices (320) including: a first tire engaging device (320a) connected to the upper surface (316') of the first tire support member (316a), a second tire engaging device (320b) connected to the upper surface (316') of the second tire support member (316b), and a third tire engaging device (320c) connected to the upper surface (316') of the third tire support member (316c), wherein the first tire engaging device (320a) includes a substantially cylindrical body (322a') supported by one or more brackets (322a"), wherein the second tire engaging device (320b) includes a first tire tread engaging post (322b'), wherein the third tire engaging device (320c) includes a second tire tread engaging post (322c').

2. The apparatus (300) according to claim 1, wherein each of the first tire tread engaging post (322b') and the second tire tread engaging post (322c') includes
a lower surface (322b", 322c") having at least one female recess (326b, 326c) that receives at least one male guide member (328b, 328c) extending from the upper surface (316') of each of the second and third tire support members (316b, 316c).

3. The apparatus (300) according to claim 1, wherein each of the first tire tread engaging post (322b') and the second tire tread engaging post (322c') includes
an upper, substantially conical tire-sidewall-engaging surface (322b"', 322c"').

4. The apparatus (300) according to claim 3, wherein each of the first tire tread engaging post (322b') and the second tire tread engaging post (322c') includes
a laterally-extending wheel-engaging portion (322b"", 322c""), wherein the laterally-extending wheel-engaging portions (322b"", 322c"") are arranged directly facing one another in an opposing, spaced-apart relationship such that the laterally-extending wheel-engaging portions 322b"", 322c"" are spaced apart at a distance that is less than a diameter (W_{D}) of the wheel (W) of the tire-wheel assembly (TW).

5. The apparatus (300) according to claim 1, wherein the plurality of tire engaging devices (320) include
a fourth tire engaging device (320d) connected to the upper surface (316') of the second tire support member (316b),
a fifth tire engaging device (320e) connected to the upper surface (316') of the third tire support member (316c).

6. The apparatus (300) according to claim 5, wherein each of the fourth tire engaging device (320d) and the fifth tire engaging device (320e) includes
a body (322d', 322e') connected to the upper surface (316') of each of the second and third tire support members (316b, 316c),
a tire-tread-surface-engaging member (322d"', 322e"') rotatably-coupled to the body (322d', 322e'), and
an array of tire-tread-engaging posts (330d, 330e) disposed upon the tire-tread-surface-engaging member (322d"', 322e"').

7. The apparatus (300) according to claim 5, wherein the tire support member (316) further comprises
a fourth tire support member (316d), wherein the fourth tire support member (31d) includes an upper surface (316'), wherein the plurality of tire engaging devices (320) further comprise
a sixth tire engaging device (320f) connected to the upper surface (316') of the fourth tire support member (316).

8. The apparatus (300) according to claim 7, wherein the sixth tire-engaging device (320f) includes
a body (322f),
a tire-tread-surface-engaging member (322f ") including a cradle (322f"") that is connected to the body (322f).

9. A method for processing a tire (T) and a wheel (W) for forming a tire wheel assembly (TW), comprising the steps of:
providing an apparatus including a tire support member (116) that includes at least a first tire support member (116a) of a plurality of tire support members and a robotic arm (312) for moving the wheel (W);
arranging the (T) adjacent a tire tread engaging surface (322a') of a tire tread engaging device (320a), wherein the tire tread engaging device (320a) is connected to an upper surface (316') of the first tire support member (316a);
partially arranging the wheel (W) within a passage (T_{P}) of the tire (T) such that one or more of an upper bead (T_{BU}) of the tire (T) and a lower bead (T_{BL}) of the tire (T) is/are not entirely arranged about a circumference (W_{C}) of the wheel (W);
moving the wheel (W) through a first gap (S2') formed by the apparatus (300);
utilizing the movement of the wheel (W) to impart corresponding movement the tire (T) through the first gap (S2') formed by a first tire sidewall engaging device (322b"') and a second tire sidewall engaging device (322c"') of the apparatus (300) such that a tread surface (T_{T}) of the tire (T) directly engages both of the first tire sidewall engaging device (322b"') and the second tire sidewall engaging device (322c"'), wherein each of the first tire sidewall engaging device (322b"') and the second tire sidewall engaging device (322c"') include a wheel-contacting portion (322b"", 322c"") that forms a second gap (S1') having a dimension that is less than the first gap (S2'), wherein the movement of the wheel (W) results in the wheel (W) passing through the second gap (S2') such that a surface portion (W_{RL}) of the wheel (W) directly engages the wheel-contacting portion (322b"", 322c"") connected respectively to the first tire sidewall engaging device (322b"') and the second tire sidewall engaging device (322c"'), wherein, as a result of the utilizing the movement step, being **characterised by** the step of
causing one or both of a substantially circular, upper tire opening (T_{OU}) and a substantially circular, lower tire opening (T_{OL}) that form the passage (T_{P}) of the tire (T) to be manipulated to have a substantially non-circular form to permit both of the upper bead (T_{BU}) of the tire (T) and the lower bead (T_{BL}) of the tire (T) to be arranged about the circumference (W_{C}) of the wheel (W).

10. The method according to claim 9, wherein the tire tread engaging device (320a) further includes a substantially cylindrical body (322a') supported by one or more brackets (322a"), wherein the substantially cylindrical body (322a') is elevated at a distance from the upper surface (316') of the first tire support member (316a) by the one or more brackets (322a"), wherein the arranging step further comprising the steps of
arranging a first portion (T_{SL-1}) of a sidewall surface (T_{SL}) of the tire (T) adjacent the upper surface (316') of the first tire support member (316a),
arranging a second portion (T_{SL-2}) of the sidewall surface (T_{SL}) of the tire (T) adjacent a first portion of the substantially cylindrical body (322a'), and
arranging a third portion (T_{SL-3}) of the sidewall surface (T_{SL}) of the tire (T) adjacent a second portion of the substantially cylindrical body (322a').

11. The method according to claim 10, wherein the first, second and third portions (T_{SL-1}, T_{SL-2}, T_{SL-3}) of the tire (T) are arranged relative to the tire support member (316) for
disposing the tire (T) upon the tire support member (316) at an angularly-offset orientation (θ₁) with respect to the upper surface (316c') of the first tire support member (316a).

12. The method according to claim 9, further comprising the step of
arranging the first tire sidewall engaging device (320b) and the second tire sidewall engaging device (320c) in a non-fixed orientation to render the first gap (S2') as having a variable geometry.

13. The method according to claim 9, wherein the first gap (S2') is less than a diameter (T_{D}) of the tire (T), wherein the first gap (S2') is approximately equal to but less than a chord (T_{C1}, T_{C3}) of the tire (T) having a geometry different from that of the diameter (T_{D}) of the tire (T).

14. The method according to claim 9, wherein, prior to the partially arranging step, further comprising the step of
removably-coupling the wheel (W) to an end effecter (314) of a movable robotic arm (312), wherein the moving the wheel (W) step is conducted by movements of one or more of the robotic arm (312) and the effecter (314), wherein, upon arranging the upper bead (T_{BU}) of the tire (T) and the lower bead (T_{BL}) of the tire (T) about the circumference (W_{C}) of the wheel (W), the tire (T) is indirectly joined to the end effecter (314) by way of the wheel (W).

15. The method according to claim 9, wherein before, during or after the moving step, further comprising the step of
deploying one or more of a third tire sidewall engaging device (320d), a fourth tire sidewall engaging device (320e) and a sixth tire sidewall engaging device (320f); and
arranging one or more of the third tire sidewall engaging device (320d), the fourth tire sidewall engaging device (320e) and the sixth tire sidewall engaging device (320f) in direct contact with the tread surface (T_{T}) of the tire (T).

16. The method according to claim 15, wherein the arranging one or more of the third tire sidewall engaging device (320d), the fourth tire sidewall engaging device (320e) and the sixth tire sidewall engaging device (320f) in direct contact with the tread surface (T_{T}) of the tire (T) result in
utilizing one or more of the third tire sidewall engaging device (320d), the fourth tire sidewall engaging device (320e) and the sixth tire sidewall engaging device (320f) for contributing to the causing step by
impeding movement of the tire (T) arising from the moving step.

17. The method according to claim 15, wherein the arranging one or more of the third tire sidewall engaging device (320d), the fourth tire sidewall engaging device (320e) and the sixth tire sidewall engaging device (320f) in direct contact with the tread surface (T_{T}) of the tire (T) result in
utilizing one or more of the third tire sidewall engaging device (320d), the fourth tire sidewall engaging device (320e) and the sixth tire sidewall engaging device (320f) for contributing to the causing step by
providing a leveraging surface for the tire (T) as the tire (T) is moved responsive to the moving step.

## Patentansprüche

1. Eine Vorrichtung (300) zur Verarbeitung eines Reifens (T) und eines Rades (W) für die Herstellung einer Reifen-Rad-Anordnung (TW), die Folgendes aufweist:
ein Reifen-Auflageteil (316), das ein erstes Reifen-Auflageteil (316a), ein zweites Reifen-Auflageteil (316b) und ein drittes Reifen-Auflageteil (316c) einschließt, wobei jedes der ersten, zweiten und dritten Reifen-Auflageteile (316a, 316b, 316c) eine Oberseite (316') und eine Unterseite (316") einschließt; und
einen Robotikarm (312) für die Bewegung des Rades (W);
**dadurch gekennzeichnet, dass** sie darüberhinaus eine Vielzahl von Reifen-Einspannvorrichtungen (320) aufweist, die Folgendes einschließen: eine erste Reifen-Einspannvorrichtung (320a), die mit der Oberseite (316') des ersten Reifen-Auflageteils (316a) verbunden ist, eine zweite Reifen-Einspannvorrichtung (320b), die mit der Oberseite (316') des zweiten Reifen-Auflageteils (316b) verbunden ist, und eine dritte Reifen-Einspannvorrichtung (320c), die mit der Oberseite (316') des dritten Reifen-Auflageteils (316c) verbunden ist, wobei die erste Reifen-Einspannvorrichtung (320a) ein im Wesentlichen zylindrisches Gehäuse (322a') einschließt, das von einer oder mehreren Halteklammern (322a") gehalten wird, wobei die zweite Reifen-Einspannvorrichtung (320b) einen ersten Reifenprofil-Auflagepfosten (322b') einschließt, und wobei die dritte Reifen-Einspannvorrichtung (320c) einen zweiten Reifenprofil-Auflagepfosten (322c') einschließt.

2. Die Vorrichtung (300) gemäß Anspruch 1, wobei sowohl der erste Reifenprofil-Auflagepfosten (322b') als auch der zweite Reifenprofil-Auflagepfosten
(322c') eine Unterseite (322b", 322c") mit mindestens einer Vertiefung (326b, 326c) einschließen, die mindestens ein Stecker-Führungsteil (328b, 328c) aufnimmt, das sich von der Oberseite (316') sowohl des zweiten als auch des dritten Reifen-Auflageteils (316b, 316c) erstreckt.

3. Die Vorrichtung (300) gemäß Anspruch 1, wobei sowohl der erste Reifenprofil-Auflagepfosten (322b') als auch der zweite Reifenprofil-Auflagepfosten (322c')
eine obere, im Wesentlichen konische Reifen-Seitenwand-Auflagefläche (322b"', 322c"') einschließt.

4. Die Vorrichtung (300) gemäß Anspruch 3, wobei sowohl der erste Reifenprofil-Auflagepfosten (322b') als auch der zweite Reifenprofil-Auflagepfosten
(322c') einen sich seitlich erstreckenden Rad-Auflageteil (322b"", 322c"") einschließen, wobei die sich seitlich erstreckenden Rad-Auflageteile (322b"", 322c"") so angeordnet sind, dass sie sich direkt in einer gegenüberliegenden, getrennten Beziehung gegenüberstehen, so dass die sich seitlich erstreckenden Rad-Auflageteile (322b"", 322c"") in einem Abstand voneinander getrennt sind, der geringer ist als ein Durchmesser (W_{D}) des Rades (W) der Reifen-Rad-Anordnung (TW).

5. Die Vorrichtung (300) gemäß Anspruch 1, wobei die Vielzahl der Reifen-Einspannvorrichtungen (320)
eine vierte Reifen-Einspannvorrichtung (320d) einschließt, die mit der Oberseite (316') des zweiten Reifen-Auflageteils (316b) verbunden ist,
und eine fünfte Reifen-Einspannvorrichtung (320e) einschließt, die mit der Oberseite (316') des dritten Reifen-Auflageteils (316c) verbunden ist.

6. Die Vorrichtung (300) gemäß Anspruch 5, wobei sowohl die vierte Reifen-Einspannvorrichtung (320d) als auch die fünfte Reifen-Einspannvorrichtung
(320e) ein Gehäuse (322d', 322e') einschließen, das mit der Oberseite (316') sowohl des zweiten als auch des dritten Reifen-Auflageteils (316b, 316c) verbunden ist,
ein Reifen-Profil-Oberflächen-Einspannteil (322d"', 322e"') einschließen, das drehbar mit dem Gehäuse (322d', 322e') gekoppelt ist, und
eine Anordnung von Reifen-Profil-Auflagepfosten (330d, 330e) einschließen, die auf dem Reifen-Profil-Oberflächen-Einspannteil (322d"', 322e"') angeordnet sind.

7. Die Vorrichtung (300) gemäß Anspruch 5, wobei das Reifen-Auflageteil (316) darüberhinaus
ein viertes Reifen-Auflageteil (316d) aufweist, wobei das vierte Reifen-Auflageteil (31 d) eine Oberseite (316') einschließt, und wobei die Vielzahl der Reifen-Einspannvorrichtungen (320) darüberhinaus
eine sechste Reifen-Einspannvorrichtung (320f) einschließt, die mit der Oberseite (316') des vierten Reifen-Auflageteils (316) verbunden ist.

8. Die Vorrichtung (300) gemäß Anspruch 7, wobei die sechste Reifen-Einspannvorrichtung (320f)
ein Gehäuse (322f') einschließt,
und ein Reifen-Profil-Oberflächen-Einspannteil (322f") mit einer Gabel (322f"") einschließt, die mit dem Gehäuse (322f') verbunden ist.

9. Ein Verfahren zur Verarbeitung eines Reifens (T) und eines Rades (W) für die Herstellung einer Reifen-Rad-Anordnung (TW), die die folgenden Schritte aufweist:
die Bereitstellung einer Vorrichtung, die ein Reifen-Auflageteil (116) einschließt, das wiederum mindestens ein erstes Reifen-Auflageteil (116a) einer Vielzahl von Reifen-Auflageteilen und einen Robotikarm (312) für die Bewegung des Rades (W) aufweist;
die Anordnung des Reifens (T) an einer Reifenprofil-Auflagefläche (322a') einer Reifenprofil-Einspannvorrichtung (320a), wobei die Reifenprofil-Einspannvorrichtung (320a) mit einer Oberseite (316') des ersten Reifen-Auflageteils (316a) verbunden ist;
die teilweise Anordnung des Rades (W) in einem Durchgang (T_{P}) des Reifens (T), so dass einer oder mehrere eines oberen Wulstrandes (T_{BU}) des Reifens (T) und eines unteren Wulstrandes (T_{BL}) des Reifens (T) nicht vollständig um einen Umfang (W_{C}) des Rades (W) angeordnet ist/sind;
die Bewegung des Rades (W) durch eine erste Öffnung (S2'), die von der Vorrichtung (300) gebildet wird;
die Nutzung der Bewegung des Rades (W), um eine entsprechende Bewegung des Rades (T) durch die erste Öffnung (S2') weiterzugeben, die von einer ersten Reifen-Seitenwand-Einspannvorrichtung (322b"') und einer zweiten Reifen-Seitenwand-Einspannvorrichtung (322c"') der Vorrichtung (300) gebildet wird, so dass eine Lauffläche (T_{T}) des Reifens (T) direkt sowohl in die erste Reifen-Seitenwand-Einspannvorrichtung (322b"') als auch die zweite Reifen-Seitenwand-Einspannvorrichtung (322c"') einrastet, wobei sowohl die erste Reifen-Seitenwand-Einspannvorrichtung (322b"') als auch die zweite Reifen-Seitenwand-Einspannvorrichtung (322c"') einen Rad-Kontaktteil (322b"", 322c"") einschließen, der eine zweite Öffnung (S1') mit einer Abmessung bildet, die geringer ist als die der ersten Öffnung (S2'), wobei die Bewegung des Rades (W) dazu führt, dass das Rad (W) durch die zweite Öffnung (S2') hindurchgeht, so dass ein Oberflächenteil (W_{RL}) des Rades (W) direkt in den Rad-Kontaktteil (322b"", 322c"") einrastet, der jeweils mit der ersten Reifen-Seitenwand-Einspannvorrichtung (322b"') oder der zweiten Reifen-Seitenwand-Einspannvorrichtung (322c"') verbunden ist, wobei dies, als Resultat der Nutzung des Bewegungsschritts, **gekennzeichnet ist durch** den Schritt
der Veranlassung, dass eine oder beide einer im Wesentlichen kreisförmigen, oberen Reifenöffnung (T_{OU}) und einer im Wesentlichen kreisförmigen, unteren Reifenöffnung (T_{OL}), die den Durchgang (T_{P}) des Reifens (T) bilden, so bearbeitet werden können, dass eine im Wesentlichen nicht-kreisförmige Form entsteht, damit sowohl der obere Wulstrand (T_{BU}) des Reifens (T) als auch der untere Wulstrand (T_{BL}) des Reifens (T) um den Umfang (W_{C}) des Rades (W) angeordnet werden können.

10. Das Verfahren gemäß Anspruch 9, wobei die Reifenprofil-Einspannvorrichtung (320a) darüberhinaus ein im Wesentlichen zylindrisches Gehäuse (322a') einschließt,
das von einer oder mehreren Halteklammern (322a") gehalten wird, wobei das im Wesentlichen zylindrische Gehäuse (322a') in einem Abstand über die Oberseite (316') des ersten Reifen-Auflageteils (316a) durch die eine oder die mehreren Halteklammern (322a") angehoben wird, wobei der Anordnungs-Schritt darüberhinaus die folgenden Schritte aufweist,
die Anordnung eines ersten Teils (T_{SL-1}) einer Seitenwand-Fläche (T_{SL}) des Reifens (T) an der Oberseite (316') des ersten Reifen-Auflageteils (316a),
die Anordnung eines zweiten Teils (T_{SL-2}) der Seitenwand-Fläche (T_{SL}) des Reifens (T) am ersten Teil des im Wesentlichen zylindrischen Gehäuses (322a'), und
die Anordnung eines dritten Teils (T_{SL-3)} der Seitenwand-Fläche (T_{SL}) des Reifens (T) am zweiten Teil des im Wesentlichen zylindrischen Gehäuses (322a').

11. Das Verfahren gemäß Anspruch 10, wobei der erste, zweite und dritte Teil (T_{SL-1}, T_{SL-2}, T_{SL-3}) des Reifens (T) im Verhältnis zum Reifen-Auflageteil (316) angeordnet sind,
um den Reifen (T) auf dem Reifen-Auflageteil (316) in einer winkelförmigen-Offset-Ausrichtung (θ₁) im Verhältnis zur Oberseite (316c') des ersten Reifen-Auflageteils (316a) anzuordnen.

12. Das Verfahren gemäß Anspruch 9, das darüberhinaus den Schritt der
Anordnung der ersten Reifen-Seitenwand-Einspannvorrichtung (320b) und der zweiten Reifen-Seitenwand-Einspannvorrichtung (320c) in einer nicht-festen Ausrichtung aufweist, um der ersten Öffnung (S2') eine variable Geometrie zu ermöglichen.

13. Das Verfahren gemäß Anspruch 9, wobei die erste Öffnung (S2') geringer ist als ein Durchmesser (T_{D}) des Reifens (T) und wobei die erste Öffnung (S2') ungefähr gleich ist aber geringer als ein Sehne (T_{C1}, T_{C3}) des Reifens (T) mit einer Geometrie, die sich von der des Durchmessers (T_{D}) des Reifens (T) unterscheidet.

14. Das Verfahren gemäß Anspruch 9, das, vor dem teilweisen Anordnungs-Schritt, darüberhinaus den Schritt der
abnehmbaren Verbindung des Rades (W) mit einem Endeffektor (314) eines beweglichen Robotikarms (312) aufweist, wobei der Schritt der Bewegung des Rades (W) durch Bewegungen eines oder mehrerer Robotikarme (312) und Effektoren (314) ausgeführt wird, wobei bei der Anordnung des oberen Wulstrandes (T_{BU}) des Reifens (T) und des unteren Wulstrandes (T_{BL)} des Reifens (T) um den Umfang (W_{C}) des Rades (W), der Reifen (T) indirekt mit dem Endeffektor (314) über das Rad (W) zusammengefügt wird.

15. Das Verfahren gemäß Anspruch 9, das, vor, während oder nach dem Bewegungs-Schritt, darüberhinaus den Schritt der
Aufstellung einer oder mehrerer einer dritten Reifen-Seitenwand-Einspannvorrichtung (320d), einer vierten Reifen-Seitenwand-Einspannvorrichtung (320e) und einer sechsten Reifen-Seitenwand-Einspannvorrichtung (320f) aufweist; und
die Anordnung einer oder mehrerer der dritten Reifen-Seitenwand-Einspannvorrichtung (320d), der vierten Reifen-Seitenwand-Einspannvorrichtung (320e) und der sechsten Reifen-Seitenwand-Einspannvorrichtung (320f) in direktem Kontakt mit der Wulstrand-Oberfläche (T_{T)} des Reifens (T) aufweist.

16. Das Verfahren gemäß Anspruch 15, wobei die Anordnung einer oder mehrerer der dritten Reifen-Seitenwand-Einspannvorrichtung (320d), der vierten Reifen-Seitenwand-Einspannvorrichtung (320e) und der sechsten Reifen-Seitenwand-Einspannvorrichtung (320f) in direktem Kontakt mit der Wulstrand-Oberfläche (T_{T}) des Reifens (T) zur
Nutzung einer oder mehrerer der dritten Reifen-Seitenwand-Einspannvorrichtung (320d), der vierten Reifen-Seitenwand-Einspannvorrichtung (320e) und der sechsten Reifen-Seitenwand-Einspannvorrichtung (320f) führt, um zum Verursachungs-Schritt beizutragen, indem
die Bewegung des Reifens (T), der sich aus dem Bewegungs-Schritt ergibt, zu verhindern.

17. Das Verfahren gemäß Anspruch 15, wobei die Anordnung einer oder mehrerer der dritten Reifen-Seitenwand-Einspannvorrichtung (320d), der vierten Reifen-Seitenwand-Einspannvorrichtung (320e) und der sechsten Reifen-Seitenwand-Einspannvorrichtung (320f) in direktem Kontakt mit der Wulstrand-Oberfläche (T_{T}) des Reifens (T) zur
Nutzung einer oder mehrerer der dritten Reifen-Seitenwand-Einspannvorrichtung (320d), der vierten Reifen-Seitenwand-Einspannvorrichtung (320e) und der sechsten Reifen-Seitenwand-Einspannvorrichtung (320f) führt, um zum Verursachungs-Schritt beizutragen, indem eine Leverage-Oberfläche für den Reifen (T) bereitgestellt wird, da der Reifen (T), als Reaktion
auf den Bewegungs-Schritt, bewegt wird.

## Revendications

1. Un appareil (300) de traitement d'un pneu (T) et d'une roue (W) destiné à la formation d'un ensemble pneu-roue (TW), comprenant :
un élément de support de pneu (316) comprenant un premier élément de support de pneu (316a), un deuxième élément de support de pneu (316b) et un troisième élément de support de pneu (316c), où chacun des premier, deuxième et troisième éléments de support de pneu (316a, 316b, 316c) comprend une surface supérieure (316') et une surface inférieure (316"), et
un bras robotique (312) destiné au déplacement de la roue (W),
**caractérisé en ce qu'**il comprend en outre une pluralité de dispositifs de mise en prise de pneu (320) comprenant : un premier dispositif de mise en prise de pneu (320a) raccordé à la surface supérieure (316') du premier élément de support de pneu (316a), un deuxième dispositif de mise en prise de pneu (320b) raccordé à la surface supérieure (316') du deuxième élément de support de pneu (316b) et un troisième dispositif de mise en prise de pneu (320c) raccordé à la surface supérieure (316') du troisième élément de support de pneu (316c), où le premier dispositif de mise en prise de pneu (320a) comprend un corps sensiblement cylindrique (322a') soutenu par un ou plusieurs étriers (322a"), où le deuxième dispositif de mise en prise de pneu (320b) comprend un premier montant de mise en prise de bande de roulement (322b'), où le troisième dispositif de mise en prise de pneu (320c) comprend un deuxième montant de mise en prise de bande de roulement (322c').

2. L'appareil (300) selon la Revendication 1, où chaque montant parmi le premier montant de mise en prise de bande de roulement (322b') et le deuxième montant de mise en prise de bande de roulement (322c') comprend
une surface inférieure (322b", 322c") possédant au moins un évidement femelle (326b, 326c) qui reçoit au moins un élément de guidage mâle (328b, 328c) s'étendant à partir de la surface supérieure (316') de chaque élément parmi les deuxième et troisième éléments de support de pneu (316b, 316c).

3. L'appareil (300) selon la Revendication 1, où chaque montant parmi le premier montant de mise en prise de bande de roulement (322b') et le deuxième montant de mise en prise de bande de roulement (322c') comprend
une surface de mise en prise de paroi latérale de pneu sensiblement conique supérieure (322b"', 322c"').

4. L'appareil (300) selon la Revendication 3, où chaque montant parmi le premier montant de mise en prise de bande de roulement (322b') et le deuxième montant de mise en prise de bande de roulement (322c') comprend
une partie de mise en prise de roue s'étendant latéralement (322b"", 322c""), où les parties de mise en prise de roue s'étendant latéralement (322b"", 322c"") sont agencées de façon à se faire face directement l'une l'autre dans une relation espacée opposée de sorte que les parties de mise en prise de roue s'étendant latéralement (322b"", 322c"") soient espacées d'une distance qui est inférieure à un diamètre (W_{D}) de la roue (W) de l'ensemble pneu-roue (TW).

5. L'appareil (300) selon la Revendication 1, où la pluralité de dispositifs de mise en prise de pneu (320) comprend
un quatrième dispositif de mise en prise de pneu (320d) raccordé à la surface supérieure (316') du deuxième élément de support de pneu (316b),
un cinquième dispositif de mise en prise de pneu (320e) raccordé à la surface supérieure (316') du troisième élément de support de pneu (316c).

6. L'appareil (300) selon la Revendication 5, où chaque dispositif parmi le quatrième dispositif de mise en prise de pneu (320d) et le cinquième dispositif de mise en prise de pneu (320e) comprend
un corps (322d', 322e') raccordé à la surface supérieure (316') de chacun des deuxième et troisième éléments de support de pneu (316b, 316c),
un élément de mise en prise de surface de bande de roulement (322d"', 322e"') couplé rotatif au corps (322d', 322e'), et
un réseau de montants de mise en prise de bande de roulement (330d, 330e) disposé sur l'élément de mise en prise de surface de bande de roulement (322d"', 322e"').

7. L'appareil (300) selon la Revendication 5, où l'élément de support de pneu (316) comprend en outre
un quatrième élément de support de pneu (316d), où le quatrième élément de support de pneu (31 d) comprend une surface supérieure (316'), où la pluralité de dispositifs de mise en prise de pneu (320) comprend en outre
un sixième dispositif de mise en prise de pneu (320f) raccordé à la surface supérieure (316') du quatrième élément de support de pneu (316).

8. L'appareil (300) selon la Revendication 7, où le sixième dispositif de mise en prise de pneu (320f) comprend
un corps (322f'),
un élément de mise en prise de surface de bande de roulement (322f"') comprenant un socle (322f"") qui est raccordé au corps (322f').

9. Un procédé de traitement d'un pneu (T) et d'une roue (W) destiné à la formation d'un ensemble pneu-roue (TW), comprenant les opérations suivantes :
la fourniture d'un appareil comprenant un élément de support de pneu (116) qui comprend au moins un premier élément de support de pneu (116a) d'une pluralité d'éléments de support de pneu et un bras robotique (312) destiné au déplacement de la roue (W),
l'agencement du pneu (T) adjacent à une surface de mise en prise de bande de roulement (322a') d'un dispositif de mise en prise de bande de roulement (320a), où le dispositif de mise en prise de bande de roulement (320a) est raccordé à une surface supérieure (316') du premier élément de support de pneu (316a),
l'agencement partiel de la roue (W) à l'intérieur d'un passage (T_{P}) du pneu (T) de sorte qu'un ou plusieurs éléments parmi un talon supérieur (T_{BU}) du pneu (T) et un talon inférieur (T_{BL}) du pneu (T) ne soient pas entièrement agencés autour d'une circonférence (W_{C}) de la roue (W),
le déplacement de la roue (W) au travers d'un premier espace (S2') formé par l'appareil (300),
l'utilisation du déplacement de la roue (W) de façon à impartir un déplacement correspondant au pneu (T) au travers du premier espace (S2') formé par un premier dispositif de mise en prise de paroi latérale de pneu (322b"') et un deuxième dispositif de mise en prise de paroi latérale de pneu (322c"') de l'appareil (300) de sorte qu'une surface de roulement (T_{T}) du pneu (T) entre directement en prise avec à la fois le premier dispositif de mise en prise de paroi latérale de pneu (322b"') et le deuxième dispositif de mise en prise de paroi latérale de pneu (322c"'), où chaque dispositif parmi le premier dispositif de mise en prise de paroi latérale de pneu (322b"') et le deuxième dispositif de mise en prise de paroi latérale de pneu (322c"') comprend une partie de contact avec la roue (322b"", 322c"") qui forme un deuxième espace (S1') possédant une dimension qui est inférieure au premier espace (S2'), où le déplacement de la roue (W) résulte en le passage de la roue (W) au travers du deuxième espace (S2') de sorte qu'une partie surface (Wᵣₗ) de la roue (W) entre directement en prise avec la partie de contact avec la roue (322b"", 322c"") raccordée respectivement au premier dispositif de mise en prise de paroi latérale de pneu (322b"') et au deuxième dispositif de mise en prise de paroi latérale de pneu (322c"'), où, en conséquence de l'utilisation de l'opération de déplacement, est **caractérisé par** l'opération suivante :
amener une ouverture ou les deux parmi une ouverture de pneu supérieure sensiblement circulaire (T_{OU}) et une ouverture de pneu inférieure sensiblement circulaire (T_{OL}) qui forment le passage (T_{P}) du pneu (T) à manipuler à avoir une forme sensiblement non circulaire de façon à permettre à la fois au talon supérieur (T_{BU}) du pneu (T) et au talon inférieur (T_{BL)} du pneu (T) d'être agencés autour de la circonférence (W_{C}) de la roue (W).

10. Le procédé selon la Revendication 9, où le dispositif de mise en prise de bande de roulement (320a) comprend en outre un corps sensiblement cylindrique (322a') soutenu par un ou plusieurs étriers (322a"), où le corps sensiblement cylindrique (322a') est élevé à une distance de la surface supérieure (316') du premier élément de support de pneu (316a) par les un ou plusieurs étriers (322a"), l'opération d'agencement comprenant en outre les opérations suivantes
l'agencement d'une première partie (T_{SL-1)} d'une surface de paroi latérale (T_{SL}) du pneu (T) adjacente à la surface supérieure (316') du premier élément de support de pneu (316a),
l'agencement d'une deuxième partie (T_{SL-2)} de la surface de paroi latérale (T_{SL}) du pneu (T) adjacente à une première partie du corps sensiblement cylindrique (322a'), et
l'agencement d'une troisième partie (T_{SL-3)} de la surface de paroi latérale (T_{SL}) du pneu (T) adjacente à une deuxième partie du corps sensiblement cylindrique (322a').

11. Le procédé selon la Revendication 10, où les première, deuxième et troisième parties (T_{SL-1}, T_{SL-2}, T_{SL-3}) du pneu (T) sont agencées par rapport à l'élément de support de pneu (316) de façon à disposer le pneu (T) sur l'élément de support de pneu (316) à une orientation décalée angulairement (θ₁) par rapport à la surface supérieure (316c') du premier élément de support de pneu (316a).

12. Le procédé selon la Revendication 9, comprenant en outre l'opération suivante :
l'agencement du premier dispositif de mise en prise de paroi latérale de pneu (320b) et du deuxième dispositif de mise en prise de paroi latérale de pneu (320c) dans une orientation non fixe de façon à rendre le premier espace (S2') de sorte qu'il présente une géométrie variable.

13. Le procédé selon la Revendication 9, où le premier espace (S2') est inférieur à un diamètre (T_{D}) du pneu (T), où le premier espace (S2') est approximativement égal à mais inférieur à une corde (T_{C1}, T_{C3}) du pneu (T) possédant une géométrie différente de celle du diamètre (T_{D}) du pneu (T).

14. Le procédé selon la Revendication 9, qui, avant l'opération d'agencement partiel, comprend en outre l'opération suivante :
le couplage de manière amovible de la roue (W) à un effecteur d'extrémité (314) d'un bras robotique mobile (312), où l'opération de déplacement de la roue (W) est conduite par des déplacements d'un ou de plusieurs éléments parmi le bras robotique (312) et l'effecteur (314), où, lors de l'agencement du talon supérieur (T_{BU}) du pneu (T) et du talon inférieur (T_{BL}) du pneu (T) autour de la circonférence (W_{C}) de la roue (W), le pneu (T) est raccordé indirectement à l'effecteur d'extrémité (314) au moyen de la roue (W).

15. Le procédé selon la Revendication 9, qui, avant, au cours de ou après l'opération de déplacement, comprend en outre les opérations suivantes :
le déploiement d'un ou de plusieurs dispositifs parmi un troisième dispositif de mise en prise de paroi latérale de pneu (320d), un quatrième dispositif de mise en prise de paroi latérale de pneu (320e) et un sixième dispositif de mise en prise de paroi latérale de pneu (320f), et
l'agencement d'un ou de plusieurs dispositifs parmi le troisième dispositif de mise en prise de paroi latérale de pneu (320d), le quatrième dispositif de mise en prise de paroi latérale de pneu (320e) et le sixième dispositif de mise en prise de paroi latérale de pneu (320f) en contact direct avec la surface de roulement (T_{T}) du pneu (T).

16. Le procédé selon la Revendication 15, où l'agencement d'un ou de plusieurs dispositifs parmi le troisième dispositif de mise en prise de paroi latérale de pneu (320d), le quatrième dispositif de mise en prise de paroi latérale de pneu (320e) et le sixième dispositif de mise en prise de paroi latérale de pneu (320f) en contact direct avec la surface de roulement (T_{T}) du pneu (T) résulte en
l'utilisation d'un ou de plusieurs dispositifs parmi le troisième dispositif de mise en prise de paroi latérale de pneu (320d), le quatrième dispositif de mise en prise de paroi latérale de pneu (320e) et le sixième dispositif de mise en prise de paroi latérale de pneu (320f) de façon à contribuer à l'opération d'amener par
l'empêchement du déplacement du pneu (T) provoqué par l'opération de déplacement.

17. Le procédé selon la Revendication 15, où l'agencement d'un ou de plusieurs dispositifs parmi le troisième dispositif de mise en prise de paroi latérale de pneu (320d), le quatrième dispositif de mise en prise de paroi latérale de pneu (320e) et le sixième dispositif de mise en prise de paroi latérale de pneu (320f) en contact direct avec la surface de roulement (T_{T}) du pneu (T) résulte en
l'utilisation d'un ou de plusieurs dispositifs parmi le troisième dispositif de mise en prise de paroi latérale de pneu (320d), le quatrième dispositif de mise en prise de paroi latérale de pneu (320e) et le sixième dispositif de mise en prise de paroi latérale de pneu (320f) de façon à contribuer à l'opération d'amener par
la fourniture d'une surface de levier pour le pneu (T) lorsque le pneu (T) est déplacé en réponse à l'opération de déplacement.
